# EUROPEAN PATENT APPLICATION

(11) **EP 4 745 768 A1**
(43) Date of publication of application: **20.05.2026**
(21) Application number: 24918125.6
(22) Date of filing: 11.10.2024
(51) Int. Cl.: G06F 9/451, G06F 3/0488

(54) **THEME EDITING METHOD AND ELECTRONIC DEVICE**

(30) Priority: 17.01.2024 CN 202410068512
(71) Applicant: Huawei Technologies Co., Ltd., Shenzhen, Guangdong 518129 (CN)
(72) Inventor: YANG, Xuefei, Shenzhen, Guangdong 518129 (CN); DING, Yaling, Shenzhen, Guangdong 518129 (CN); LI, Wenxin, Shenzhen, Guangdong 518129 (CN); CHEN, Yuhan, Shenzhen, Guangdong 518129 (CN); LI, Minhao, Shenzhen, Guangdong 518129 (CN); HUANG, Xin, Shenzhen, Guangdong 518129 (CN)
(74) Representative: Gill Jennings & Every LLP
(86) International application number: PCT/CN2024/124055
(87) International publication number: WO 2025/152516

(57) **Abstract**

Embodiments of this application provide a theme editing method and an electronic device. The method includes: displaying a first interface on a display of a first electronic device in response to a first operation performed by a user on the first electronic device, where the first interface is a theme selection interface; and displaying a second interface on the display of the first electronic device in response to an operation that the user selects a first theme in the first interface, where the second interface is a preview interface of a plurality of theme interfaces of the first theme, each of the plurality of theme interfaces is associated with one or more editable options, and the editable option is used to edit a theme interface associated with the editable option. According to the method and the electronic device, an overall matching effect of a theme can be previewed before the theme is applied. In addition, via a preview interface, editing can be performed a plurality of times and an overall matching effect achieved through editing can be previewed, so that the user can more intuitively and simply view a theme element matching result in a theme editing process.

## Description

This application claims priority to Chinese Patent Application No. 202410068512.5, filed with the China National Intellectual Property Administration on January 17, 2024 and entitled "THEME EDITING METHOD AND ELECTRONIC DEVICE", which is incorporated herein by reference in its entirety.

### TECHNICAL FIELD

Embodiments of this application relate to the terminal display field, and more specifically, to a theme editing method and an electronic device.

### BACKGROUND

With users' increasing personalized requirements on electronic devices, a personalized theme function of an electronic device is one of important experiences of a user in using the electronic device. Currently, for themes on the electronic device, a theme set can be applied and take effect only as a whole, and customization of a single element can only be modified separately. In other words, in a current theme editing method, the user can view an overall matching effect of a theme only after the theme is set and applied. If the user is not satisfied with the matching effect, the user needs to open a setting interface again for resetting. Operations in this process are complex, and it is difficult to quickly achieve an expected matching effect, affecting user experience.

### SUMMARY

This application provides a theme editing method and an electronic device. According to the method and the electronic device, an overall matching effect of a theme can be previewed before the theme is applied. In addition, via a preview interface, editing can be performed a plurality of times and an overall matching effect achieved through editing can be previewed, and an overall preview of an editing effect can be implemented in a theme editing process, so that a user can more intuitively and simply view a theme element matching result in the theme editing process, thereby assisting the user in selecting a single theme element for editing. In addition, operations of the method are simple and easy to understand.

According to a first aspect, a theme editing method is provided. The method includes: displaying a first interface on a display of a first electronic device in response to a first operation performed by a user on the first electronic device, where the first interface is a theme selection interface; and displaying a second interface on the display of the first electronic device in response to an operation that the user selects a first theme in the first interface, where the second interface is a preview interface of a plurality of theme interfaces of the first theme, each of the plurality of theme interfaces is associated with one or more editable options, and the editable option is used to edit a theme interface associated with the editable option.

In an example, any one of the plurality of theme interfaces of the first theme is denoted as a theme interface 1, an editable option 1 in one or more editable options associated with the theme interface 1 is used to edit an element 1 in the theme interface 1, and an editable option 2 in the one or more editable options associated with the theme interface 1 is used to edit an element 2 in the theme interface 1.

In some embodiments, the first operation may include any one of the following operations: a double-finger pinch operation performed on a lock screen interface or a home screen of the first electronic device; a touch and hold operation performed on the lock screen interface or the home screen of the first electronic device; and a double-tap operation performed on the lock screen interface or the home screen of the first electronic device. Alternatively, the first operation may be another operation, for example, an operation preset by the user, an operation that the user makes a specified voice, or an operation performed by the user on the first interface by using a setting entry of the first electronic device. This is not limited in this application.

It may be understood that the user may preview, in the second interface, a matching effect of the plurality of interfaces of the first theme, may edit or adjust an element in any interface of the first theme by using an editable option associated with the interface, and may further preview a matching effect achieved through editing or adjustment. After the user is satisfied with the preview effect, theme editing ends, and the edited theme is applied to the electronic device.

The second interface may also be described as an integrated editor interface of the first electronic device. Specifically, it may be understood that the second interface is an interface for editing and previewing the plurality of interfaces of the first theme in an integrated manner.

In some embodiments, the first theme may be, for example, a theme generated based on a photo in a gallery of the first electronic device, or may be a theme generated based on an online picture, or may be a theme built in a system of the first electronic device, or may be a theme historically stored by the user, or may be a weather theme, or may be an emoji theme, or may be a theme of another type. This is not limited in this application.

It should be understood that the first interface is a theme selection interface. The first interface may be, for example, an interface that is entered by the first electronic device in response to a gesture operation of the user, or may be an interface that is entered by using a setting entry of the first electronic device. The first interface may be any interface that can provide a theme selection function, for example, may provide a plurality of themes that can be selected, or may provide an entry for theme selection. A layout and an included element of the first interface are not limited in embodiments of this application.

The plurality of theme interfaces mean at least two theme interfaces.

In embodiments of this application, an overall matching effect of a theme can be previewed before the theme is applied. In addition, via a preview interface, editing can be performed a plurality of times and an overall matching effect achieved through editing can be previewed, and an overall preview of an editing effect can be implemented in a theme editing process, so that the user can more intuitively and simply view a theme element matching result in the theme editing process, thereby assisting the user in selecting a single theme element for editing. In addition, operations of the method are simple and easy to understand.

With reference to the first aspect, in a possible implementation, the method further includes: displaying a first editing page of a first theme interface on the display of the first electronic device in response to an operation performed by the user on a first editable option associated with the first theme interface, where the first editing page is an editing page corresponding to the first editable option, and the plurality of theme interfaces include the first theme interface; and displaying an updated second interface on the display of the first electronic device in response to an operation that the user ends editing on the first editing page.

The updated second interface may be understood as a second interface obtained through the foregoing editing. The edited second interface means that the first theme interface in the second interface is the edited second interface, and the user can preview, in real time by using the second interface, editing or adjustment on the plurality of theme interfaces of the first theme.

In some embodiments, the operation performed by the user on the first editable option associated with the first theme interface may be, for example, an operation that the user taps the first editable option associated with the first theme interface.

In some embodiments, the first theme interface is associated with a plurality of editable options, and the plurality of editable options are respectively used to edit different elements in the first theme interface. For example, when the first theme interface is the lock screen interface, the editable options associated with the first theme interface may include an editable option used to edit a lock screen wallpaper, an editable option used to edit a clock pattern, and the like.

In embodiments of this application, when the user wants to modify an interface of a same theme, the user may enter an editing page of a theme element in the interface by using an editable option associated with the interface. After editing is completed, a display interface of the electronic device returns to a multi-interface preview page, that is, returns to an interface in which a plurality of interfaces of the same theme are simultaneously displayed. The user can preview, in the interface, a matching effect of the modified interface in the overall theme. After the user is satisfied with the matching effect, theme editing is ended in a unified manner, and then a modified theme is applied to the electronic device. In this way, "one-step" theme setting can be implemented, and the user does not need to perceive a matching effect by using an actual application effect, thereby avoiding that the user achieves a target matching effect by repeatedly performing setting operations a plurality of times.

With reference to the first aspect, in a possible implementation, a second editing page of a second theme interface is displayed on the display of the first electronic device in response to an operation performed by the user on a second editable option associated with the second theme interface, where the second editing page is an editing page corresponding to the second editable option, and the plurality of theme interfaces include the second theme interface; and an edited second interface is displayed on the display of the first electronic device in response to an operation that the user ends editing on the second editing page.

It should be understood that the second interface displayed on the display of the first electronic device may mean that all theme interfaces in the second interface are simultaneously displayed on the display of the first electronic device, or may mean that some theme interfaces in all theme interfaces in the second interface are simultaneously displayed on the display of the first electronic device, and the user may preview all the theme interfaces in the second interface by sliding left or right.

In an example, if the second theme interface is displayed on the display currently, the second editable option associated with the second theme interface may be directly tapped. If the second theme interface is not displayed on the display currently, the user may slide left or right, so that the second theme interface is displayed on the display currently, and then the second editable option associated with the second theme interface is further tapped.

In embodiments of this application, after editing a theme interface in a plurality of theme interfaces of a same theme, the user may return to a preview interface to preview a latest edited second interface. Based on this, the user may continue to edit another theme interface in the plurality of theme interfaces, and then return to the preview interface to preview a latest edited second interface. In this way, the user can edit a plurality of interface elements in the plurality of theme interfaces and preview an overall effect achieved through editing. When the overall effect is satisfactory to the user, the user applies the updated theme to the electronic device. In this way, "one-step" theme setting can be implemented, and the user does not need to perceive a matching effect by using an actual application effect, thereby avoiding that the user achieves a target matching effect by repeatedly performing setting operations a plurality of times.

With reference to the first aspect, in a possible implementation, the second interface includes a complete control, and the method further includes: applying an updated first theme to the first electronic device in response to an operation that the user taps the complete control, where a plurality of theme interfaces of the updated first theme are in one-to-one correspondence with a plurality of theme interfaces displayed in the updated second interface.

In embodiments of this application, the user can preview, in the interface, a matching effect of the modified interface in the overall theme. After the user is satisfied with the matching effect, theme editing is ended in a unified manner, and then a modified theme is applied to the electronic device. In this way, "one-step" theme setting can be implemented, and the user does not need to perceive a matching effect by using an actual application effect, thereby avoiding that the user achieves a target matching effect by repeatedly performing setting operations a plurality of times.

With reference to the first aspect, in a possible implementation, the preview interface of the plurality of theme interfaces includes a preview interface of an always on display interface of the first electronic device, a preview interface of a lock screen interface of the first electronic device, and a preview interface of a home screen of the first electronic device.

With reference to the first aspect, in a possible implementation, the always on display interface is associated with a third editable option, the third editable option is used by the user to edit an always on display style of the first electronic device, the lock screen interface is associated with a fourth editable option, the fourth editable option is used by the user to edit a lock screen wallpaper of the first electronic device, the home screen is associated with a fifth editable option and a sixth editable option, the fifth editable option is used by the user to edit a home screen wallpaper of the first electronic device, and the sixth editable option is used by the user to edit an icon on the first electronic device.

In embodiments of this application, a specific example of theme editing is provided. When editing a wallpaper theme of the electronic device, the user can simultaneously preview a plurality of theme interfaces of the wallpaper theme in an editing process, so that an overall matching effect of the plurality of theme interfaces can be previewed, and the theme interfaces can be further edited or adjusted in a preview interface. In this way, "one-step" wallpaper theme setting can be implemented, and the user does not need to perceive a matching effect by using an actual application effect, thereby avoiding that the user achieves a target matching effect of the wallpaper theme by repeatedly performing setting operations a plurality of times.

With reference to the first aspect, in a possible implementation, always on display of the first electronic device corresponds to a first always on display pattern, and the method further includes: displaying an always on display pattern selection interface on the display of the first electronic device in response to an operation performed by the user on the third editable option; and displaying an updated second interface on the display of the first electronic device in response to an operation that the user selects a second always on display pattern in the always on display pattern selection interface, where in the updated second interface, the always on display of the first electronic device corresponds to the second always on display pattern.

In some embodiments, the operation performed by the user on the third editable option may be, for example, an operation that the user taps the third editable option.

In embodiments of this application, when the user wants to modify an always on display pattern of an always on display interface of a wallpaper theme of the electronic device, the user may enter an always on display pattern editing page by using an editable option that is associated with the always on display interface and that is used to edit the always on display pattern. After editing is completed, a display interface of the electronic device returns to a multi-interface preview page, that is, returns to an interface in which a plurality of interfaces of the wallpaper theme are simultaneously displayed. The user can preview, in the interface, a matching effect of the modified always on display interface in the overall theme. After the user is satisfied with the matching effect, wallpaper theme editing is ended in a unified manner, and then a modified wallpaper theme is applied to the electronic device. In this way, "one-step" wallpaper theme setting can be implemented, and the user does not need to perceive a matching effect by using an actual application effect, thereby avoiding that the user achieves a target matching effect by repeatedly performing setting operations a plurality of times.

With reference to the first aspect, in a possible implementation, the lock screen wallpaper of the first electronic device is a first wallpaper, and the method further includes: displaying a wallpaper selection interface on the display of the first electronic device in response to an operation performed by the user on the fourth editable option; and displaying an updated second interface on the display of the first electronic device in response to an operation that the user selects a second wallpaper in the wallpaper selection interface, where in the updated second interface, the lock screen wallpaper of the first electronic device is the second wallpaper.

In some embodiments, the operation performed by the user on the fourth editable option may be, for example, an operation that the user taps the fourth editable option.

In embodiments of this application, when the user wants to modify a lock screen wallpaper of a lock screen interface of a wallpaper theme of the electronic device, the user may enter a lock screen wallpaper editing page by using an editable option that is associated with the lock screen interface and that is used to edit the lock screen wallpaper. After editing is completed, a display interface of the electronic device returns to a multi-interface preview page, that is, returns to an interface in which a plurality of interfaces of the wallpaper theme are simultaneously displayed. The user can preview, in the interface, a matching effect of the modified lock screen interface in the overall theme. After the user is satisfied with the matching effect, wallpaper theme editing is ended in a unified manner, and then a modified wallpaper theme is applied to the electronic device. In this way, "one-step" wallpaper theme setting can be implemented, and the user does not need to perceive a matching effect by using an actual application effect, thereby avoiding that the user achieves a target matching effect by repeatedly performing setting operations a plurality of times.

With reference to the first aspect, in a possible implementation, in the updated second interface, the home screen wallpaper of the first electronic device is synchronized to the second wallpaper, and the always on display of the first electronic device is synchronized to the second wallpaper.

In embodiments of this application the wallpaper is one of general elements throughout the theme. After the user edits or adjusts a lock screen wallpaper of a lock screen interface of a wallpaper theme, a home screen wallpaper of the wallpaper theme may keep changing synchronously with the lock screen wallpaper, and an always on display effect displayed along with a lock screen may also change accordingly. After the user edits the lock screen wallpaper and returns to a preview interface, an overall effect achieved after the lock screen interface, the home screen, and the always on display interface synchronously change can be previewed in the preview interface.

With reference to the first aspect, in a possible implementation, the method further includes: editing, by performing an operation of tapping a clock display area of the lock screen interface in the second interface, a clock displayed in the lock screen interface of the first electronic device.

In embodiments of this application, when the user wants to modify a clock pattern of a lock screen interface of a wallpaper theme of the electronic device, the user may enter a clock pattern editing page by using an editable option that is associated with the lock screen interface and that is used to edit the clock pattern. After editing is completed, a display interface of the electronic device returns to a multi-interface preview page, that is, returns to an interface in which a plurality of interfaces of the wallpaper theme are simultaneously displayed. The user can preview, in the interface, a matching effect of the modified lock screen interface in the overall theme. After the user is satisfied with the matching effect, wallpaper theme editing is ended in a unified manner, and then a modified wallpaper theme is applied to the electronic device. In this way, "one-step" wallpaper theme setting can be implemented, and the user does not need to perceive a matching effect by using an actual application effect, thereby avoiding that the user achieves a target matching effect by repeatedly performing setting operations a plurality of times.

With reference to the first aspect, in a possible implementation, the home screen wallpaper of the first electronic device is the second wallpaper, and the method further includes: displaying a wallpaper selection interface on the display of the first electronic device in response to an operation performed by the user on the fifth editable option; and displaying an updated second interface on the display of the first electronic device in response to an operation that the user selects a third wallpaper in the wallpaper selection interface, where in the updated second interface, the home screen wallpaper of the first electronic device is the third wallpaper.

In some embodiments, the operation performed by the user on the fifth editable option may be, for example, an operation that the user taps the fifth editable option.

In embodiments of this application, when the user wants to change a home screen wallpaper of a wallpaper theme of the electronic device, the user may enter a home screen wallpaper editing page by using an editable option that is associated with the home screen and that is used to edit the wallpaper. After editing is completed, a display interface of the electronic device returns to a multi-interface preview page, that is, returns to an interface in which a plurality of interfaces of the wallpaper theme are simultaneously displayed. The user can preview, in the interface, a matching effect of the modified home screen wallpaper in the overall theme. After the user is satisfied with the matching effect, wallpaper theme editing is ended in a unified manner, and then a modified wallpaper theme is applied to the electronic device. In this way, "one-step" wallpaper theme setting can be implemented, and the user does not need to perceive a matching effect by using an actual application effect, thereby avoiding that the user achieves a target matching effect by repeatedly performing setting operations a plurality of times.

With reference to the first aspect, in a possible implementation, in the updated second interface, the lock screen wallpaper of the first electronic device is synchronized to the third wallpaper, and the always on display of the first electronic device is synchronized to the third wallpaper.

In embodiments of this application the wallpaper is one of general elements throughout the theme. After the user edits or adjusts a home screen wallpaper of a wallpaper theme, a lock screen wallpaper of the wallpaper theme may keep changing synchronously with the home screen wallpaper, and an always on display effect displayed along with a lock screen may also change accordingly. After the user edits the home screen wallpaper and returns to a preview interface, an overall effect achieved after the lock screen interface, the home screen, and the always on display interface synchronously change can be previewed in the preview interface.

With reference to the first aspect, in a possible implementation, the method further includes: displaying an icon setting interface on the display of the first electronic device in response to an operation performed by the user on the sixth editable option; and displaying an updated second interface on the display of the first electronic device in response to an operation that the user performs first icon setting in the icon setting interface, where in the updated second interface, the icon on the first electronic device is an icon obtained through the first icon setting.

In some embodiments, the operation performed by the user on the sixth editable option may be, for example, an operation that the user taps the sixth editable option.

In embodiments of this application, when the user wants to modify an icon on a home screen of a wallpaper theme of the electronic device, the user may enter an icon editing page by using an editable option that is associated with the home screen and that is used to edit the icon. After editing is completed, a display interface of the electronic device returns to a multi-interface preview page, that is, returns to an interface in which a plurality of interfaces of the wallpaper theme are simultaneously displayed. The user can preview, in the interface, a matching effect of the modified icon in the overall theme. After the user is satisfied with the matching effect, wallpaper theme editing is ended in a unified manner, and then a modified wallpaper theme is applied to the electronic device. In this way, "one-step" wallpaper theme setting can be implemented, and the user does not need to perceive a matching effect by using an actual application effect, thereby avoiding that the user achieves a target matching effect by repeatedly performing setting operations a plurality of times.

With reference to the first aspect, in a possible implementation, the theme selection interface includes one or more recommended themes, and the one or more recommended themes are in one-to-one correspondence with one or more photos in a gallery of the first electronic device.

In some embodiments, the electronic device selects a photo from the gallery by using a smart aesthetic function of the electronic device, and generates a corresponding theme.

In embodiments of this application, the electronic device can select, based on photos in the gallery, a photo suitable for being used as a wallpaper, and generate a corresponding theme recommended to the user. The user may directly preview and apply the theme, or directly perform preview->edit->preview->apply based on the theme, thereby improving convenience of setting a wallpaper theme by the user, and improving user experience.

With reference to the first aspect, in a possible implementation, when a first video is used as a wallpaper on the first electronic device, the always on display interface is associated with a third editable option, the third editable option is used by the user to edit an always on display style of the first electronic device, the lock screen interface is associated with a fourth editable option and a fifth editable option, the fourth editable option is used by the user to edit the first video, the fifth editable option is used by the user to add music to the first video, the home screen is associated with a sixth editable option and a seventh editable option, the sixth editable option is used by the user to select, from the first video, an image frame as a home screen wallpaper, and the seventh editable option is used by the user to edit an icon on the first electronic device.

In embodiments of this application, when a wallpaper theme is a video theme, compared with those of a wallpaper theme of another type, quantities and types of editable options corresponding to a plurality of interfaces of the video theme may be different. In other words, a theme interface corresponding to a theme corresponds to a theme category, an editable option associated with the theme interface corresponds to an editable element in the theme interface, and types and quantities of theme interfaces corresponding to different themes may be different. Types and a quantity of editable options associated with each theme interface may also be different. Embodiments of this application are widely applicable.

With reference to the first aspect, in a possible implementation, when an emoji is used as a wallpaper on the first electronic device, the always on display interface is associated with a third editable option, the third editable option is used by the user to edit an always on display style of the first electronic device, the lock screen interface is associated with a fourth editable option, the fourth editable option is used by the user to select an emoji, the home screen is associated with a fifth editable option, and the fifth editable option is used by the user to edit an icon on the first electronic device.

In embodiments of this application, when a wallpaper theme is an emoji theme, compared with those of a wallpaper theme of another type, quantities and types of editable options corresponding to a plurality of interfaces of the emoji theme may be different. In other words, a theme interface corresponding to a theme corresponds to a theme category, an editable option associated with the theme interface corresponds to an editable element in the theme interface, and types and quantities of theme interfaces corresponding to different themes may be different. Types and a quantity of editable options associated with each theme interface may also be different. Embodiments of this application are widely applicable.

With reference to the first aspect, in a possible implementation, the theme selection interface includes one or more online picture themes, and when an online picture theme is used on the first electronic device, the always on display interface is associated with a third editable option, the third editable option is used by the user to edit an always on display style of the first electronic device, the lock screen interface is associated with a fourth editable option, the fourth editable option is used by the user to set a display pattern of a lock screen wallpaper, the home screen is associated with a fifth editable option and a sixth editable option, the fifth editable option is used by the user to set a display pattern of a home screen wallpaper, and the sixth editable option is used by the user to edit an icon on the first electronic device.

In embodiments of this application, when a wallpaper theme is an online picture theme, compared with those of a wallpaper theme of another type, quantities and types of editable options corresponding to a plurality of interfaces of the online picture theme may be different. In other words, a theme interface corresponding to a theme corresponds to a theme category, an editable option associated with the theme interface corresponds to an editable element in the theme interface, and types and quantities of theme interfaces corresponding to different themes may be different. Types and a quantity of editable options associated with each theme interface may also be different. Embodiments of this application are widely applicable.

With reference to the first aspect, in a possible implementation, the preview interface of the plurality of theme interfaces further includes an external screen display interface of the first electronic device, and the external screen display interface is associated with an editable option used to edit an external screen style.

In some embodiments, the first electronic device is a foldable device.

In embodiments of this application, when the electronic device has an external screen, compared with that of an electronic device having no external screen, a plurality of interfaces of a theme include an external screen display interface. In other words, in addition to a theme category, types and a quantity of theme interfaces corresponding to the theme may further correspond to a category of the electronic device. Therefore, embodiments of this application can be applied to a plurality of types of electronic devices, and an application scope is wide.

With reference to the first aspect, in a possible implementation, the first electronic device is a watch, the preview interface of the plurality of theme interfaces includes an always on display interface of the first electronic device and a lock screen interface of the first electronic device, the always on display interface is associated with a third editable option, the third editable option is used by the user to edit an always on display style of the first electronic device, the lock screen interface is associated with a fourth editable option, and the fourth editable option is used by the user to set a watch face pattern of the first electronic device.

In embodiments of this application, when the electronic device is a watch, compared with that of an electronic device of another category, a quantity of a plurality of interfaces of a theme and an associated editable option may be different. In other words, in addition to a theme category, types and a quantity of theme interfaces corresponding to the theme may further correspond to a category of the electronic device. Therefore, embodiments of this application can be applied to a plurality of types of electronic devices, and an application scope is wide.

With reference to the first aspect, in a possible implementation, the first electronic device is a head unit device, the preview interface of the plurality of theme interfaces includes a preview interface of an always on display interface of the first electronic device, a preview interface of a home screen of the first electronic device, and a preview interface of an ambient light of the first electronic device, the always on display interface is associated with a third editable option, the third editable option is used by the user to edit an always on display style of the first electronic device, the home screen is associated with a fourth editable option and a fifth editable option, the fourth editable option is used by the user to edit a home screen wallpaper of the first electronic device, the fifth editable option is used by the user to edit an icon on the first electronic device, the ambient light is associated with a sixth editable option, and the sixth editable option is used by the user to set a display effect of the ambient light.

In embodiments of this application, when the electronic device is a head unit device, compared with that of an electronic device of another category, a quantity of a plurality of interfaces of a theme and an associated editable option may be different. In other words, in addition to a theme category, types and a quantity of theme interfaces corresponding to the theme may further correspond to a category of the electronic device. Therefore, embodiments of this application can be applied to a plurality of types of electronic devices, and an application scope is wide.

With reference to the first aspect, in a possible implementation, the method further includes: displaying a second pop-up window on the display of the first electronic device in response to an operation that the user ends preview in the second interface, where the second pop-up window is used to remind the user whether to synchronize a current theme to a second electronic device, and the second electronic device is interconnected with the first electronic device; and synchronizing the current theme to the second electronic device in response to an operation that the user confirms synchronization of the current theme to the second electronic device, so that a second interface corresponding to the second electronic device is displayed on a screen of the second electronic device.

The operation that the user ends preview in the second interface may be, for example, an operation that the user taps a complete control in the second interface. The second interface includes the complete control.

In some embodiments, after the user performs the operation of ending preview in the second interface, an updated first theme is applied to the first electronic device.

In an example, the first electronic device is a mobile phone, and the second electronic device is a watch.

In another example, the first electronic device is a mobile phone, and the second electronic device is a tablet.

In some embodiments, the first electronic device and the second electronic device are interconnected through Bluetooth.

In embodiments of this application, after the electronic device completes editing the theme, the user may simultaneously apply the edited theme to a plurality of electronic devices, that is, the same theme can be shared on the plurality of electronic devices. In addition, an interface and an editable option that correspond to the shared theme are appropriately adjusted based on a type of an electronic device to which the theme is applied. In addition, the user may further edit and preview the theme based on the shared theme, to implement transfer and re-editing of the same theme between the plurality of electronic devices.

According to a second aspect, an electronic device is provided. The electronic device includes a memory and a processor, the memory is configured to store computer program code, and the processor is configured to execute the computer program code stored in the memory, to implement the method according to any one of the first aspect or the possible implementations of the first aspect.

According to a third aspect, a computer-readable storage medium is provided. The computer-readable storage medium stores a computer program or instructions. When the computer program or the instructions are executed, the method according to any one of the first aspect or the possible implementations of the first aspect is implemented.

According to a fourth aspect, a chip is provided. The chip stores instructions, and when the instructions are run on a device, the chip is enabled to perform the method according to any one of the first aspect or the possible implementations of the first aspect.

According to a fifth aspect, a computer program product is provided. The computer program product stores a computer program or instructions, and when the computer program or the instructions are executed, the method according to any one of the first aspect or the possible implementations of the first aspect is implemented.

### BRIEF DESCRIPTION OF DRAWINGS

FIG. 1 is a diagram of a structure of an electronic device according to an embodiment of this application;
FIG. 2 is a block diagram of a software structure of an electronic device according to an embodiment of this application;
FIG. 3(a) to FIG. 3(c) are a diagram of an interface corresponding to three customized theme elements;
FIG. 4(a) to FIG. 4(e) are a diagram of an interface corresponding to another customized theme element;
FIG. 5 is a diagram of a structure of a page on which a plurality of interfaces are edited in an integrated manner according to an embodiment of this application;
FIG. 6(a) to FIG. 6(c) are a diagram of an operation procedure for triggering switching from a display interface of an electronic device to an integrated editor interface according to an embodiment of this application;
FIG. 7(a) to FIG. 7(c) are a diagram of an integrated editor interface of an electronic device according to an embodiment of this application;
FIG. 8(a) to FIG. 8(e) are a diagram of an interface for editing a wallpaper by using an integrated editor according to an embodiment of this application;
FIG. 9(a) to FIG. 9(f) are a diagram of an interface for editing a clock pattern by using an integrated editor according to an embodiment of this application;
FIG. 10(a) to FIG. 10(c) are a diagram of an interface for setting a shortcut by using an integrated editor according to an embodiment of this application;
FIG. 11(a) to FIG. 11(e) are a diagram of an interface for setting a card by using an integrated editor according to an embodiment of this application;
FIG. 12(a) to FIG. 12(c) are a diagram of an interface for editing an always on display pattern by using an integrated editor according to an embodiment of this application;
FIG. 13(a) to FIG. 13(c) are a diagram of an interface for editing an icon by using an integrated editor according to an embodiment of this application;
FIG. 14(a) to FIG. 14(d) are a diagram of another operation procedure for triggering switching from a display interface of an electronic device to an interface corresponding to an integrated editor according to an embodiment of this application;
FIG. 15(a) to FIG. 15(e) are a diagram of another interface for editing a wallpaper by using an integrated editor according to an embodiment of this application;
FIG. 16 is a diagram of a structure of another integrated editor page according to an embodiment of this application;
FIG. 17 is a diagram of a structure of another integrated editor page according to an embodiment of this application;
FIG. 18(a) and FIG. 18(b) are a diagram of a structure of another integrated editor page according to an embodiment of this application;
FIG. 19 is a diagram of a structure of another integrated editor page according to an embodiment of this application;
FIG. 20 is a diagram of a structure of another integrated editor page according to an embodiment of this application;
FIG. 21 is a diagram of a structure of another integrated editor page according to an embodiment of this application;
FIG. 22(a) to FIG. 22(c) are a diagram of an interface for sharing a theme between devices according to an embodiment of this application;
FIG. 23(a) to FIG. 23(c) are a diagram of another interface for sharing a theme between devices according to an embodiment of this application;
FIG. 24 is a schematic flowchart of a theme editing method according to an embodiment of this application; and
FIG. 25 is a diagram of functional modules of a theme editing apparatus according to an embodiment of this application.

### DESCRIPTION OF EMBODIMENTS

The following describes technical solutions of this application with reference to accompanying drawings. It is clear that the described embodiments are merely some but not all of embodiments of this application.

The following describes technical solutions in embodiments of this application with reference to the accompanying drawings in embodiments of this application. In the descriptions of embodiments of this application, "/" means "or", unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the description in embodiments of this application, "a plurality of' means two or more than two.

The following terms "first" and "second" are merely used for description, but should not be understood as indicating or implying relative importance or implying a quantity of indicated technical features. Therefore, a feature limited by "first" or "second" may explicitly or implicitly include one or more features. In descriptions of the embodiments, unless otherwise stated, "a plurality of' means two or more.

The terms used in the following embodiments are merely used for describing specific embodiments, and are not intended to limit this application. The singular forms "one", "a", "the", "the foregoing", "this", and "the one" used in this specification and the appended claims of this application are also intended to include forms such as "one or more", unless otherwise clearly specified in the context. It should be further understood that, in the following embodiments of this application, "at least one" and "one or more" mean one, two, or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects.

Reference to "an embodiment", "some embodiments", or the like described in this specification means that specific features, structures, or characteristics described with reference to the embodiment are included in one or more embodiments of this application. Therefore, the statements "an embodiment", "some embodiments", "another embodiment", "some other embodiments", and the like that appear in different places in this specification do not necessarily mean referring to a same embodiment. Instead, the statements mean "one or more but not all of embodiments", unless otherwise specifically emphasized in another manner. The terms "include", "contain", "have", and variations thereof all mean "including but not limited to", unless otherwise specifically emphasized in another manner.

A method provided in embodiments of this application may be applied to an electronic device such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the electronic device is not limited in embodiments of this application.

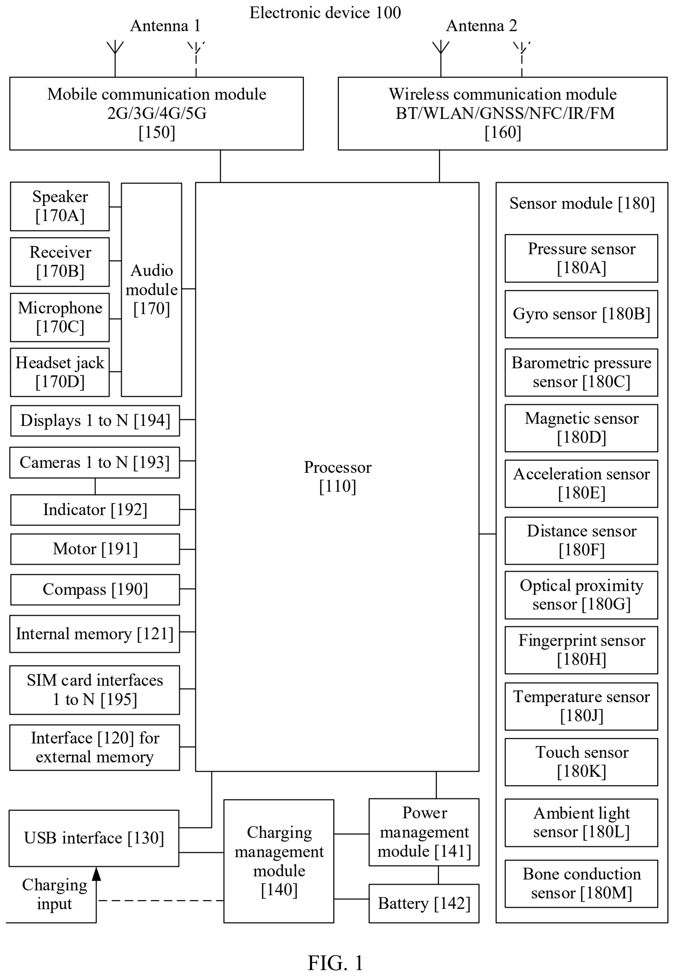

For example, FIG. 1 is a diagram of a structure of an electronic device 100. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, to store instructions and data. In some embodiments, the memory in the processor 110 is a cache. The memory may store instructions or data just used or cyclically used by the processor 110. If the processor 110 needs to use the instructions or data again, the instructions or data may be directly invoked from the memory. This avoids repeated access, and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface conforming to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset to play audio by using the headset. The interface may alternatively be configured to connect to another electronic device, such as an AR device.

It may be understood that the interface connection relationship between the modules shown in this embodiment of this application is merely an example, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive charging input from a charger. The charger may be a wireless charger, or may be a wired charger. In some wired charging embodiments, the charging management module 140 may receive charging input from a wired charger through the USB interface 130. In some wireless charging embodiments, the charging management module 140 may receive wireless charging input through a wireless charging coil of the electronic device 100. When charging the battery 142, the charging management module 140 may further supply power to the electronic device through the power management module 141.

The power management module 141 is configured to connect the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle count, and a battery health status (leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be reused to improve antenna utilization. For example, the antenna 1 may be reused as a diversity antenna of a wireless local area network. In some other embodiments, the antenna may be used in combination with a tuning switch.

The mobile communication module 150 may provide a solution for wireless communication, including 2G/3G/4G/5G and the like, that is applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to adjust a to-be-sent low-frequency baseband signal to a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110 and disposed in a same device as the mobile communication module 150 or another functional module.

The wireless communication module 160 may provide a solution for wireless communication that is applied to the electronic device 100 and that includes a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the to-be-sent signal, and convert the to-be-sent signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to perform mathematical and geometric calculation and render graphics. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, luminance, and complexion of the image. The ISP may further optimize parameters such as exposure and a color temperature of a photographing scenario. In some embodiments, the ISP may be disposed in the camera 193.

The camera 193 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for conversion into a digital image signal. The ISP outputs the digital image signal to the DSP for processing. The DSP converts the digital image signal into a standard image signal in a format such as RGB or YUV. In some embodiments, the electronic device 100 may include one or N cameras 193, where N is a positive integer greater than 1.

The digital signal processor is configured to process a digital signal. In addition to processing a digital image signal, the digital signal processor may further process another digital signal. For example, when the electronic device 100 selects a frequency, the digital signal processor is configured to perform Fourier transform or the like on frequency energy.

The video codec is configured to compress or decompress a digital video. The electronic device 100 may support one or more types of video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor that processes input information rapidly by referring to a structure of a biological neural network, for example, by referring to a transmission mode between human brain neurons, and can further perform self-learning continuously. The NPU may be used to implement applications such as intelligent cognition of the electronic device 100, for example, image recognition, facial recognition, voice recognition, and text understanding.

The interface 120 for external memory may be configured to connect to an external memory card, such as a micro SD card, to extend a storage capability of the electronic device 100. The external memory card communicates with the processor 110 through the interface 120 for external memory, to implement a data storage function. For example, files such as music or videos are stored in the external memory card.

The internal memory 121 may be configured to store computer executable program code, where the executable program code includes instructions. The processor 110 performs various function applications and data processing of the electronic device 100 by running the instructions stored in the internal memory 121. The internal memory 121 may include a program storage area and a data storage area. The program storage area may store an operating system, an app required by at least one function (for example, a sound play function or an image play function), and the like. The data storage area may store data (such as audio data or a phone book) created in a use process of the electronic device 100. In addition, the internal memory 121 may include a high-speed random access memory, and may further include a non-volatile memory, such as at least one magnetic disk storage component, a flash memory component, and a universal flash storage (universal flash storage, UFS).

The electronic device 100 may implement an audio function, such as music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode audio signals. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or a voice message is listened to by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C through the mouth, to enter a sound signal to the microphone 170C. At least one microphone 170C may be disposed on the electronic device 100. In some other embodiments, two microphones 170C may be disposed on the electronic device 100. In addition to sound signal collection, a noise reduction function may be further implemented. In some other embodiments, three, four, or more microphones 170C may be alternatively disposed on the electronic device 100, to collect a sound signal, implement noise reduction, recognize a sound source, implement a directional recording function, and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch button. The electronic device 100 may receive button input, and generate button signal input related to user settings and function control of the electronic device 100.

The motor 191 may generate a vibration prompt. The motor 191 may be used for an incoming call vibration prompt, or may be used for touch vibration feedback. For example, touch operations performed on different applications (for example, photo taking and audio playing) may be corresponding to different vibration feedback effects. The motor 191 may also correspond to different vibration feedback effects for touch operations performed in different regions of the display 194. Different application scenarios (for example, a time reminder, information receiving, an alarm clock, and a game) may also be corresponding to different vibration feedback effects. A touch vibration feedback effect may be further customized.

The indicator 192 may be an indicator light, and may indicate a charging status or a power change, or may indicate a message, a missed call, a notification, or the like.

The SIM card interface 195 is configured to connect to a SIM card. The SIM card may be inserted into the SIM card interface 195 or pulled out of the SIM card interface 195, to implement contact with or separation from the electronic device 100. The electronic device 100 may support one or N SIM card interfaces, and N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external memory card. The electronic device 100 interacts with a network by using a SIM card, to implement functions such as conversation and data communication. In some embodiments, the electronic device 100 uses an embedded-SIM (embedded-SIM, eSIM) card, that is, an embedded SIM card. The eSIM card may be embedded in the electronic device 100, and cannot be separated from the electronic device 100.

It should be understood that a phone card in embodiments of this application includes but is not limited to a SIM card, an eSIM card, a universal subscriber identity module (universal subscriber identity module, USIM) card, a universal integrated circuit card (universal integrated circuit card, UICC), or the like.

A software system of the electronic device 100 may use a layered architecture, an event-driven architecture, a microkernel architecture, a micro-service architecture, or a cloud architecture. In this embodiment of this application, an Android system with a layered architecture is used as an example to describe the software structure of the electronic device 100.

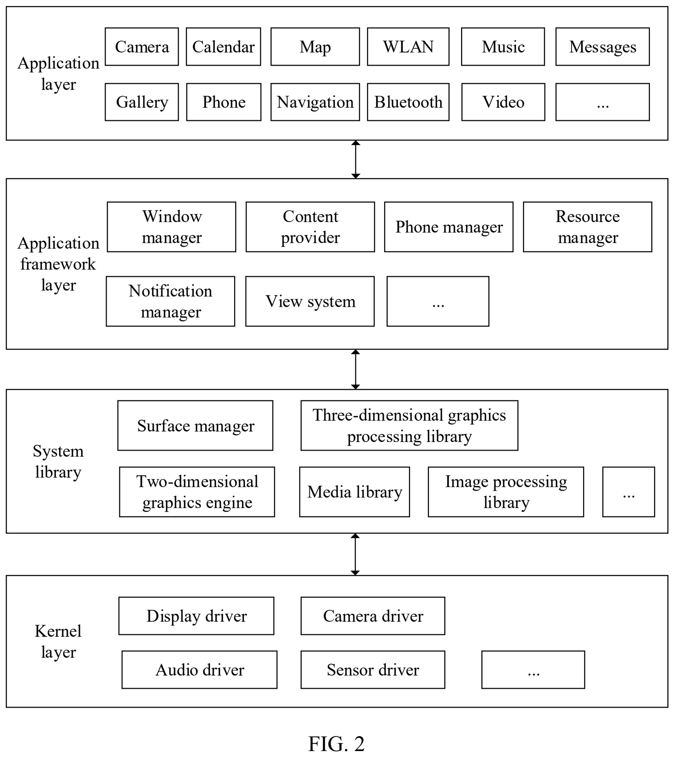

FIG. 2 is a block diagram of a software structure of the electronic device 100 according to an embodiment of this application. In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for applications at the application layer. The application framework layer includes some predefined functions.

As shown in FIG. 2, the application framework layer may include a window manager, a content provider, a view system, a phone manager, a resource manager, a notification manager, and the like.

The window manager is configured to manage window programs. The window manager may obtain a display size, determine whether there is a status bar, lock a screen, take a screenshot, and the like.

The content provider is configured to store and obtain data and make the data accessible to the application. The data may include videos, images, audio, calls that are made and received, browsing history and bookmarks, a phone book, and the like.

The view system includes visual controls, such as a text display control and a picture display control. The view system may be configured to construct an application. A display interface may include one or more views. For example, a display interface including an SMS notification icon may include a text display view and a picture display view.

The phone manager is configured to provide a communication function of the electronic device 100, for example, call status management (including accepting and declining).

The resource manager provides various resources for the application, such as a localized string, an icon, a picture, a layout file, and a video file.

The notification manager enables the application to display notification information in a status bar, and may be configured to transfer a message of a notification type. The information may automatically disappear after a short stay without user interaction. For example, the notification manager is configured to notify a download completion, a message reminder, and the like. The notification manager may alternatively be a notification that appears in a form of a graph or a scroll bar text in a status bar at the top of the system, for example, a notification of an application running in the background, or may be a notification that appears in a form of a dialog window on a screen. For example, the status bar shows text information, an alert tone is made, the electronic device vibrates, or an indicator blinks.

The Android runtime includes a core library and a virtual machine. The Android runtime is responsible for scheduling and management of the Android system.

The core library includes two parts: a function that needs to be invoked by using the Java language, and a core library of Android.

The application layer and the application framework layer run in the virtual machine. The virtual machine executes a binary file of a Java file at the application layer and the application framework layer. The virtual machine is configured to perform functions such as object lifecycle management, stack management, thread management, security and abnormity management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be understood that the technical solutions in embodiments of this application may be applied to systems such as Android, iOS, and Harmony.

The technical solutions in embodiments of this application may be applied to, for example, an electronic device having a display function. For example, the technical solutions may be applied to a television set, a desktop computer, a notebook computer, or an in-vehicle screen, or may be applied to a portable electronic device such as a mobile phone, a foldable display, a tablet computer, a camera, a video camera, a video recorder, a watch, or a band, or may be applied to another electronic device having a display function, or may be applied to an electronic device in a 5G network or an electronic device in a future evolved public land mobile network (public land mobile network, PLMN). A main application scenario may be a theme setting scenario, a theme preview scenario, or a theme modification scenario of the electronic device.

With users' increasing personalized requirements on electronic devices, a personalized theme function of an electronic device is one of important experiences of a user in using the electronic device. Common personalized editing elements include: a lock screen wallpaper, a home screen wallpaper, an icon pattern, an always on display (always on display, AOD) pattern, a clock pattern, a widget, and the like. A "theme" is a personalized form in which a plurality of personalized elements are matched into a set, and packed and provided for a user to use.

Currently, for themes on the electronic device, a theme set can only be applied and take effect as a whole, and customization of a single element can only be modified separately. However, in a process of using a theme set, the user usually needs to modify several single elements (for example, a wallpaper, a clock pattern, and an icon pattern) according to a preference of the user, and check a final modified theme effect. In addition, in a process of customizing a single element, the user tends to match single elements to achieve an effect of a set, for example, select elements of a same role, a same color, or a same visual style. In other words, the user uses the single elements to form a unique "theme". However, in this process of customization by the user, the user cannot preview a modified theme effect, and can view a matching effect only after modification is completed and the theme is applied. A matching result is not intuitive, and a procedure of "match-preview-adjust-complete" of the theme set cannot be easily completed.

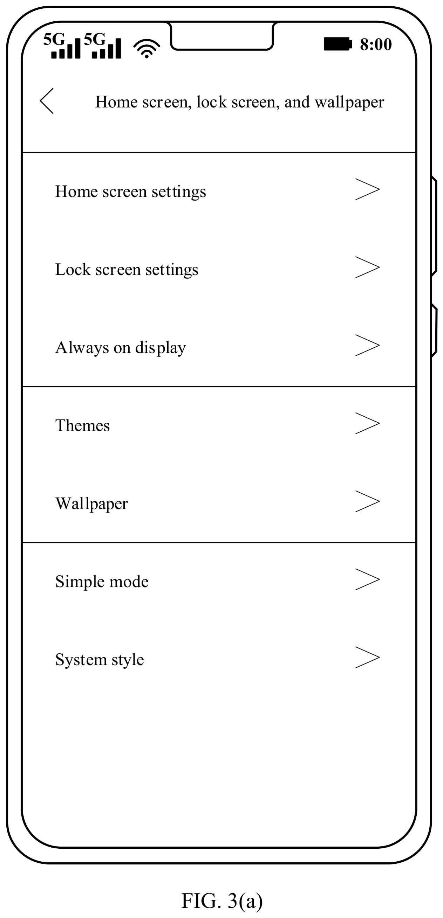

FIG. 3(a) to FIG. 3(c) are a diagram of an interface corresponding to three customized theme elements.

As shown in FIG. 3(a), in a manner of customizing a theme element, a "Home screen, lock screen, and wallpaper" setting interface of an electronic device includes entries for a plurality of settings. The plurality of settings include home screen settings, lock screen settings, always on display, themes, wallpaper, simple mode, system style, and the like. A user may set a home screen icon, a clock pattern, and the like by entering a secondary interface corresponding to home screen settings, the user may set a clock pattern and the like on a lock screen page by entering a secondary interface corresponding to lock screen settings, the user may set always on display by entering a secondary interface corresponding to always on display, the user may set a theme by entering a secondary interface corresponding to themes, and so on. After setting is completed, set theme elements are applied. The user needs to return to a home screen to view a home screen setting effect, needs to return to a lock screen page to view a lock screen setting effect, and needs to return to an always on display page to view an always on display setting effect. In other words, the user cannot preview an overall setting effect in a setting process, and can only view an applied effect after setting succeeds. If the user is not satisfied with the setting effect, the user needs to enter the setting interface shown in FIG. 3(a) again for resetting.

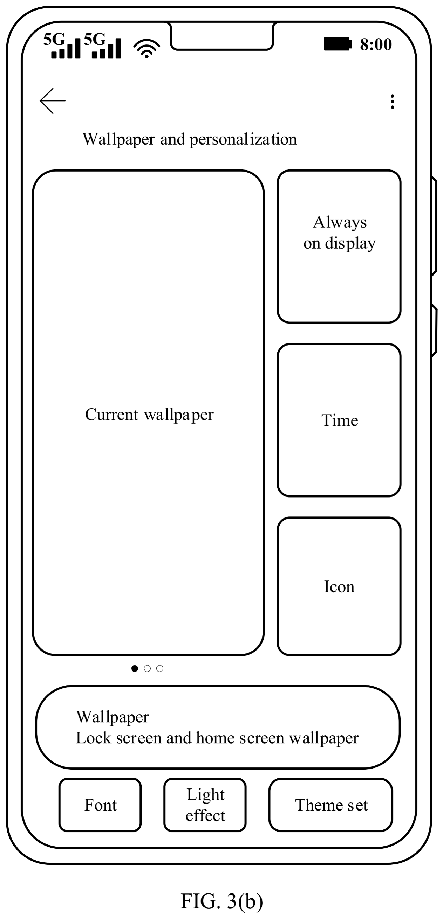

As shown in FIG. 3(b), in another manner of customizing a theme element, a "Wallpaper and personalization" setting interface of an electronic device includes entries for a plurality of settings. The plurality of settings include an always on display setting, a time pattern setting, an icon setting, wallpaper, font, light effect, theme set, and the like. A user may set a clock pattern by entering a secondary interface corresponding to the time pattern setting, the user may set always on display by entering a secondary interface corresponding to always on display, the user may set an icon by entering a secondary interface corresponding to icon, the user may set a theme by entering a secondary interface corresponding to theme set, and so on. After setting is completed, set theme elements are applied. The user needs to return to a home screen to view a home screen setting effect, needs to return to a lock screen page to view a lock screen setting effect, and needs to return to an always on display page to view an always on display setting effect. In other words, the user cannot preview an overall setting effect in a setting process, and can only view an applied effect after setting succeeds. If the user is not satisfied with the setting effect, the user needs to enter the setting interface shown in FIG. 3(b) again for resetting.

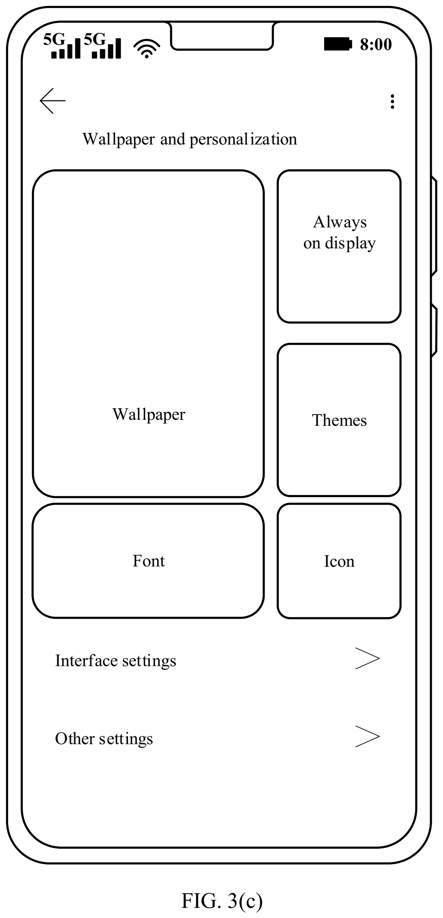

As shown in FIG. 3(c), in another manner of customizing a theme element, a "Wallpaper and personalization" setting interface of an electronic device includes entries for a plurality of settings. The plurality of settings include an always on display setting, a theme setting, an icon setting, wallpaper, font, interface settings, and the like. A user may set always on display by entering a secondary interface corresponding to always on display, the user may set an icon by entering a secondary interface corresponding to icon, the user may set a theme by entering a secondary interface corresponding to themes, the user may set a wallpaper by entering a secondary interface corresponding to wallpaper, and so on. After setting is completed, set theme elements are applied. The user needs to return to a home screen to view a home screen setting effect, needs to return to a lock screen page to view a lock screen setting effect, and needs to return to an always on display page to view an always on display setting effect. In other words, the user cannot preview an overall setting effect in a setting process, and can only view an applied effect after setting succeeds. If the user is not satisfied with the setting effect, the user needs to enter the setting interface shown in FIG. 3(c) again for resetting.

In this method, although a plurality of single elements that form a theme can be edited, an editing option of each single element (such as themes, wallpaper, always on display, system style, icon, font, or light effect) has an independent editing entry, and the user can only perform modification by single element. Only after modification is completed, the user can view an actual application effect in an interface to which the theme is applied. A matching result of an entire set cannot be intuitively viewed in an editing process. In addition, in this method, content customized by the user cannot be stored in set. In other words, after the user has made a theme set through matching, when the user wants to make a new theme set through matching next time, the new theme overrides settings of the original theme one by one, and the original theme cannot be retrieved.

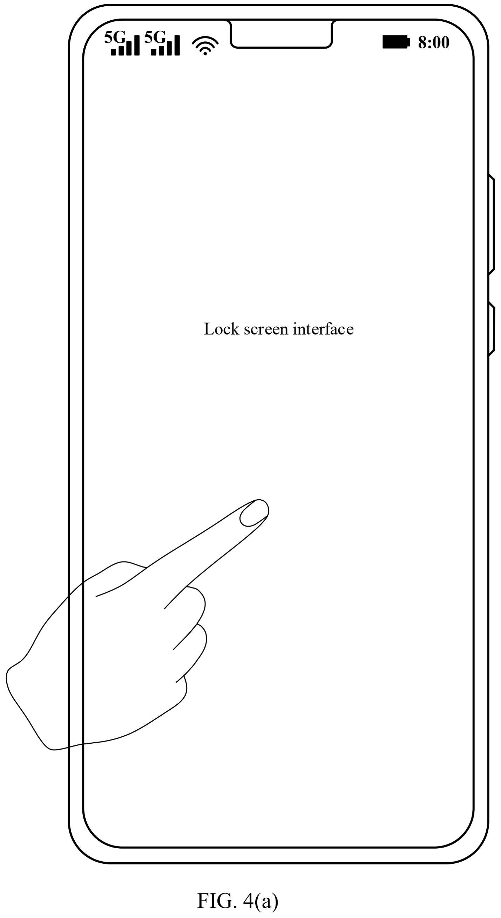

FIG. 4(a) to FIG. 4(e) are a diagram of an interface corresponding to another customized theme element.

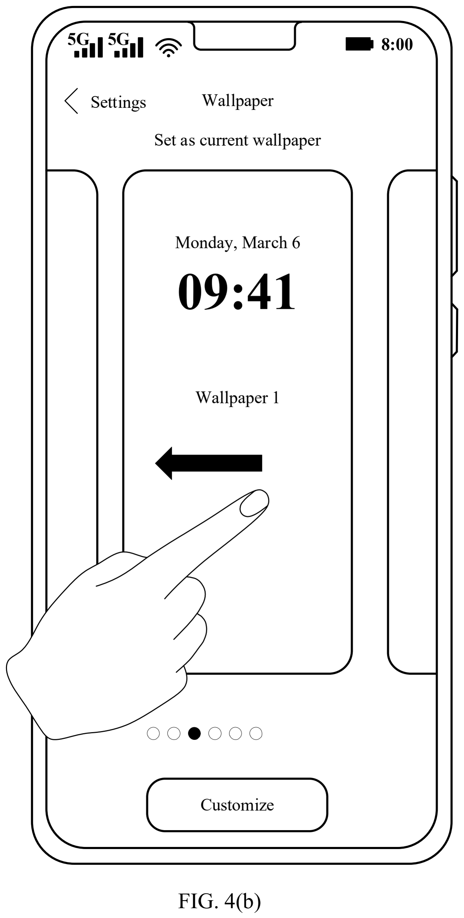

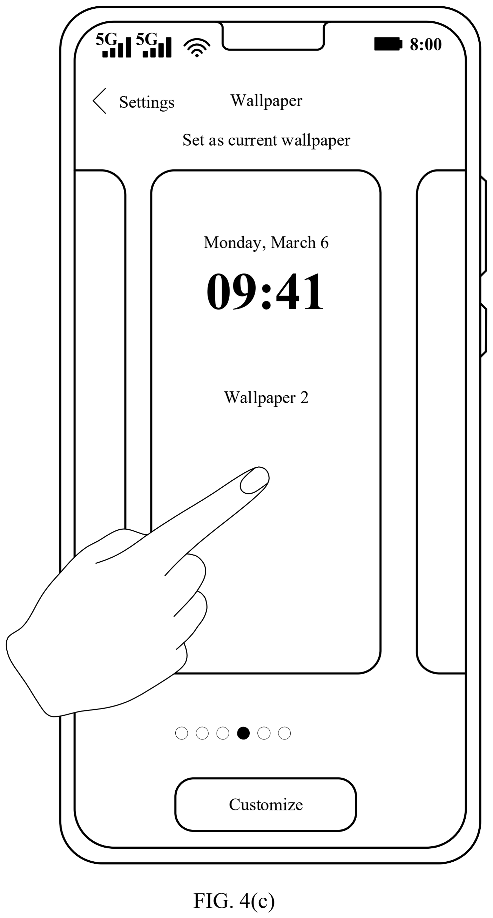

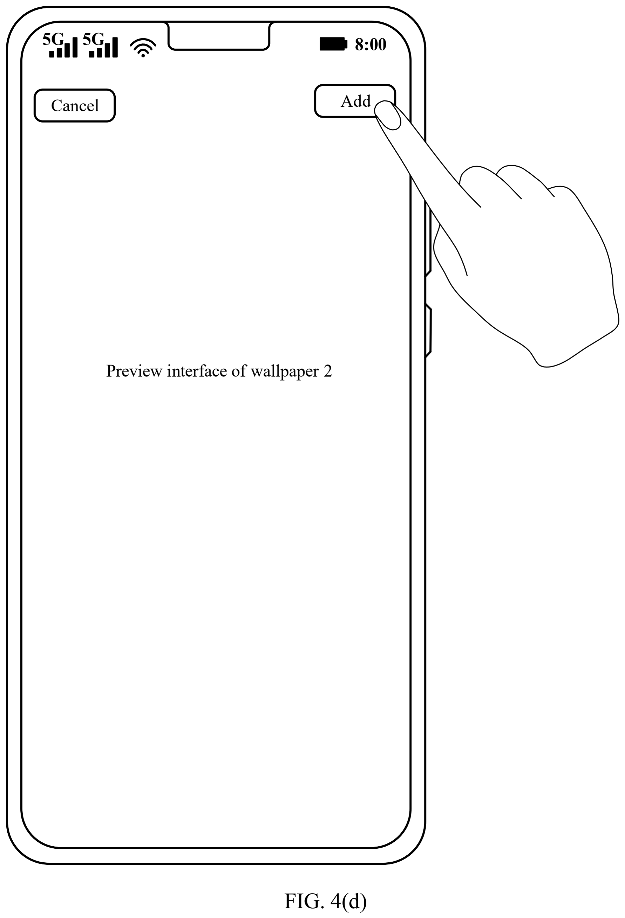

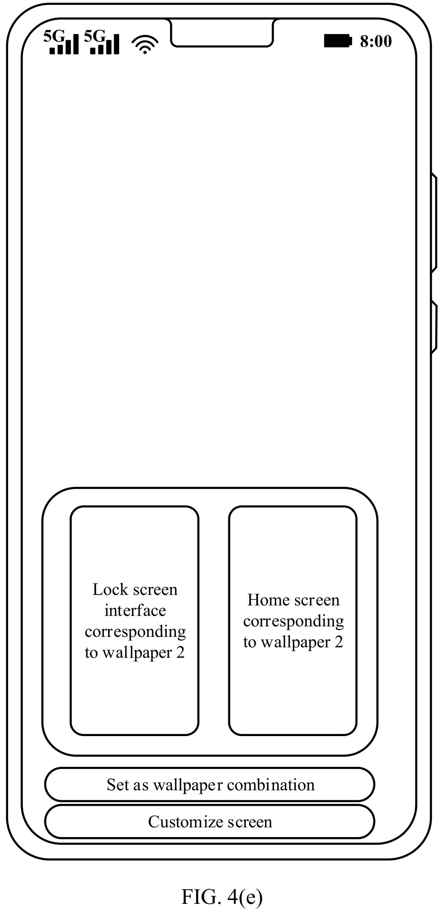

As shown in FIG. 4(a), when a user wants to modify a lock screen wallpaper, the user may touch and hold a lock screen interface, so that a display of an electronic device displays an interface shown in FIG. 4(b). In the interface, the user may view a plurality of wallpapers by sliding left and right, and select a wallpaper from the wallpapers. As shown in FIG. 4(c), when the user selects a wallpaper 2, the display of the electronic device switches to a preview interface of the wallpaper 2 shown in FIG. 4(d). The user may modify a theme element such as a clock element in the interface. When the user is satisfied with a current display effect of the wallpaper 2, the user may tap an "Add" control on the electronic device, so that the display of the electronic device switches to a display interface shown in FIG. 4(e). In the interface, a preview image of a lock screen interface corresponding to the wallpaper 2 and a preview image of a home screen corresponding to the wallpaper 2 are displayed. If the user is satisfied with the current effect, the user may tap a "Set as wallpaper combination" control to apply the wallpaper 2. If the user is not satisfied with the current effect, the user may tap a "Customize screen" control to enter a setting interface of the lock screen wallpaper again.

In this method, although the lock screen wallpaper, a lock screen layout, and a home screen wallpaper can be packed into a theme set, compared with the embodiment shown in FIG. 3(a) to FIG. 3(c), the method provides fewer editable single elements. For example, the method does not support editing of a theme, always on display, an icon, a system color, or the like, and customization experience of the user is poor. In a theme element editing process, the user needs to follow a unidirectional process of selecting a wallpaper->adjusting a lock screen layout->setting a home screen wallpaper, cannot preview an effect of the theme set after the lock screen layout is adjusted, and cannot view an overall matching result intuitively during editing.

Therefore, in the current theme editing method, only after modification of an element of a theme is completed, an actual application effect can be viewed in an interface to which the theme is applied, and an effect of a customized theme cannot be previewed in a process of customizing a theme element. Consequently, the user can view a theme matching effect only after setting is completed. If the user is not satisfied with the matching effect, the user needs to open a setting interface again for resetting, affecting user experience.

In view of this, embodiments of this application provide an interface setting method and an electronic device. According to the method and the electronic device, an effect of a customized theme can be previewed in a theme element customization process. Operations of the method are simple and easy to understand, so that a user can more intuitively and simply view a theme element matching result in a theme element editing process, thereby assisting the user in selecting a single option for editing. In addition, the customized theme that is set by the user can be further stored in set, so that the user can apply a theme set that has been set historically at any time. In addition, the method can be further applied to a plurality of interaction architectures, for example, theme element editing of a foldable display, theme element editing of a tablet, and theme element editing of a watch.

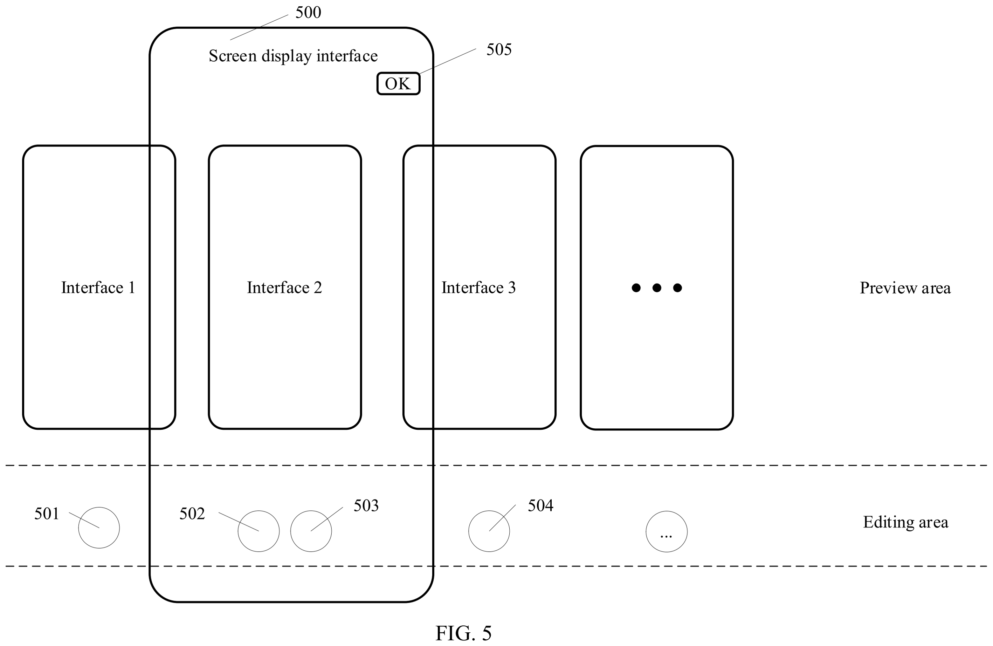

For example, FIG. 5 is a diagram of a structure of a page on which a plurality of interfaces are edited in an integrated manner according to an embodiment of this application.

As shown in FIG. 5, a plurality of interfaces are located in a same slidable gallery. For example, the plurality of interfaces may include an interface 1, an interface 2, and an interface 3. Each of the plurality of interfaces is associated with one or more editable options. For example, the interface 1 is associated with an editable option 501, the interface 2 is associated with an editable option 502 and an editable option 503, and the interface 3 is associated with an editable option 504. This may also be understood as follows: The slidable gallery includes a preview area and an editing area. The preview area includes one or more interfaces. The editing area includes one or more editing sub-areas that are in one-to-one correspondence with the one or more interfaces. Each editing sub-area includes one or more editable options.

The slidable gallery may be further divided into a display area and a to-be-displayed area. The display area corresponds to a display of an electronic device 500. In other words, the slidable gallery is slidably displayed on the display of the electronic device 500. Limited by display space, a partial area of the slidable gallery is displayed on the display of the electronic device 500. In response to an operation that a user slides left or right on the display of the electronic device 500, the slidable gallery is slidably displayed on the display of the electronic device 500. The user can preview all interfaces in the slidable gallery on a same page by sliding left or right.

In an example, the display of the electronic device 500 displays an interface shown in FIG. 5, that is, the current display of the electronic device displays the interface 2 and the editable option control 502 and the editable option control 503 that are associated with the interface 2. The user may tap the editable option control 502 or the editable option control 503 in the interface to edit a related theme element in the interface 2 in a customized manner. After the editing is completed, the edited theme element is synchronized to one or more interfaces in the current slidable gallery, the user may preview an editing effect on a current page. In addition, based on this, the user may perform a rightward sliding operation on the display of the electronic device 500, to slide the interface 1 to the display area of the display of the electronic device 500. In this case, the display of the electronic device 500 displays the interface 1 and the editable option control 501 associated with the interface 1. The user may tap the editable option control 501 in the interface to edit a theme element in the interface 1 in a customized manner. After the editing is completed, the edited theme element is synchronized to one or more interfaces in the current slidable gallery, and the user may preview an editing effect on a current page. In this case, the previewed editing effect is an overall effect of editing the theme element in the interface 2 and the theme element in the interface 1. By analogy, the user may edit a theme element in any interface in the slidable gallery. After the user completes editing theme elements in one or more interfaces in the slidable gallery, the user may preview an overall effect of editing the theme elements in the one or more interfaces. If the user is not satisfied with an effect of a theme element, the user may perform corresponding adjustment. If the user is satisfied with the current editing effect after previewing, the user may complete theme element editing by, for example, tapping a control 505 displayed on the display of the electronic device 500. In this case, a theme set formed after editing may be applied to an interface display scenario of the electronic device 500.

In some embodiments, the electronic device 500 is a mobile phone or a tablet, the slidable gallery includes an interface 1, an interface 2, and an interface 3, the interface 1 is an always on display interface, the interface 2 is a lock screen interface, the interface 3 is a home screen, an editable option associated with the interface 1 includes an editable option used to set an always on display style, an editable option associated with the interface 2 includes an editable option used to set a wallpaper, and editable options associated with the interface 3 include an editable option used to set a wallpaper and an editable option used to set an icon.

In some other embodiments, the electronic device 500 is a foldable display, the slidable gallery includes an interface 1, an interface 2, an interface 3, and an interface 4, the interface 1 is an external screen display interface, the interface 2 is an always on display interface, the interface 3 is a lock screen interface, the interface 4 is a home screen, an editable option associated with the interface 1 includes an editable option used to set an external screen style, an editable option associated with the interface 2 includes an editable option used to set an always on display style, an editable option associated with the interface 3 includes an editable option used to set a wallpaper, and editable options associated with the interface 4 include an editable option used to set a wallpaper and an editable option used to set an icon.

In some other embodiments, the electronic device 500 is a watch, the slidable gallery includes an interface 1 and an interface 2, the interface 1 is an always on display interface, the interface 2 is a lock screen interface, an editable option associated with the interface 1 includes an editable option used to set an always on display style, and an editable option associated with the interface 2 includes an editable option used to set a watch face.

In some embodiments, a page structure shown in FIG. 5 may be described as a page structure corresponding to an integrated editor. Specifically, it may be understood that in the page structure corresponding to the integrated editor, a plurality of interfaces corresponding to the electronic device 500 may be edited at the same time, and after the editing of the plurality of interfaces is completed, the user may preview an effect of an edited theme set, complete editing of theme elements in a unified manner, and apply the edited theme set.

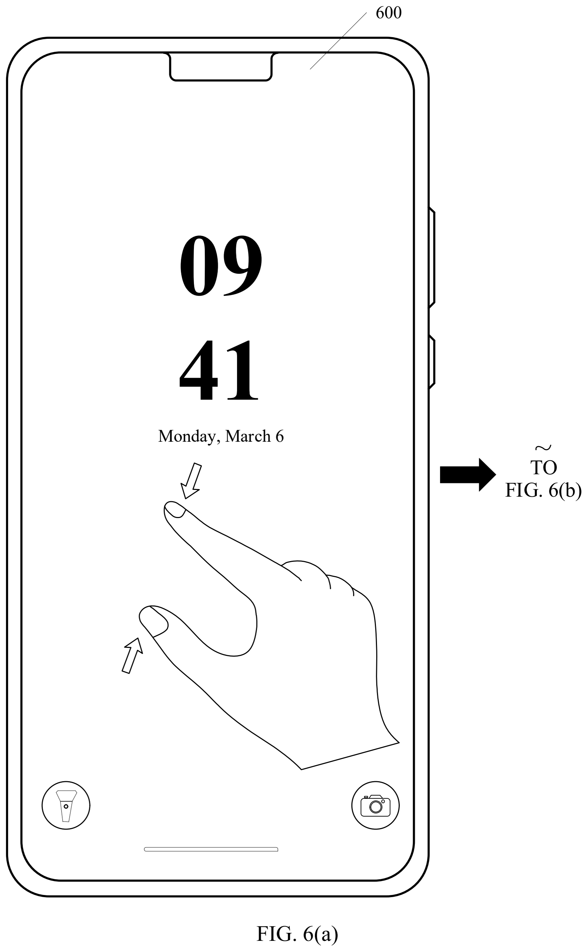

For example, FIG. 6(a) to FIG. 6(c) are a diagram of an operation procedure for triggering switching from a display interface of an electronic device to an integrated editor interface according to an embodiment of this application.

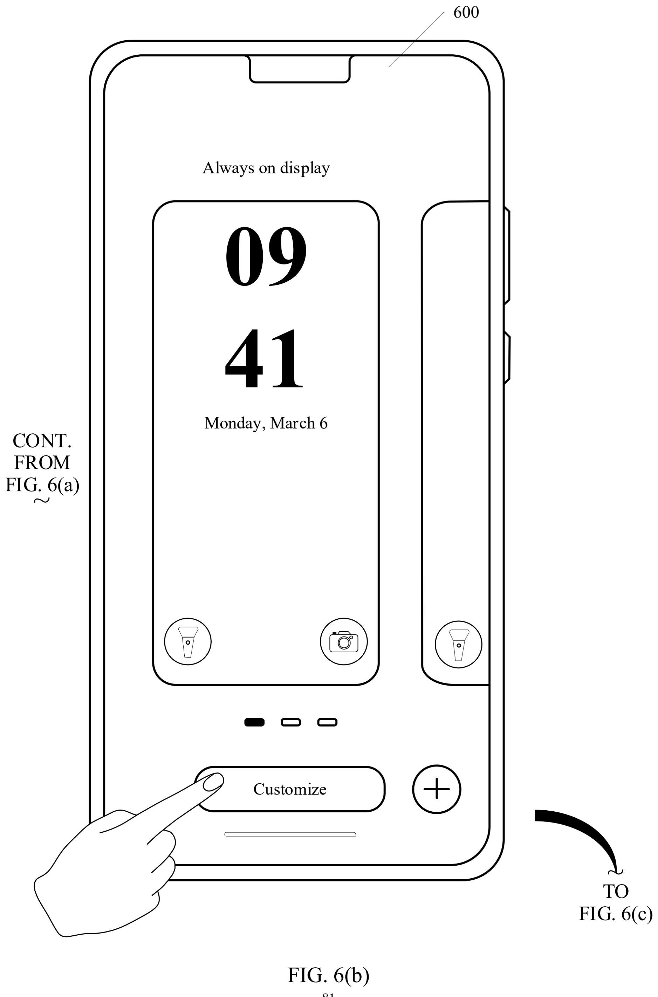

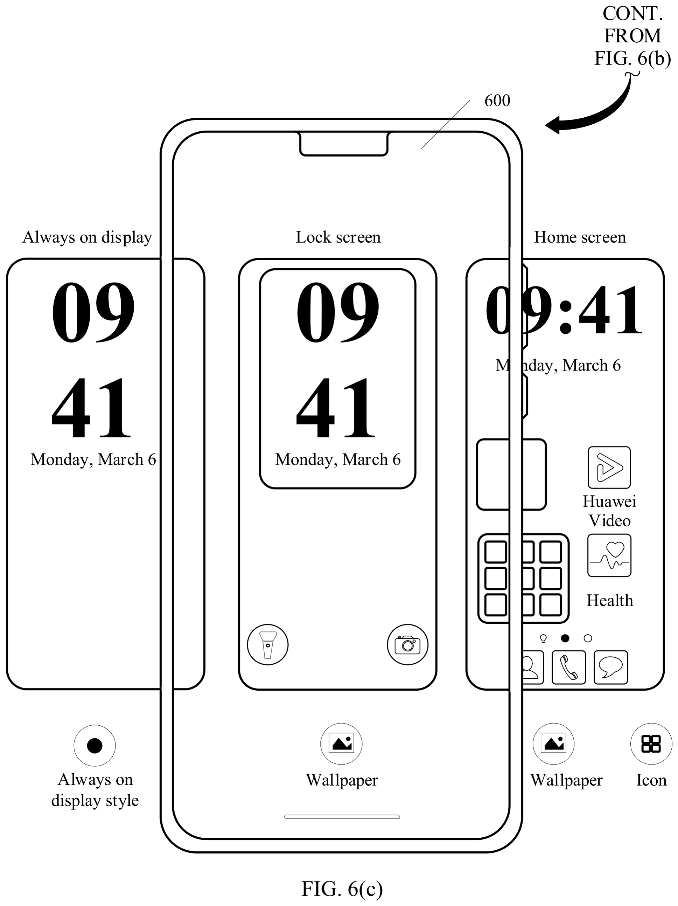

As shown in FIG. 6(a), a display of an electronic device 600 displays a lock screen page. A user may perform a double-finger pinch operation on the lock screen page, to switch a display interface of the electronic device 600 to an interface shown in FIG. 6(b). The interface may be understood as a theme gallery interface, that is, an interface for the user to select a theme. The user may slide left or right in the display interface shown in FIG. 6(b) to view a plurality of themes (the plurality of themes may be, for example, a plurality of theme sets stored in the electronic device 600) and select a target theme, or the user may tap a "Customize" control shown in FIG. 6(b) to enter a selection interface of a plurality of themes (the plurality of themes may be, for example, a plurality of theme sets stored in the electronic device 600) and select a target theme. After the user selects the theme, the display interface of the electronic device is switched to an interface corresponding to an integrated editor, that is, switched to an interface shown in FIG. 6(c). In the interface, a slidable gallery includes three interfaces, and the three interfaces are an always on display interface of the electronic device 600, a lock screen interface of the electronic device 600, and a home screen of the electronic device 600. The always on display interface is associated with an editable option "Always on display style", the lock screen interface is associated with an editable option "Wallpaper", and the home screen is associated with an editable option "Wallpaper" and an editable option "Icon". It should be understood herein that, not all interfaces included in the slidable gallery are necessarily displayed on the display of the electronic device 600 at the same time. Limited by display space of the electronic device 600, only a part of interfaces in the plurality of interfaces included in the slidable gallery can be displayed on the display, and the user may preview all the interfaces in the slidable gallery by sliding left or right on the display. Alternatively, when display space of the electronic device 600 is sufficient, all the interfaces included in the slidable gallery may be displayed on the display of the electronic device 600 at the same time.

In another implementation, the user may further tap a "+" control shown in FIG. 6(b) to enter a theme selection interface (a plurality of themes shown in the interface may be, for example, a plurality of themes that are not stored in the electronic device 600, for example, may be photos in Gallery of the electronic device 600, or may be online pictures). After the user selects a theme, the display interface of the electronic device is switched to an interface corresponding to an integrated editor, that is, switched to an interface shown in FIG. 6(c).

It should be understood that, in addition to performing the double-finger pinch operation on the lock screen interface, a manner of triggering to enter the integrated editor interface of the electronic device may alternatively be a touch and hold operation on the home screen or the lock screen interface, or may be a double-tap operation on the lock screen interface or the home screen, or may be another operation, for example, a customized operation preset by the user. This is not limited in this application.

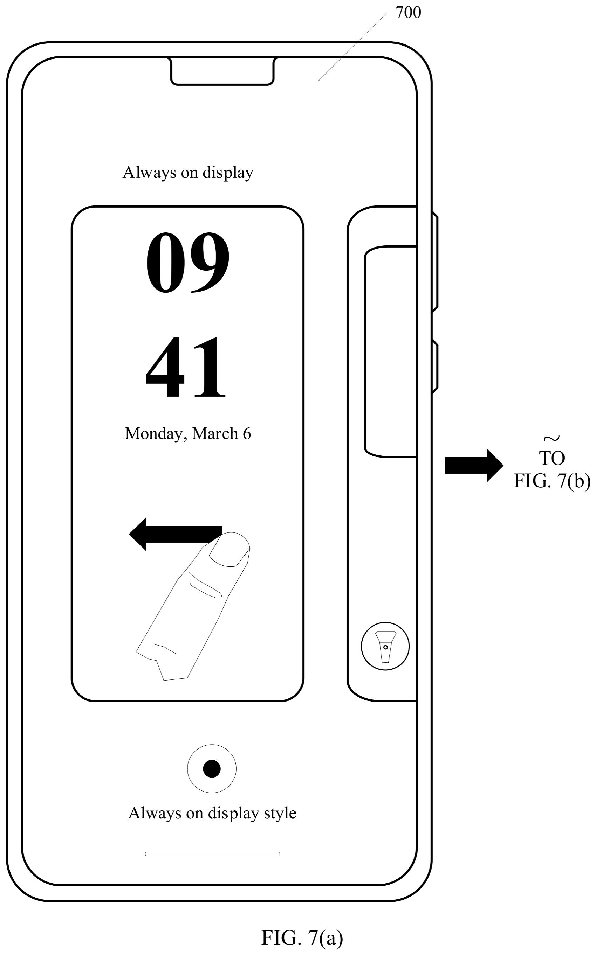

Next, for example, with reference to FIG. 7(a) to FIG. 7(c), an example in which the electronic device is a mobile phone is used to describe in detail the integrated editor interface (that is, an editing page corresponding to integrated editing of an always on display interface, a lock screen interface, and a home screen) of the electronic device provided in embodiments of this application.

In response to a trigger operation of a user, a display interface of an electronic device 700 jumps to an integrated editor interface. On the editing page, an always on display interface, a lock screen interface, and a home screen of the electronic device 700 are arranged in sequence to form a slidable gallery. This may also be described as that the always on display interface, the lock screen interface, and the home screen of the electronic device 700 are arranged in sequence in a same slidable gallery. In this case, a display of the electronic device 700 may display an interface shown in FIG. 7(a). In the interface, the always on display interface of the electronic device 700 and an editable option "Always on display style" associated with the always on display interface are displayed, and a part of the lock screen interface of the electronic device 700 may be further displayed. The user may enter an editing interface of the always on display interface by tapping the editable option "Always on display style". The editing interface and an editing process of the always on display interface are described in detail in subsequent embodiments.

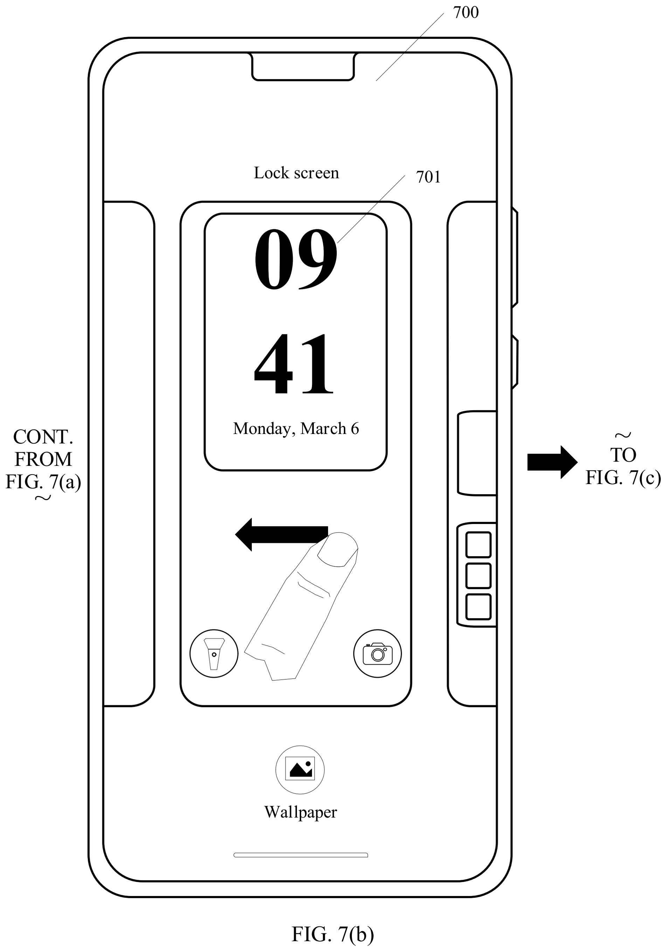

When the user performs a leftward sliding operation on the page shown in FIG. 7(a), the display interface of the electronic device 700 is switched to an interface shown in FIG. 7(b). In the interface, the lock screen interface of the electronic device 700 and an editable option "Wallpaper" associated with the lock screen interface are displayed, and a part of the always on display interface and a part of the home screen of the electronic device 700 may be further displayed. The user may enter a wallpaper editing interface by tapping the editable option "Wallpaper". The user may further enter a time pattern editing interface by tapping a time area 701. The wallpaper editing interface and an editing process, and the time pattern editing interface and an editing process are described in detail in subsequent embodiments.

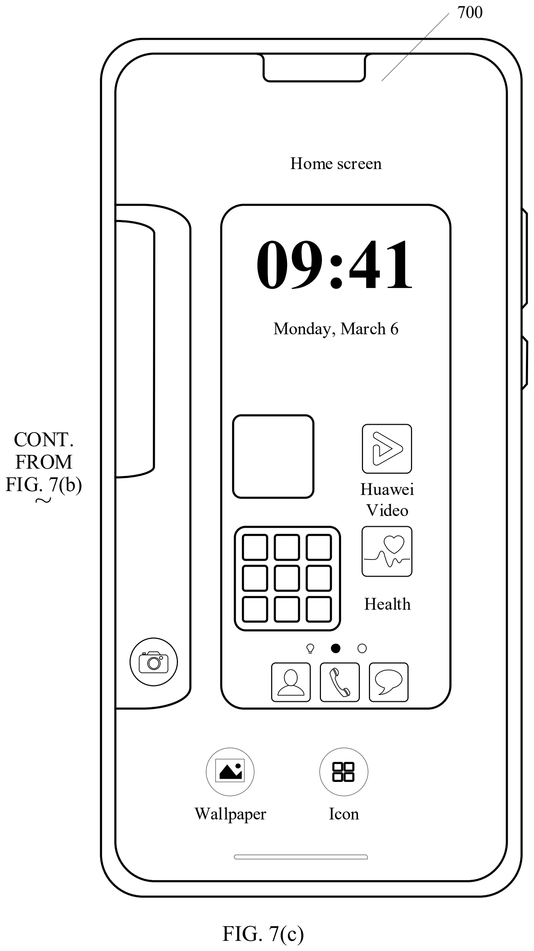

When the user performs a leftward sliding operation on the page shown in FIG. 7(b), the display interface of the electronic device 700 is switched to an interface shown in FIG. 7(c). In the interface, the home screen of the electronic device 700 and an editable option "Wallpaper" and an editable option "Icon" that are associated with the home screen are displayed, and a part of the lock screen interface of the electronic device 700 may be further displayed. The user may enter a wallpaper editing interface by tapping the editable option "Wallpaper". The user may further enter an icon editing interface by tapping the editable option "Icon". The wallpaper editing interface and an editing process, and the icon editing interface and an editing process are described in detail in subsequent embodiments.

It should be understood that content that is about the plurality of interfaces in the slidable gallery and that can be simultaneously displayed on the display of the electronic device 700 is related to a display area of the electronic device 700, and may be further related to an attribute of the electronic device. The attribute of the electronic device may include an element setting function of the electronic device. For example, a head unit device may have an ambient light setting function and a fragrance setting function, and a foldable device may have an external screen display setting function.

In an example, when display space of the electronic device 700 is large enough, for example, the electronic device 700 is a large-screen device or a tablet, the plurality of interfaces in the slidable gallery may be simultaneously displayed on the screen of the electronic device 700. Meanwhile, a plurality of editable options corresponding to the plurality of interfaces may also be simultaneously displayed on the screen of the electronic device 700.

In another example, when there are a relatively small quantity of interfaces in the sliding gallery, for example, there are two interfaces, the two interfaces in the sliding gallery may be simultaneously displayed on the screen of the electronic device 700. Meanwhile, a plurality of editable options corresponding to the two interfaces may also be simultaneously displayed on the screen of the electronic device 700.

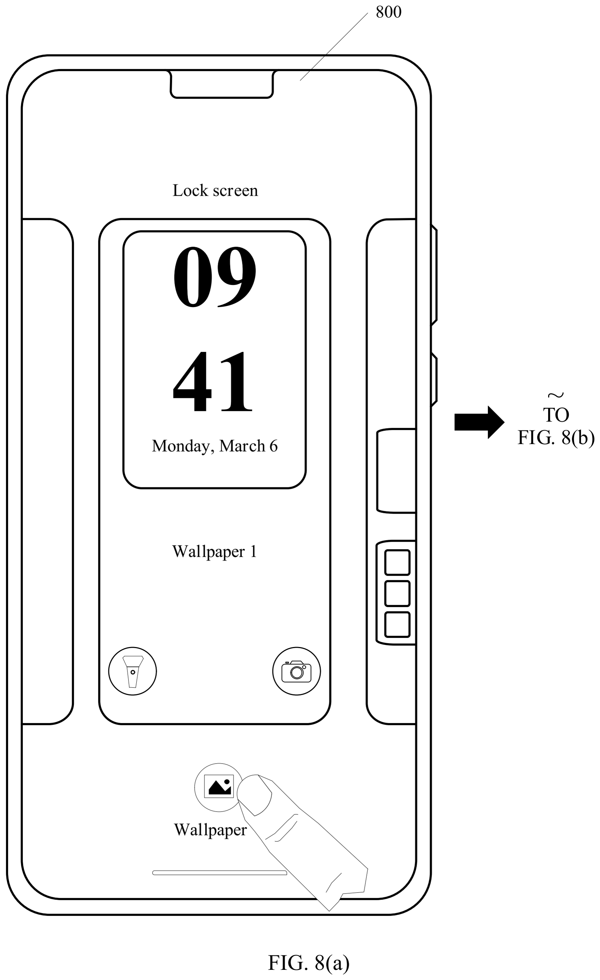

To more clearly understand a process of editing a plurality of interfaces in an integrated manner, with reference to FIG. 8(a) to FIG. 8(e) to FIG. 11(a) to FIG. 11(e), the following uses an example in which the electronic device is a mobile phone to describe in detail a process of editing an always on display interface, a lock screen interface, and a home screen of the electronic device in an integrated manner.

For example, FIG. 8(a) to FIG. 8(e) are a diagram of an interface for editing a wallpaper by using an integrated editor according to an embodiment of this application.

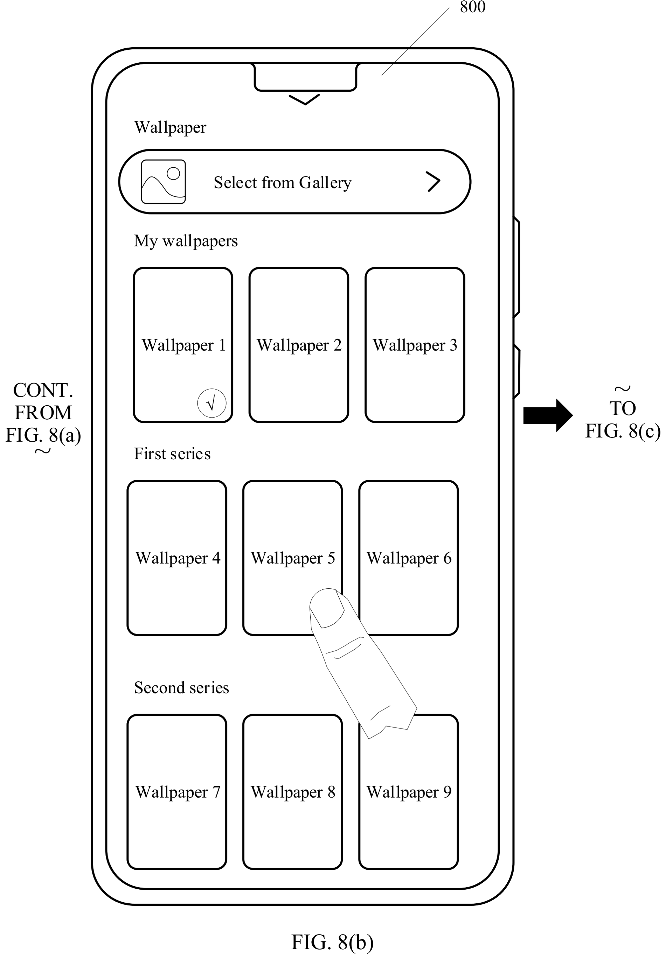

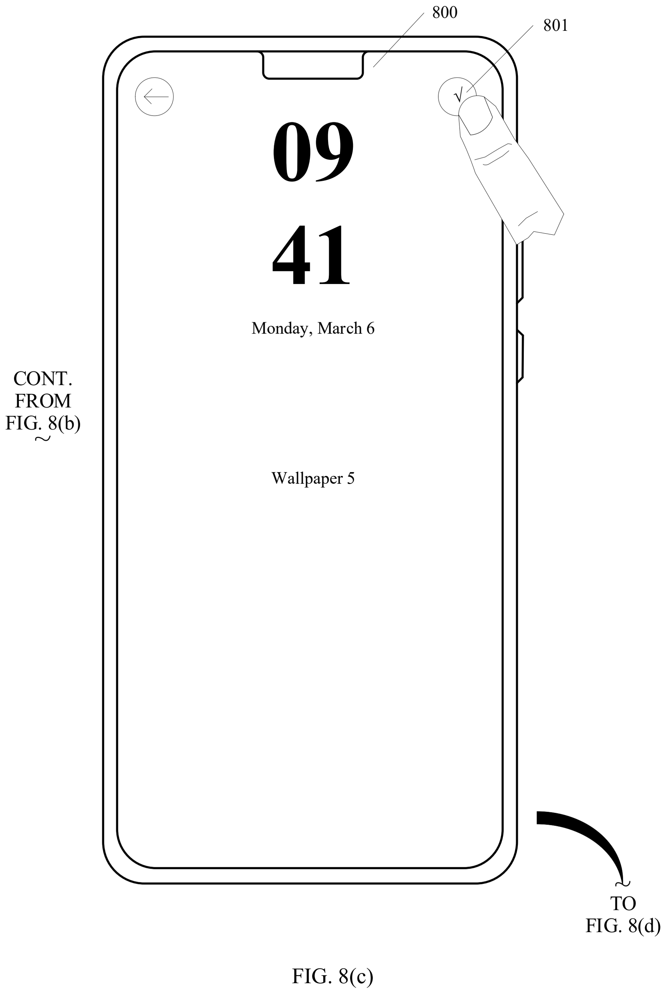

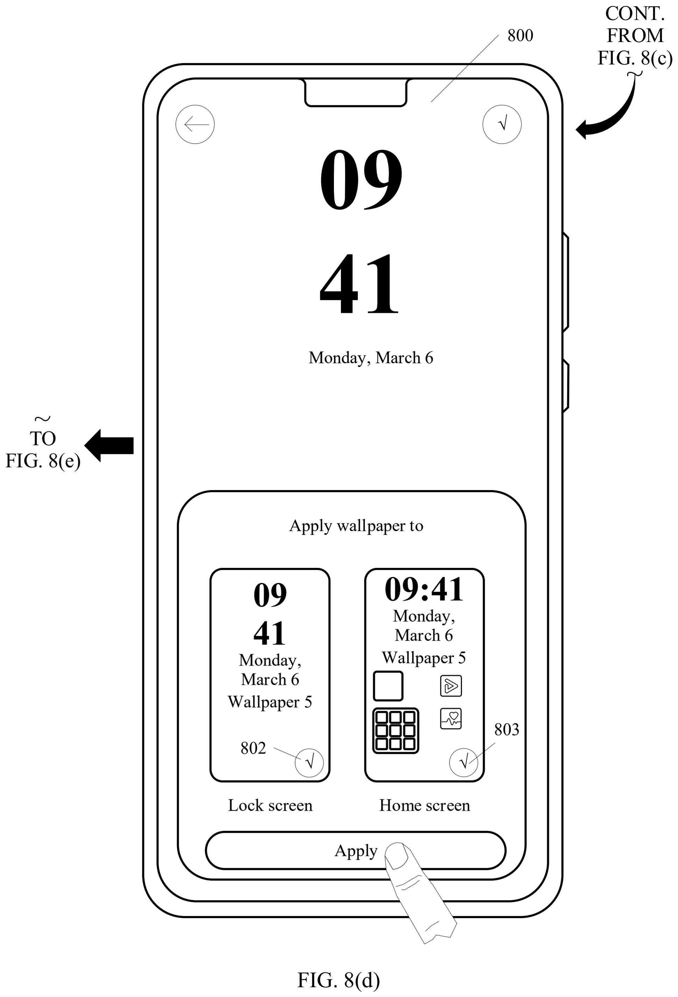

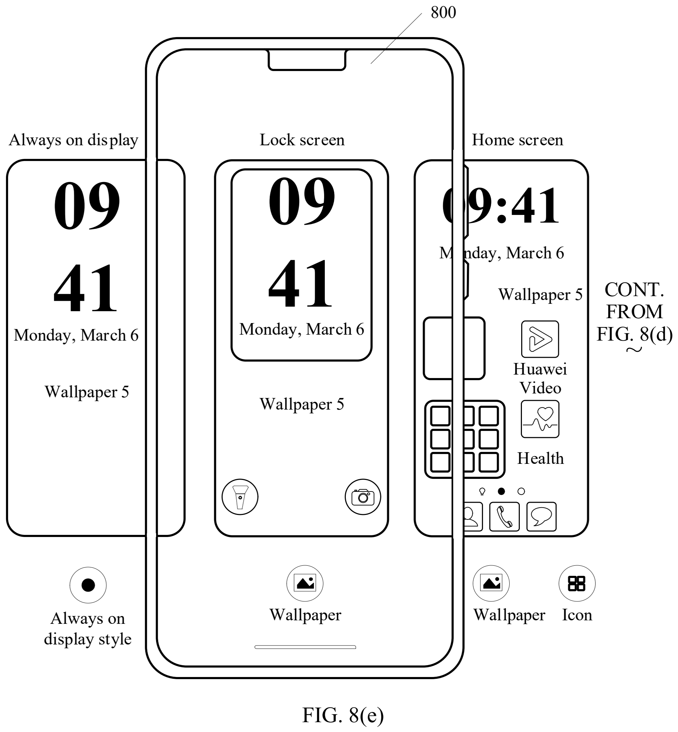

As shown in FIG. 8(a), a display interface of an electronic device 800 displays an editing page corresponding to integrated editing of an always on display interface, a lock screen interface, and a home screen. This may also be described as follows: The always on display interface, the lock screen interface, and the home screen of the electronic device 800 are located in an integrated editor. Currently, the lock screen interface in the three interfaces is displayed on a display, and the always on display interface and the home screen are not displayed simultaneously with the lock screen interface due to limited display space of the electronic device. The currently displayed lock screen interface is associated with an editable option "Wallpaper". When a user wants to change a current wallpaper, the user may tap the editable option "Wallpaper". In response to an operation that the user taps the editable option "Wallpaper", the interface displayed by the display of the electronic device 800 is switched to a wallpaper selection interface shown in FIG. 8(b). In the wallpaper selection interface, a plurality of selectable wallpapers are displayed by category. For example, a plurality of wallpapers in a "My wallpapers" category may be displayed, a plurality of wallpapers in a "First series" category may be further displayed, and a plurality of wallpapers in a "Second series" category may be further displayed. In addition, an entry for selecting a wallpaper from Gallery may be further provided for the user, that is, a "Select from Gallery" control is displayed. It can be learned from the interface shown in FIG. 8(b) that a lock screen wallpaper currently used by the electronic device 800 is a wallpaper 1 in the "My wallpapers" category. On this basis, when the user wants to change the lock screen wallpaper currently used by the electronic device 800 to a wallpaper 5 in the "First series" category, the user may tap "Wallpaper 5", and in response to an operation that the user taps "Wallpaper 5", the display interface of the electronic device 800 is switched to a display interface shown in FIG. 8(c). The wallpaper 5 selected by the user is displayed in full screen in the interface, and the interface may be described as a preview interface of the selected wallpaper. When the user determines that the currently used wallpaper of the electronic device 800 needs to be changed to the wallpaper 5, the user may tap a confirmation control 801 in the interface. In this case, the display interface of the electronic device 800 is shown in FIG. 8(d). A confirmation pop-up window is displayed in the preview interface of the wallpaper. The confirmation pop-up window is used to prompt the user to choose whether to apply the wallpaper to a lock screen or a home screen. The user may choose, by performing a tick operation on a selection control 802 in the pop-up window, to apply the wallpaper 5 to the lock screen interface, or may choose, by performing an untick operation on a selection control 802 in the pop-up window, not to apply the wallpaper 5 to the lock screen interface, or may choose, by performing a tick operation on a selection control 803 in the pop-up window, to apply the wallpaper 5 to the home screen, or may choose, by performing an untick operation on a selection control 803 in the pop-up window, not to apply the wallpaper 5 to the home screen. After the user completes selection, the user may tap an "Apply" control below to confirm the selection. When the user confirms to apply the wallpaper 5 to both the lock screen interface and the home screen, the display of the electronic device 800 returns to a page corresponding to the integrated editor (as shown in FIG. 8(e)), that is, the always on display interface, the lock screen interface, and the home screen of the electronic device 800 are displayed in sequence. For example, the user may perform an operation of sliding left or right on the display of the electronic device 800 to preview or further edit the always on display interface, the lock screen interface, and the home screen of the electronic device 800. It can be learned from the page that both a lock screen wallpaper and a home screen wallpaper of the electronic device 800 are modified to the wallpaper 5, and a wallpaper of the always on display interface adapted to the lock screen interface is also modified to the wallpaper 5.

In some embodiments, after the user taps the control 801 in the interface shown in FIG. 8(c), the display of the electronic device 800 switches to the interface shown in FIG. 8(d). In the interface, applying the wallpaper to the lock screen interface and the home screen is automatically ticked. If the user does not want to apply the selected wallpaper to the lock screen interface, the user may tap the control 802 to untick. If the user does not want to apply the selected wallpaper to the home screen, the user may tap the control 803 to untick.

It should be understood that this embodiment of this application is merely an example description of modifying a wallpaper in a process of editing a plurality of interfaces of a same theme in an integrated manner, and does not constitute a limitation on a specific operation manner of modifying the wallpaper. The user may alternatively modify the wallpaper and perform overall preview on an integrated editing page by performing another operation. This is not limited in this application.

It may be understood that the wallpaper is one of general elements throughout the theme. When the user enters the wallpaper editing interface by using the editable option "Wallpaper", changes the wallpaper, and taps "OK", applying the selected target wallpaper to both the lock screen and the home screen is automatically ticked. After the user selects "Apply", the integrated editor is shown. In this case, it can be seen that wallpapers of the lock screen and the home screen have been modified, and an always on display effect following the lock screen is also changed accordingly. This effect may be understood as an effect of automatically matching the theme set by the integrated editor.

In this embodiment of this application, a plurality of interfaces of a same theme may be displayed in a same interface by using the integrated editor, and the user may preview an overall matching effect of the plurality of interfaces in the interface. When the user wants to modify one or more interfaces in the plurality of interfaces, the user may enter an editing page of a corresponding theme element by using an editable option associated with the corresponding interface. After editing is completed, the display interface of the electronic device returns to the integrated editor page, that is, returns to an interface in which the plurality of interfaces of the same theme are simultaneously displayed, so that the user can preview an overall matching effect of a modified interface in the interface. For example, the user may enter a wallpaper editing page by using the editable option "Wallpaper" corresponding to the lock screen interface, select a target wallpaper, and change a current wallpaper to the target wallpaper. After editing is completed, the integrated editor is shown, and the user can preview a matching effect of the target wallpaper in a theme set in the returned interface. Therefore, the user can be assisted in selecting the wallpaper. After the user is satisfied with the matching effect, theme editing is ended in a unified manner, and then a modified theme is applied to the electronic device. In this way, "one-step" theme setting can be implemented, and the user does not need to perceive a matching effect by using an actual application effect, thereby avoiding that the user achieves a target matching effect by repeatedly performing setting operations a plurality of times.

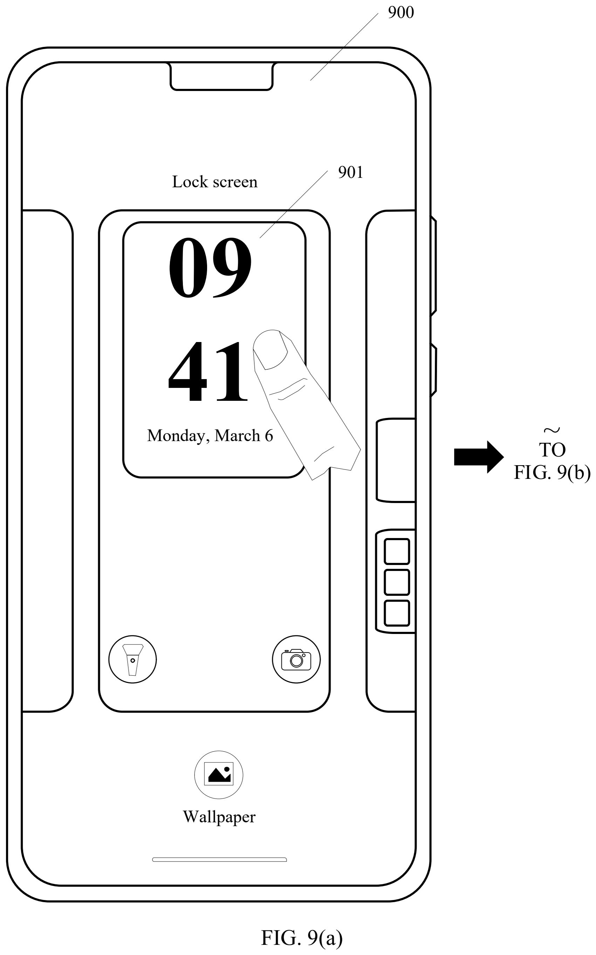

For example, FIG. 9(a) to FIG. 9(f) are a diagram of an interface for editing a clock pattern by using an integrated editor according to an embodiment of this application.

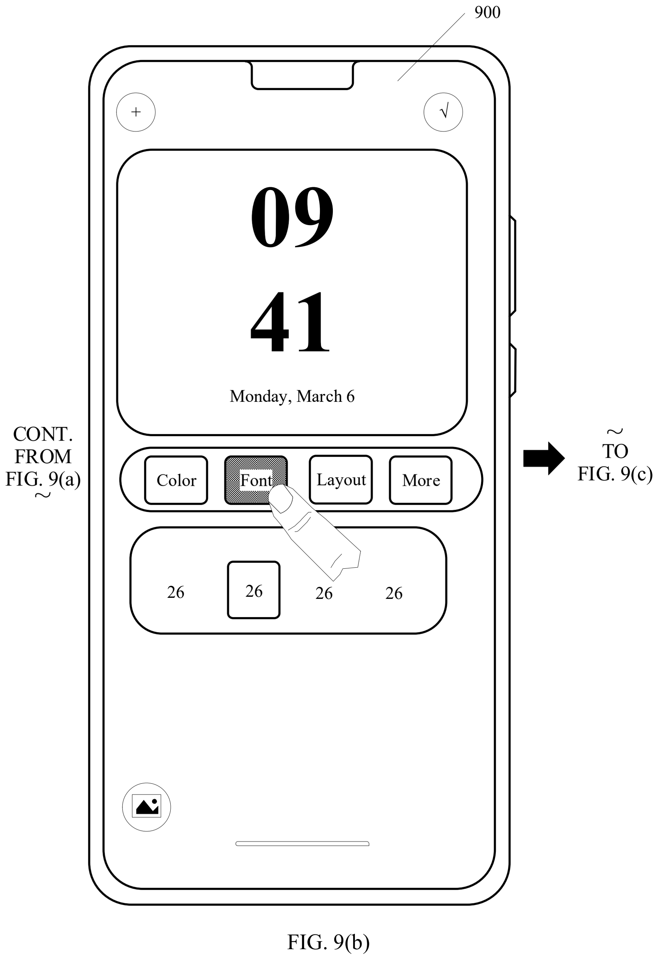

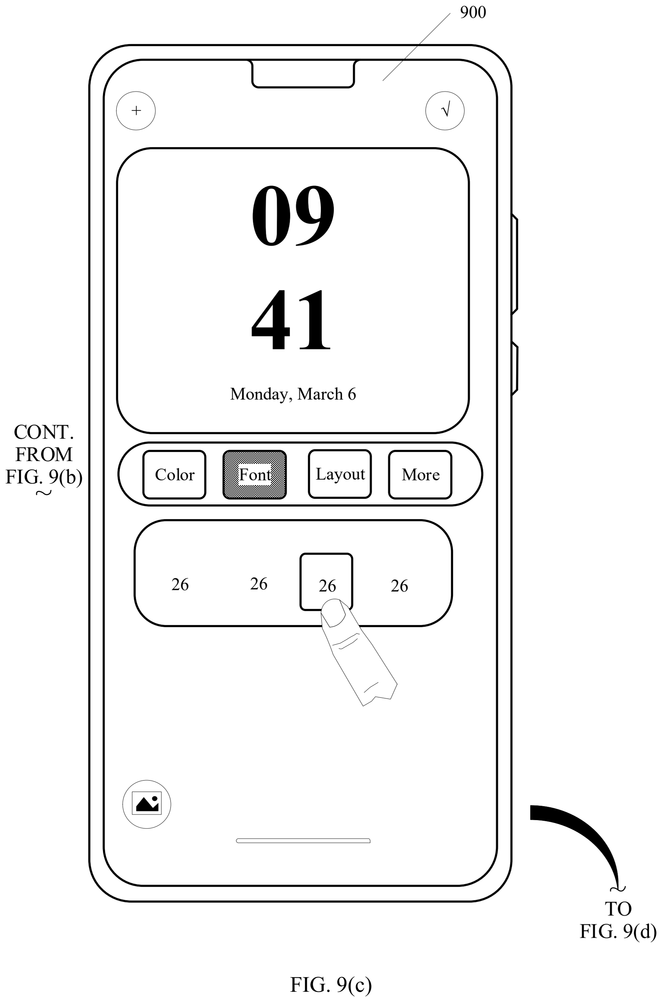

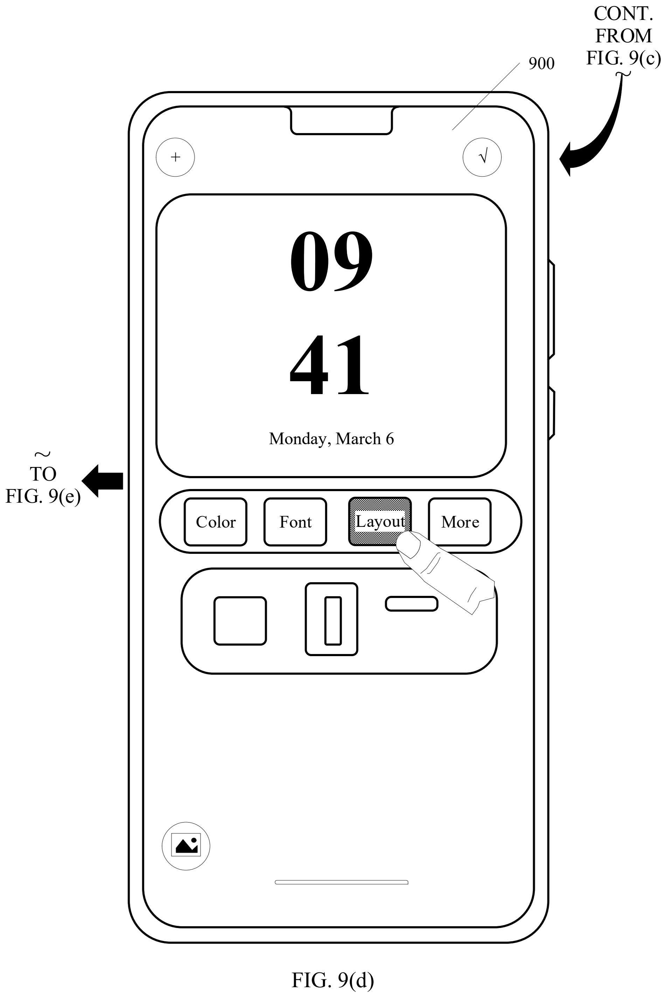

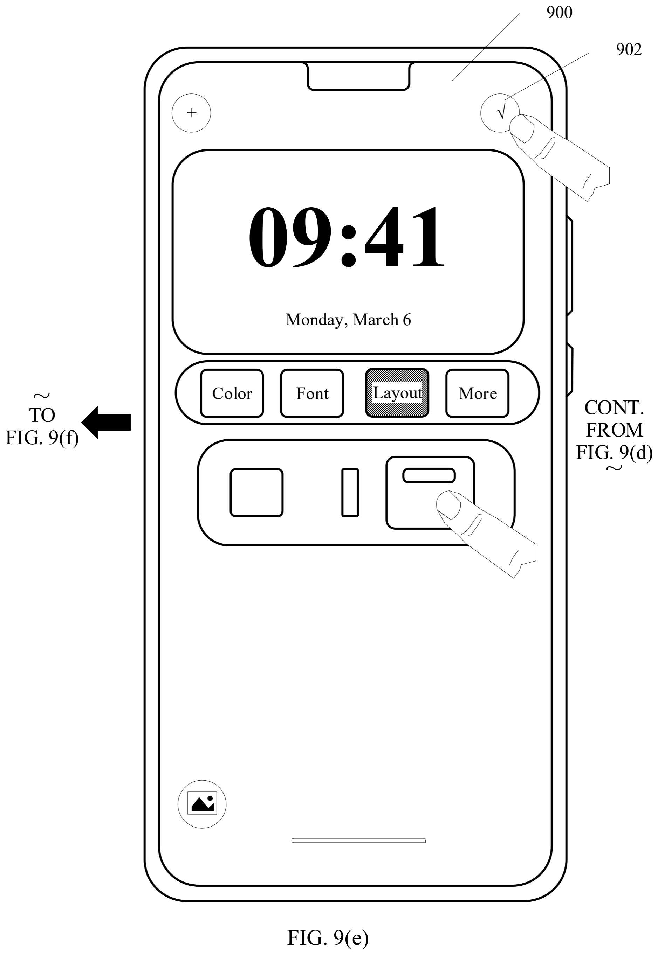

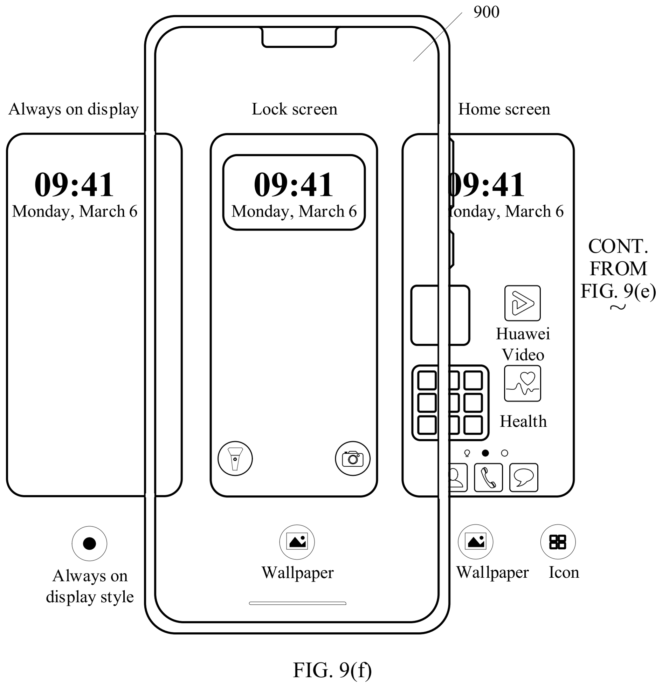

As shown in FIG. 9(a), a display interface of an electronic device 900 displays an editing page corresponding to integrated editing of an always on display interface, a lock screen interface, and a home screen. This may also be described as follows: The always on display interface, the lock screen interface, and the home screen of the electronic device 900 are located in an integrated editor. Currently, the lock screen interface in the three interfaces is displayed on a display, and the always on display interface and the home screen are not displayed simultaneously with the lock screen interface due to limited display space of the electronic device. The currently displayed lock screen interface is associated with an editable option "Wallpaper", and a time display area 901 in the lock screen interface is also an editable area. When a user wants to edit a clock pattern displayed in the lock screen interface, the user may tap the time display area 901, to switch the display interface of the electronic device 900 to an interface shown in FIG. 9(b). In the interface, a plurality of editable options related to the clock pattern are displayed, and the plurality of editable options may be, for example, "Color", "Font", "Layout", or "More". When the user wants to modify a current time display font, the user may tap the editable option "Font". In this case, a plurality of font options associated with the font are displayed in the display interface of the electronic device 900, and it may be further seen that a current font is a second font in the plurality of font options. If the user wants to change the current time display font to a third font in the plurality of font options, the user may tap the third font in the plurality of font options. In this case, the current time display font displayed in the lock screen interface of the electronic device 900 is changed to the third font in the plurality of font options (as shown in FIG. 9(c)). When the user wants to continue to modify a current time display layout, the user may tap the editable option "Layout". In this case, the display interface of the electronic device 900 is switched to an interface shown in FIG. 9(d). In the interface, a plurality of layout options associated with the layout are displayed, and it may be further seen that a current time layout is a second layout in the plurality of layout options. If the user wants to modify the current time display font to a third layout in the plurality of layout options, the user may tap the third layout in the plurality of layout options. In this case, the current time display layout displayed in the lock screen interface of the electronic device 900 is modified to the third layout in the plurality of layout options (as shown in FIG. 9(e)). When the user completes editing of the clock pattern, the user may tap a complete control 902 in an interface shown in FIG. 9(e). In this case, the display interface of the electronic device 900 returns to a display interface of the integrated editor shown in FIG. 9(f). In the interface, it can be seen that a clock pattern in always on display, a clock pattern on the lock screen page, and a clock pattern on the home screen that correspond to the electronic device 900 are all modified to the clock pattern adjusted by the user, that is, time display fonts and layouts in the three interfaces are all modified. In the interface, the user can preview a modified theme set.

It may be understood that time display is one of general elements throughout the theme. When the user modifies the clock pattern by using any one of the plurality of interfaces of the theme, and taps "OK", applying the modified clock pattern to both the lock screen and the home screen is automatically ticked (certainly, the user may alternatively cancel application to the lock screen interface or the home screen in an untick manner according to a requirement of the user). After the user selects "Apply", the integrated editor is shown. In this case, it can be seen that wallpapers of the lock screen interface and the home screen have been modified, and an always on display effect following the lock screen is also changed accordingly. This effect may be understood as an effect of automatically matching the theme set by the integrated editor.

It should be understood that this embodiment of this application is merely an example description of modifying a clock pattern in a process of editing a plurality of interfaces of a same theme in an integrated manner, and does not constitute a limitation on a specific operation manner of modifying the clock pattern. The user may alternatively modify the clock pattern and perform overall preview on an integrated editing page by performing another operation. This is not limited in this application.

It should be further understood that editable options of the clock pattern include but are not limited to: color, font, layout, other information, and the like. More corresponding options are presented when a corresponding editable option is tapped. After an option is selected, a preview effect is directly presented in a current interface.

In this embodiment of this application, a plurality of interfaces of a same theme may be displayed in a same interface by using the integrated editor, and the user may preview an overall matching effect of the plurality of interfaces in the interface. When the user wants to modify one or more interfaces in the plurality of interfaces, the user may enter an editing page of a corresponding theme element by using an editable option associated with the corresponding interface. After editing is completed, the display interface of the electronic device returns to the integrated editor page, that is, returns to an interface in which the plurality of interfaces of the same theme are simultaneously displayed, so that the user can preview an overall matching effect of a modified interface in the interface. For example, the user may enter a clock pattern editing page by tapping a time display area in the lock screen interface. After editing is completed, the integrated editor is shown, and the user can preview a matching effect of a modified clock pattern in a theme set in the returned interface. Therefore, the user can be assisted in selecting the clock pattern. After the user is satisfied with the matching effect, theme editing is ended in a unified manner, and then a modified theme is applied to the electronic device. In this way, "one-step" theme setting can be implemented, and the user does not need to perceive a matching effect by using an actual application effect, thereby avoiding that the user achieves a target matching effect by repeatedly performing setting operations a plurality of times.

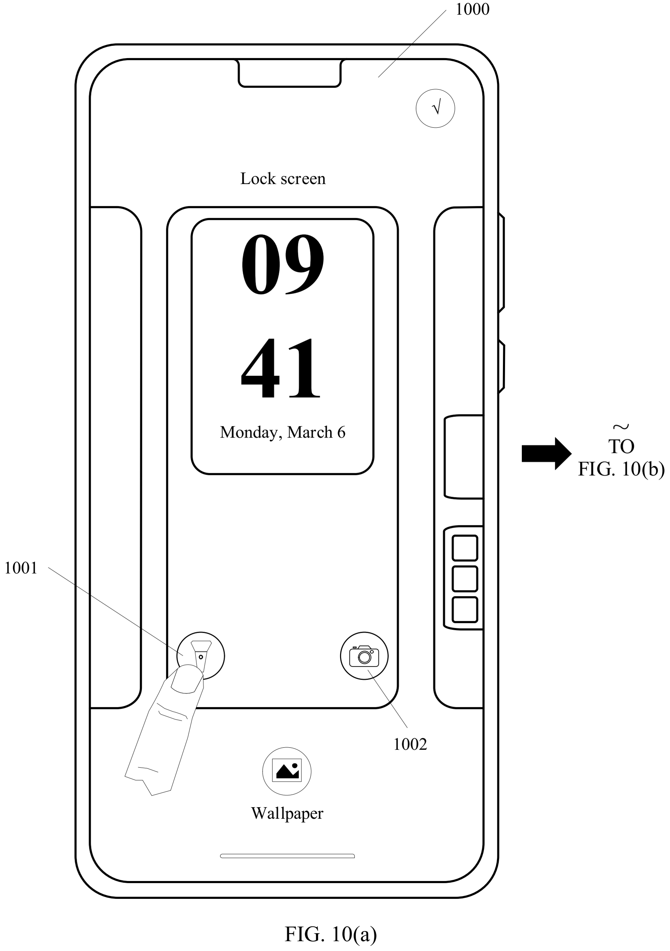

For example, FIG. 10(a) to FIG. 10(c) are a diagram of an interface for setting a shortcut function of a lock screen page by using an integrated editor according to an embodiment of this application.

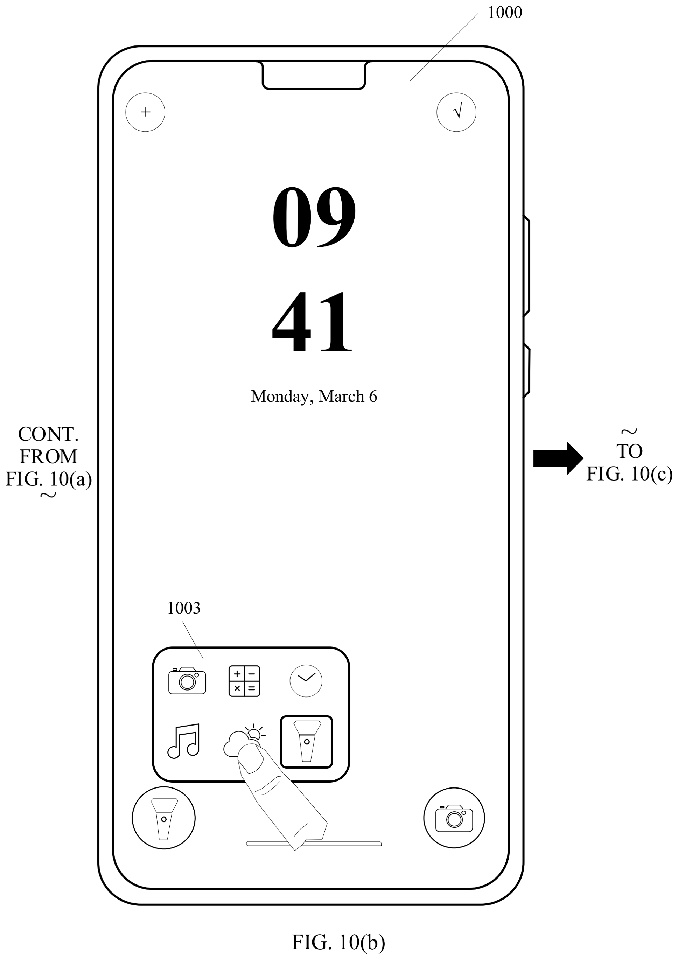

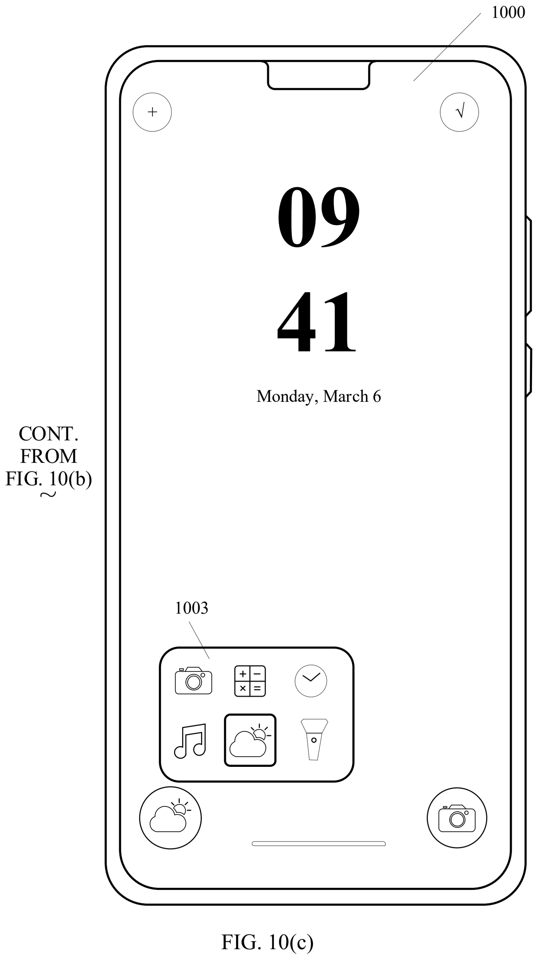

As shown in FIG. 10(a), a display interface of an electronic device 1000 displays an editing page corresponding to integrated editing of an always on display interface, a lock screen interface, and a home screen. A shortcut control 1001 and a shortcut control 1002 are displayed in a preview image of the lock screen interface. A shortcut function currently corresponding to the shortcut control 1001 is a flashlight function, and a shortcut function currently corresponding to the shortcut control 1002 is a camera function. A user may tap a shortcut control in the lock screen interface to enter a corresponding shortcut function use interface. When the user wants to modify a function of the shortcut control 1001, the user may switch, by tapping the control 1001, the display interface of the electronic device 1000 to an interface shown in FIG. 10(b). A shortcut option selection box 1003 is displayed in the interface. The selection box 1003 displays a plurality of selectable shortcut function icons, for example, a camera icon, a calculator icon, a clock icon, a weather icon, a music icon, and a flashlight icon. The shortcut function currently corresponding to the shortcut control 1003 is flashlight. When the user taps the weather icon in the selection box 1003, the shortcut function corresponding to the control 1002 is switched from flashlight to weather. A corresponding interface is shown in FIG. 10(c).

It should be understood that the selectable shortcut functions displayed in the selection box 1003 are merely examples for description, and the current shortcut function corresponding to the shortcut control may be further modified to another system function or another application function in the foregoing manner, or may be modified to be not corresponding to any shortcut function. When the shortcut control does not correspond to any shortcut function, the shortcut control may not be displayed.

Similarly, a manner of modifying the shortcut function corresponding to the shortcut control 1002 may be the same as a manner of modifying the shortcut function corresponding to the shortcut control 1001.

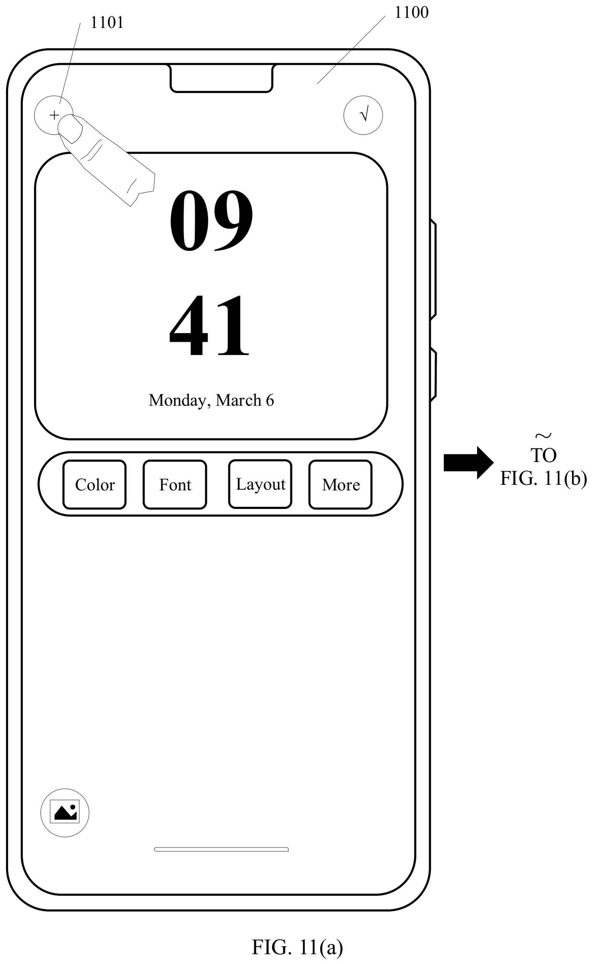

For example, FIG. 11(a) to FIG. 11(e) are a diagram of an interface for adding a card to a lock screen page by using an integrated editor according to an embodiment of this application.

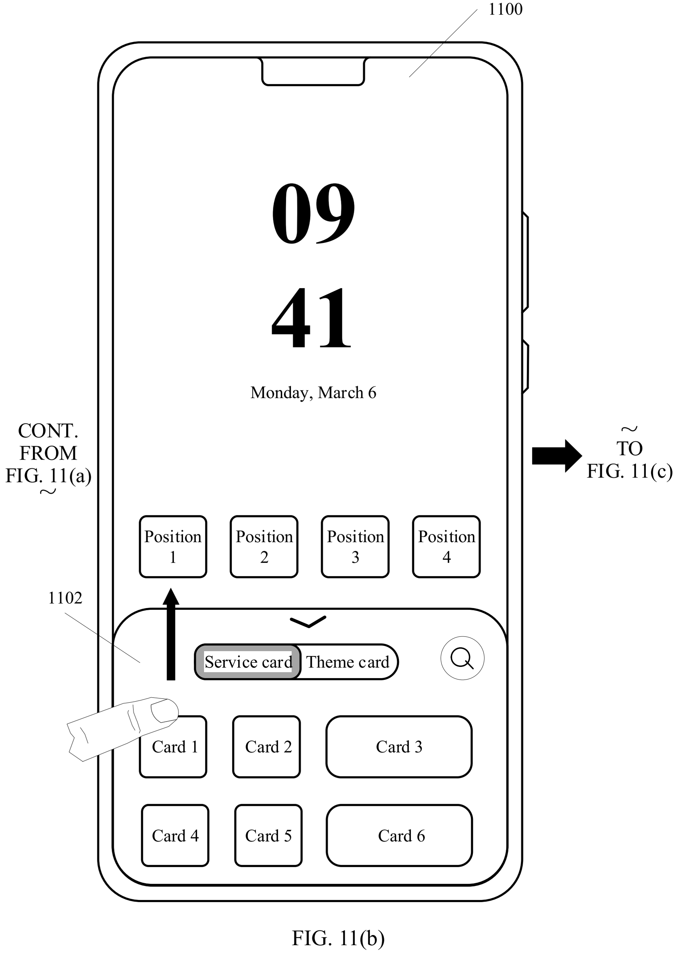

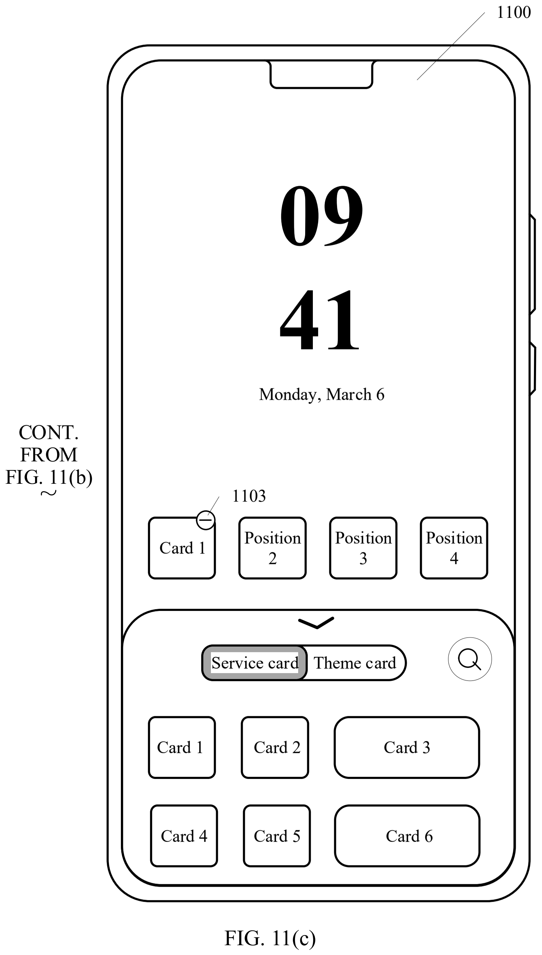

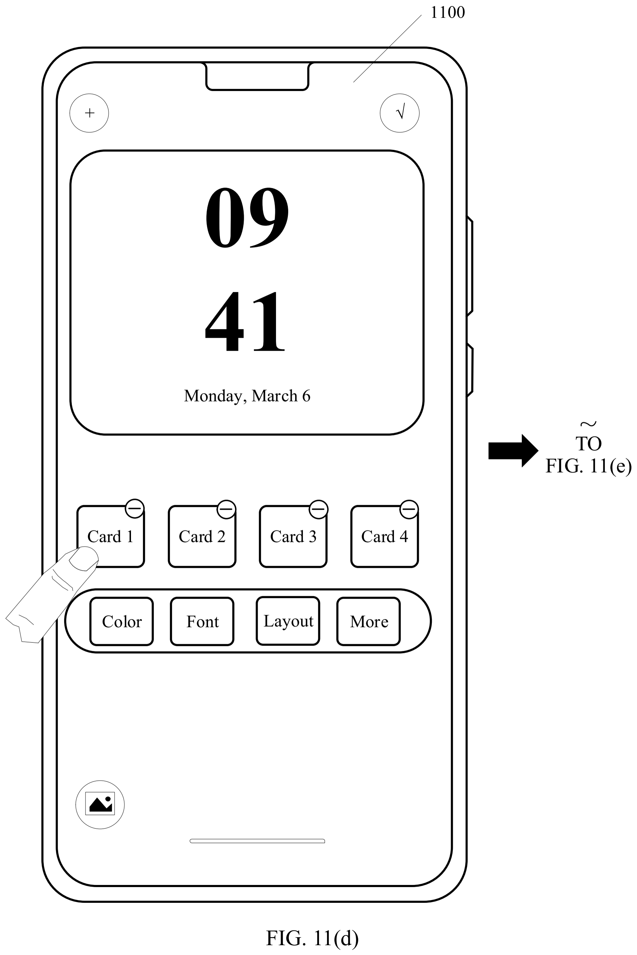

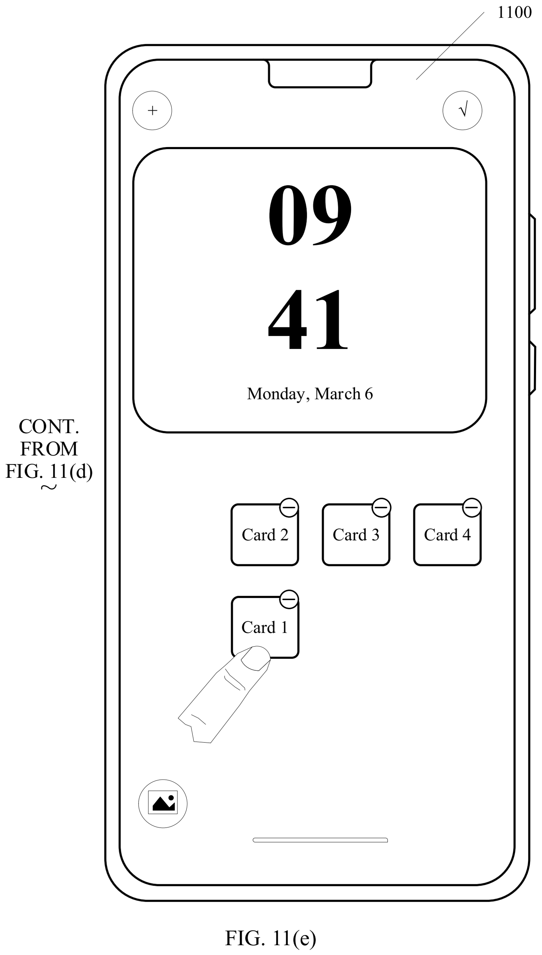

As shown in FIG. 11(a), a display interface of an electronic device 1100 displays a lock screen setting interface. When a user wants to add a card to the lock screen interface, the user may tap an add control 1101 in the interface to switch the display interface of the electronic device 1100 to an interface shown in FIG. 11(b). A card selection box 1102 is displayed in the interface, and a plurality of recommended cards of a plurality of types may be displayed in the selection box 1102. These cards may be, for example, service cards or theme cards. In addition, one or more recommended card placement positions may be further displayed in the interface, for example, a position 1, a position 2, a position 3, and a position 4 shown in FIG. 11(b). When the user adds a card 1 (1103) of a service card category to the position 1 through tapping or dragging, the display interface of the electronic device 1100 is switched to an interface shown in FIG. 11(c). In the interface, the card 1 is displayed at the position 1. Similarly, the user may add a plurality of cards to the lock screen interface. After the user adds the plurality of cards to the lock screen interface, the display interface of the electronic device 1100 may be, for example, an interface shown in FIG. 11(c). On this basis, the user may further move a position of a card through touching and holding and dragging. Refer to interfaces shown in FIG. 11(d) and FIG. 11(e).

In some embodiments, the electronic device 1100 determines a recommended card placement position by using a smart aesthetic function.

It should be understood that this embodiment of this application is merely an example for describing the card in the lock screen interface, and does not constitute a limitation on a manner of setting the card in the lock screen interface.

In some embodiments, the user may further adjust a time component in the lock screen interface through dragging. In a process of dragging the time component, home screen reflow logic may be reused.

After the home screen reflow logic is reused, in an example, if a card 2 is displayed at the position 2, when the user drags the card 1 to the position 2, a display position of the card 2 that is originally displayed at the position 2 is adaptively changed, and the card 1 is displayed at the position 2.

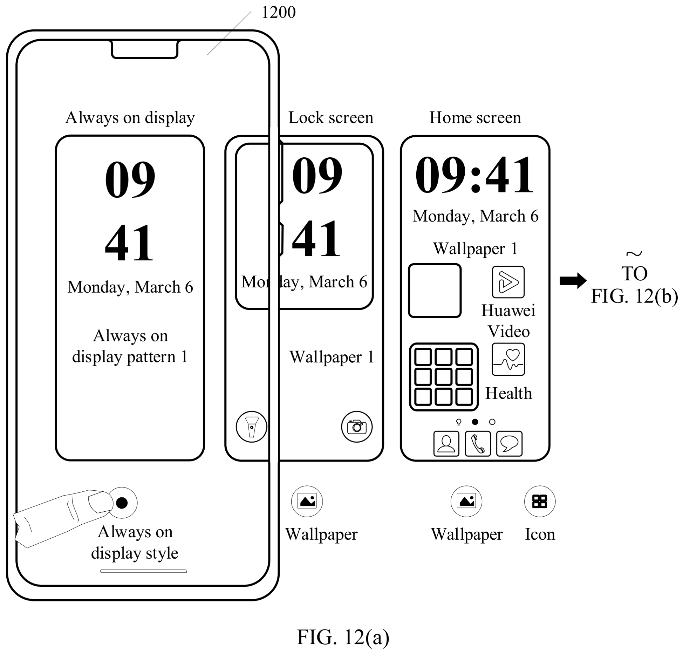

For example, FIG. 12(a) to FIG. 12(c) are a diagram of an interface for editing an always on display pattern by using an integrated editor according to an embodiment of this application.

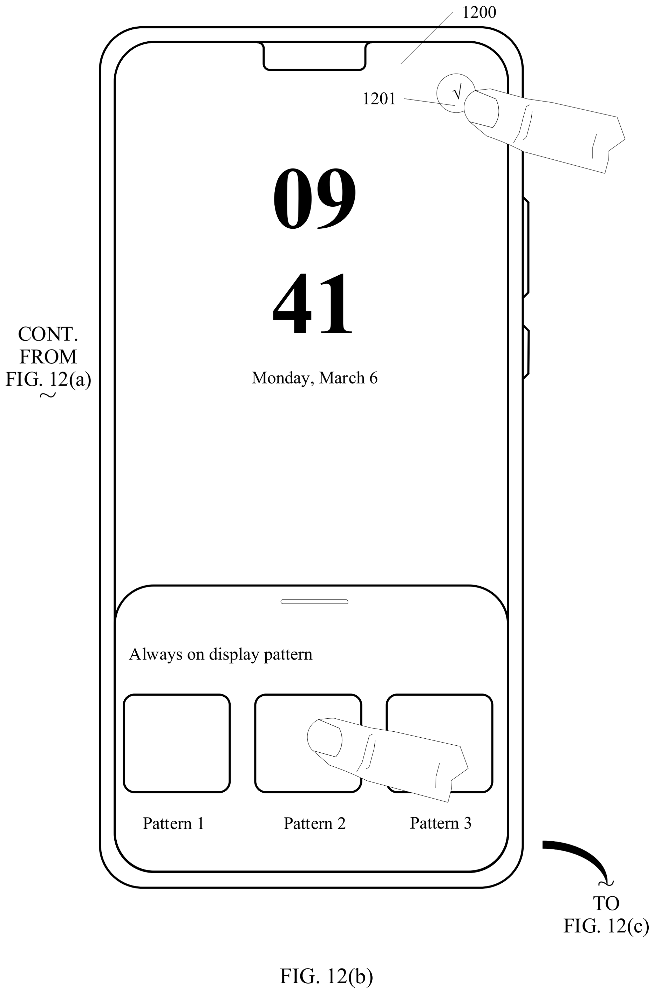

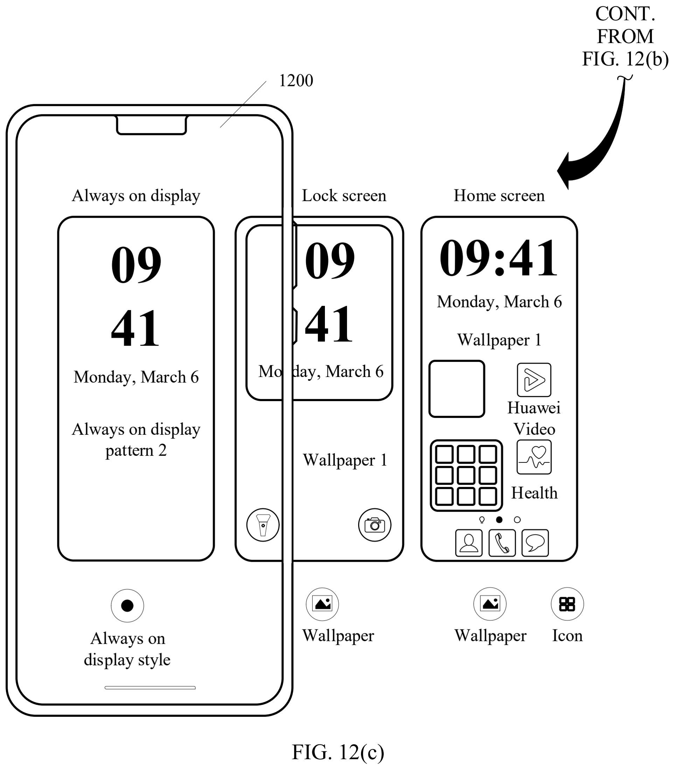

As shown in FIG. 12(a), a display interface of an electronic device 1200 displays an editing page corresponding to integrated editing of an always on display interface, a lock screen interface, and a home screen. This may also be described as follows: The always on display interface, the lock screen interface, and the home screen of the electronic device 1200 are located in an integrated editor. Currently, the always on display interface in the three interfaces is displayed on a display, and the lock screen interface and the home screen are not displayed simultaneously with the always on display interface due to limited display space of the electronic device. The currently displayed always on display interface is associated with an editable option "Always on display style", and an always on display pattern currently used by the electronic device 1200 is an always on display pattern 1. When the user wants to modify the current always on display pattern, the user may tap the editable option "Always on display style", to switch the display interface of the electronic device 1200 to an always on display pattern setting interface shown in FIG. 12(b). In the interface, a plurality of always on display pattern options are displayed, for example, an always on display pattern 1, an always on display pattern 2, and an always on display pattern 3. The user may select a preferred always on display pattern from the plurality of always on display patterns. When the user wants to switch the currently used always on display pattern from the always on display pattern 1 to the always on display pattern 2, the user may tap "Pattern 2" in the interface shown in FIG. 12(b), and further tap a complete control 1201. In this case, the display interface of the electronic device 1200 returns to an integrated editor shown in FIG. 12(c). In the interface, it can be seen that the always on display pattern displayed in the always on display interface corresponding to the electronic device 1200 is modified to the always on display pattern 2, and the lock screen interface and the home screen are not changed. Through the integrated editor interface, the user can preview a theme set after the always on display pattern is modified.

It may be understood that the always on display pattern affects only a display effect of the always on display interface, and does not affect display effects of the lock screen interface and the home screen. Therefore, after the always on display pattern is modified, only the effect of the always on display interface changes, and display effects of other interfaces of the same theme do not change synchronously.

Similarly, when an element, such as "Lock screen widget" in the lock screen interface or "Icon" on the home screen, that affects a display effect of only a single interface is modified by using the integrated editor interface, after editing of such a single option is completed, the display effect of only the single interface changes, and display effects of other interfaces of the same theme are not synchronously modified.

It should be understood that this embodiment of this application is merely an example description of modifying an always on display pattern in a process of editing a plurality of interfaces of a same theme in an integrated manner, and does not constitute a limitation on a specific operation manner of modifying the always on display pattern. The user may alternatively modify the always on display pattern and perform overall preview on an integrated editing page by performing another operation. This is not limited in this application.

In this embodiment of this application, a plurality of interfaces of a same theme may be displayed in a same interface by using the integrated editor, and the user may preview an overall matching effect of the plurality of interfaces in the interface. When the user wants to modify one or more interfaces in the plurality of interfaces, the user may enter an editing page of a corresponding theme element by using an editable option associated with the corresponding interface. After editing is completed, the display interface of the electronic device returns to the integrated editor page, that is, returns to an interface in which the plurality of interfaces of the same theme are simultaneously displayed, so that the user can preview an overall matching effect of a modified interface in the interface. For example, the user may enter an always on display pattern editing page by tapping a time display area in the always on display interface. After editing is completed, the integrated editor is shown, and the user can preview a matching effect of a modified always on display pattern in a theme set in the returned interface. Therefore, the user can be assisted in selecting the always on display pattern. After the user is satisfied with the matching effect, theme editing is ended in a unified manner, and then a modified theme is applied to the electronic device. In this way, "one-step" theme setting can be implemented, and the user does not need to perceive a matching effect by using an actual application effect, thereby avoiding that the user achieves a target matching effect by repeatedly performing setting operations a plurality of times.

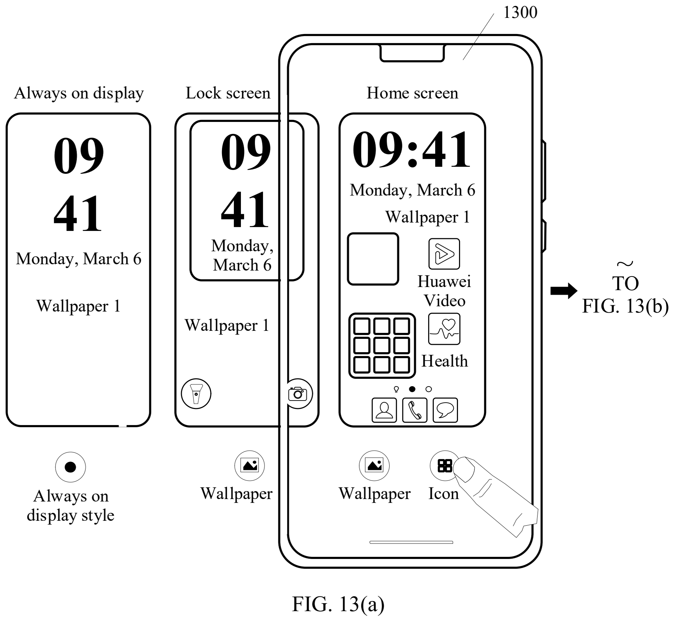

For example, FIG. 13(a) to FIG. 13(c) are a diagram of an interface for editing an icon by using an integrated editor according to an embodiment of this application.

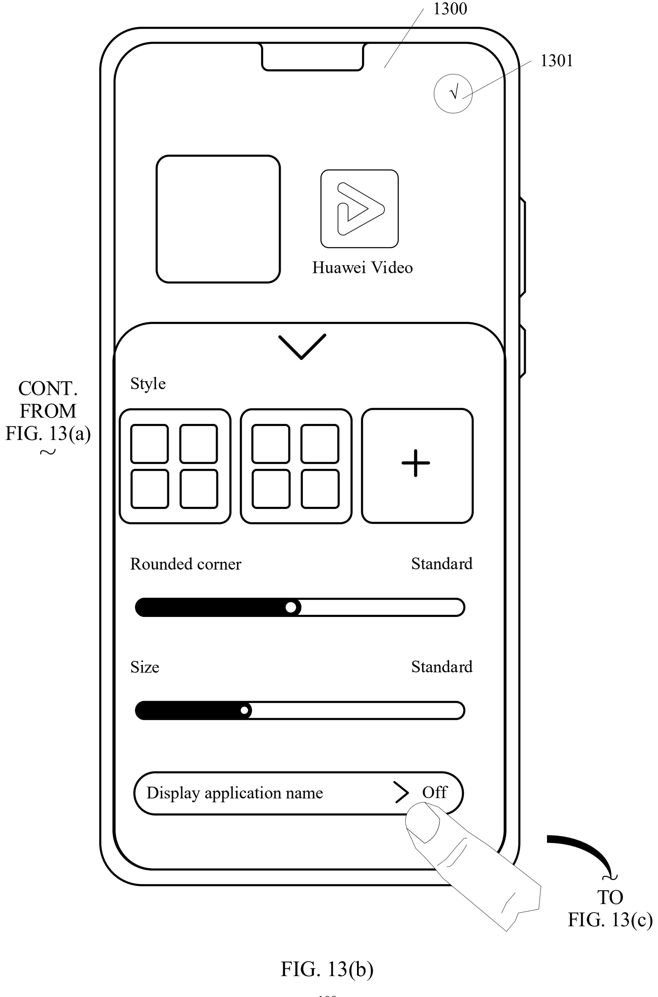

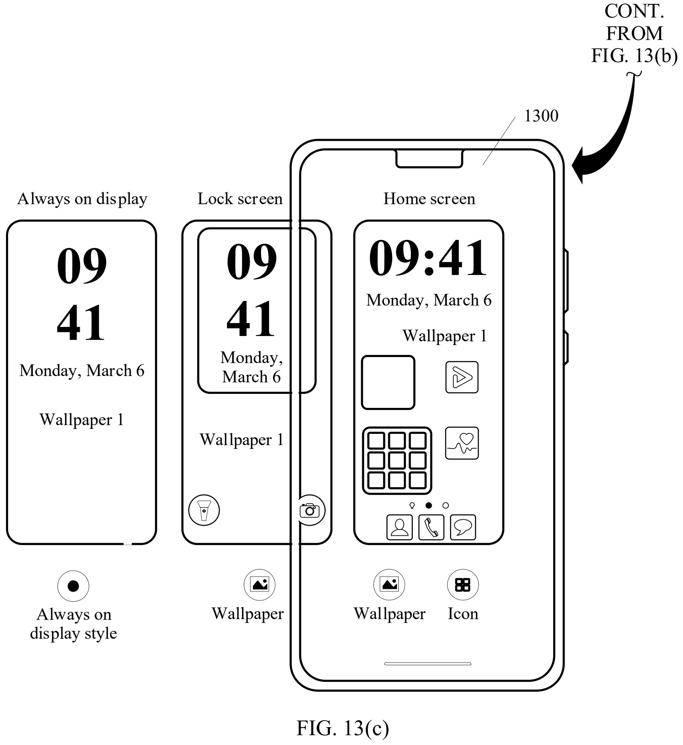

As shown in FIG. 13(a), a display interface of an electronic device 1300 displays an editing page corresponding to integrated editing of an always on display interface, a lock screen interface, and a home screen. This may also be described as follows: The always on display interface, the lock screen interface, and the home screen of the electronic device 1300 are located in an integrated editor. Currently, the home screen in the three interfaces is displayed on a display, and the always on display interface and the lock screen interface are not displayed simultaneously with the home screen due to limited display space of the electronic device. The currently displayed home screen is associated with an editable option "Wallpaper" and an editable option "Icon". When a user wants to modify an icon on the current home screen, the user may tap the editable option "Icon", to switch the display interface of the electronic device 1300 to an icon setting interface shown in FIG. 13(b). In the interface, a plurality of icon setting options are displayed, for example, an icon style setting option, an icon rounded corner setting option, an icon size setting option, and a setting option about whether to display an application name. On the current home screen of the electronic device 1300, an application name is displayed below an application icon. When the user does not want to display the application name below the application icon, the user may tap an option "Off" associated with "Display application name" in the interface shown in FIG. 13(b), and further tap a complete control 1301. In this case, the display interface of the electronic device 1300 returns to an integrated editor interface shown in FIG. 13(c). In this interface, it can be seen that the icon displayed on the home screen corresponding to the electronic device 1300 is modified to not display the application name, and the always on display interface and the lock screen interface do not change. Through the integrated editor interface, the user can preview a theme set after the icon is modified.

It may be understood that the icon affects only a display effect of the home screen, and does not affect display effects of the always on display interface and the lock screen interface. Therefore, after the icon is modified, only the effect of the home screen changes, and display effects of other interfaces of the same theme do not change synchronously.

It should be understood that this embodiment of this application is merely an example description of modifying an icon in a process of editing a plurality of interfaces of a same theme in an integrated manner, and does not constitute a limitation on a specific operation manner of modifying the icon. The user may alternatively modify the icon and perform overall preview on an integrated editing page by performing another operation. This is not limited in this application.

In this embodiment of this application, a plurality of interfaces of a same theme may be displayed in a same interface by using the integrated editor, and the user may preview an overall matching effect of the plurality of interfaces in the interface. When the user wants to modify one or more interfaces in the plurality of interfaces, the user may enter an editing page of a corresponding theme element by using an editable option associated with the corresponding interface. After editing is completed, the display interface of the electronic device returns to the integrated editor page, that is, returns to an interface in which the plurality of interfaces of the same theme are simultaneously displayed, so that the user can preview an overall matching effect of a modified interface in the interface. For example, the user may enter an icon editing page by tapping the editable option "Icon" associated with the home screen. After editing is completed, the integrated editor is shown, and the user can preview a matching effect of a modified icon in a theme set in the returned interface. Therefore, the user can be assisted in setting the icon. After the user is satisfied with the matching effect, theme editing is ended in a unified manner, and then a modified theme is applied to the electronic device. In this way, "one-step" theme setting can be implemented, and the user does not need to perceive a matching effect by using an actual application effect, thereby avoiding that the user achieves a target matching effect by repeatedly performing setting operations a plurality of times.

It should be understood that the embodiments shown in FIG. 8(a) to FIG. 8(e) to FIG. 13(a) to FIG. 13(c) may be separately implemented, or may be implemented in combination. This is not limited in this application.

In embodiments of this application, through an integrated editor, a plurality of interfaces of a same theme can be located on a same editing page, and each interface is associated with an editable option of the interface. A user may edit a target interface by using an editable option associated with the target interface, may preview a matching effect of an edited theme set in an editing process, and may further repeatedly enter single option editing to adjust the theme based on the preview effect, without following a linear single option editing process. In addition, through the integrated editor, the user can implement separate setting of a specific element in a specific interface, for example, an element such as an icon or an always on display pattern that affects a display effect of only one interface, and can further automatically integrate single option editing for an interface into a set based on the theme, that is, synchronize single option editing for the interface to another interface that displays an element of the single option editing. For example, wallpaper editing for a lock screen interface may be synchronized to a home screen wallpaper and an always on display wallpaper, and clock pattern editing for a home screen may be synchronized to clock patterns in a lock screen interface and an always on display interface. In addition, an integrated editor page can support abundant customized editable options for the user to implement customized editing of a plurality of theme elements. The edited theme can be further stored in set. This method complies with an interface vision design of "theme selection->integrated editor->single option editing". A visual effect is presented from far to near and from small to large. An editing granularity is from a macro level to a detailed level, and complies with a customized editing habit of the user.

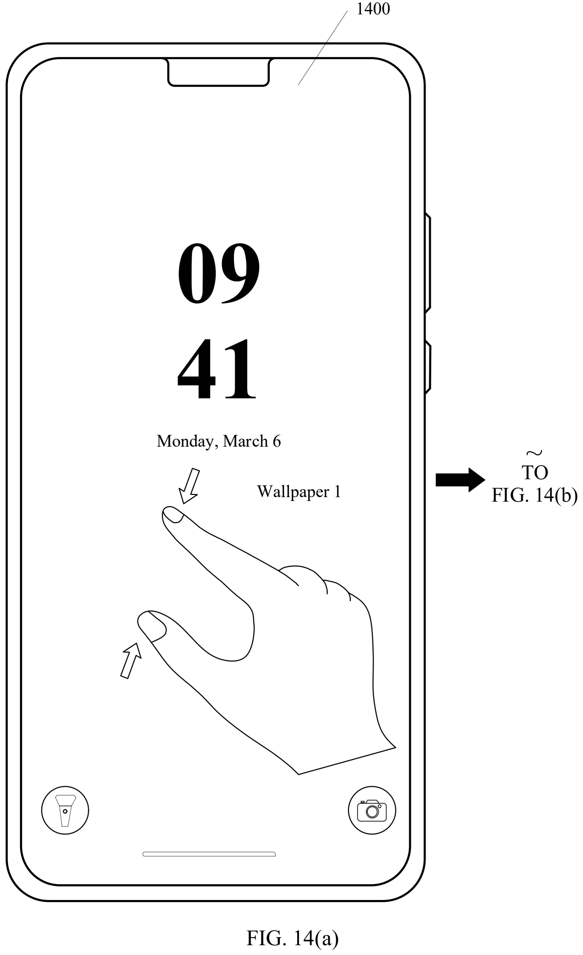

For example, FIG. 14(a) to FIG. 14(d) are a diagram of another operation procedure for triggering switching from a display interface of an electronic device to an interface corresponding to an integrated editor according to an embodiment of this application.

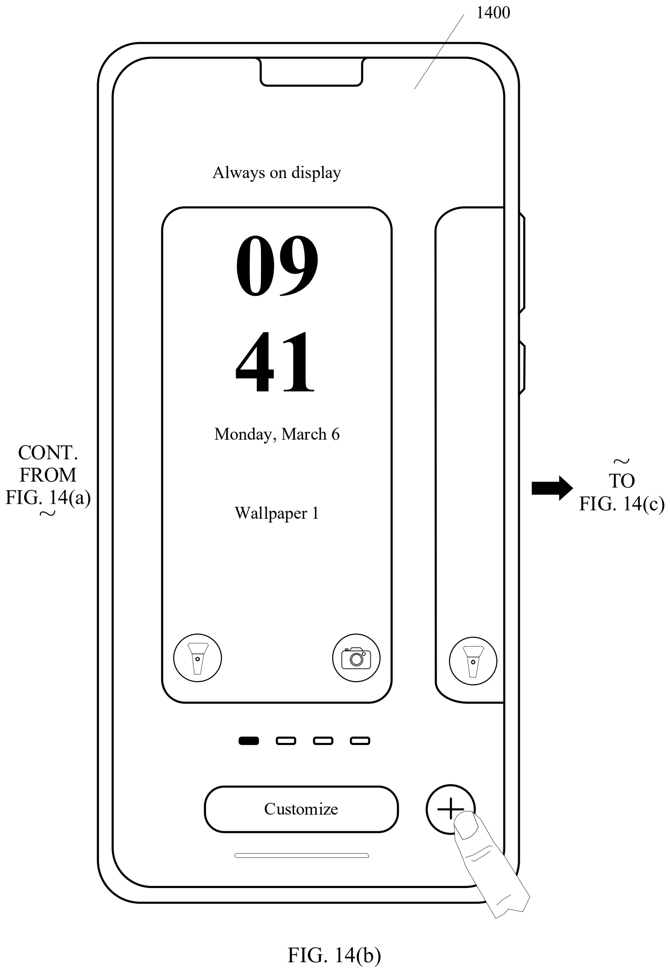

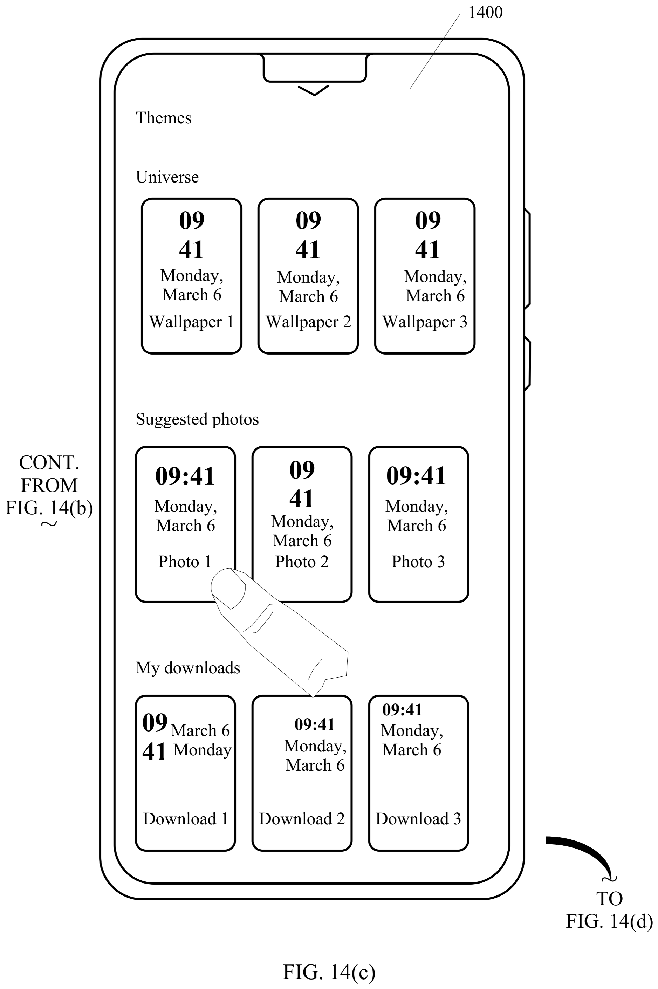

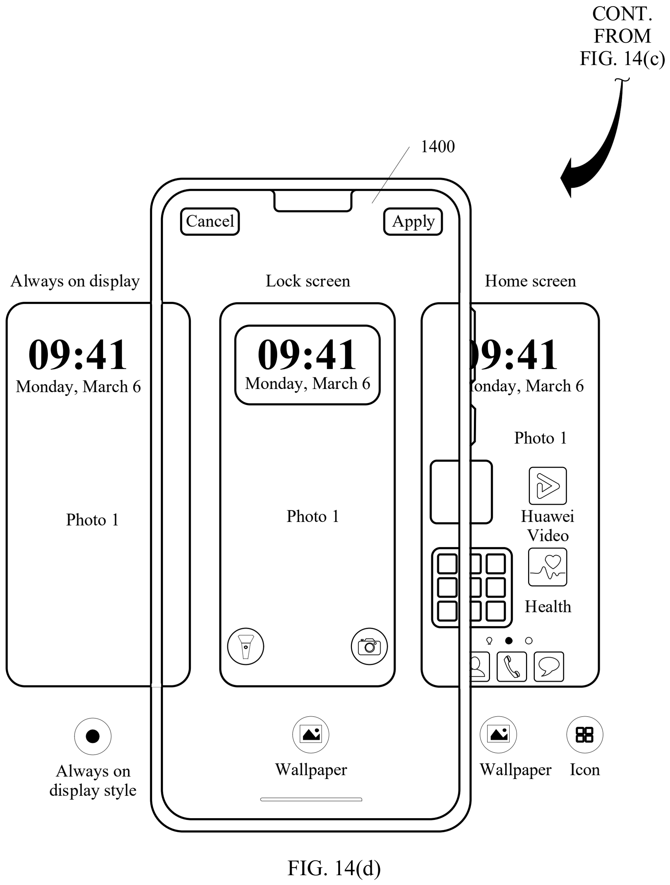

As shown in FIG. 14(a), a display of an electronic device 1400 displays a lock screen page, and a current wallpaper of the electronic device 1400 is a wallpaper 1. If a user wants to change a theme, the user may perform a double-finger pinch operation on the lock screen page, to switch a display interface of the electronic device 1400 to an interface shown in FIG. 14(b). The interface may be understood as a theme gallery interface, that is, an interface for the user to select a theme. The user may perform an operation of tapping a "+" control in the display interface shown in FIG. 14(b), to switch the display interface of the electronic device 1400 to a theme selection interface shown in FIG. 14(c). In the theme selection interface, a plurality of themes are displayed by category. The plurality of themes shown in the interface may be a plurality of themes that are not stored in the electronic device 1400, for example, may include a plurality of themes in an online theme "Universe" category, and may further include a plurality of themes in a "Suggested photos" category. The plurality of themes in the "Suggested photos" category may be themes generated after the electronic device 1400 automatically selects, from a gallery, pictures suitable for being used as a wallpaper, and automatically matches appropriate lock screen layouts and theme patterns with reference to picture features. A plurality of themes in a "My downloads" category may be further included. When the user wants to change a current theme of the electronic device 1400 to a theme corresponding to a photo 1 in the "Suggested photos" category, the user may tap the photo 1 in the interface shown in FIG. 14(c), to trigger the display interface of the electronic device 1400 to be switched to a page on which a plurality of interfaces of the theme corresponding to the photo 1 are simultaneously edited, that is, trigger to enter an integrated editor. The plurality of interfaces (as shown in FIG. 14(d)) of the theme corresponding to the photo 1 are previewed or edited in the integrated editor. The plurality of interfaces may include, for example, an always on display interface of the electronic device 1400, a lock screen interface of the electronic device 1400, and a home screen of the electronic device 1400. The always on display interface is associated with an editable option "Always on display style". The lock screen interface is associated with an editable option "Wallpaper". The home screen is associated with an editable option "Wallpaper" and an editable option "Icon". It can be seen from the page that wallpapers of the always on display interface, the lock screen interface, and the home screen of the electronic device 1400 are all changed from the original wallpaper 1 to the photo 1, and interface elements such as a clock pattern of the electronic device 1400 are also adaptively adjusted with the wallpaper change. For example, a clock layout is adjusted from a portrait layout to a landscape layout.

It should be understood that all interfaces of a same theme are not necessarily displayed on the display of the electronic device 1400 at the same time. Limited by display space of the electronic device 1400, only a part of interfaces in all the interfaces of the same theme can be displayed on the display, and the user may preview all the interfaces of the same theme by sliding left or right on the display. Alternatively, when display space of the electronic device 1400 is sufficient, all the interfaces of the same theme may be displayed on the display of the electronic device 1400 at the same time.

In some embodiments, after the user selects a target wallpaper in the interface shown in FIG. 14(c), the electronic device 1400 can crop the target wallpaper to appropriate image composition by using a smart aesthetic function. In an example, after the user selects, in the interface shown in FIG. 14(c), the theme corresponding to the photo 1, the wallpaper shown in FIG. 14(d) is the photo 1 that is cropped to appropriate image composition.

In this embodiment of this application, the electronic device can select a picture suitable for being used as a wallpaper from a gallery, and match a lock screen layout and a theme pattern that are suitable for the wallpaper picture, for recommendation to the user as a theme set. A plurality of themes corresponding to a plurality of pictures form a theme library. The user may select a favorite theme from the theme library, may preview an overall matching effect of the theme in the integrated editor, and may adjust a plurality of interface elements of the theme in the integrated editor according to a preference of the user. After the adjustment, an overall matching effect achieved through adjustment can be further previewed.

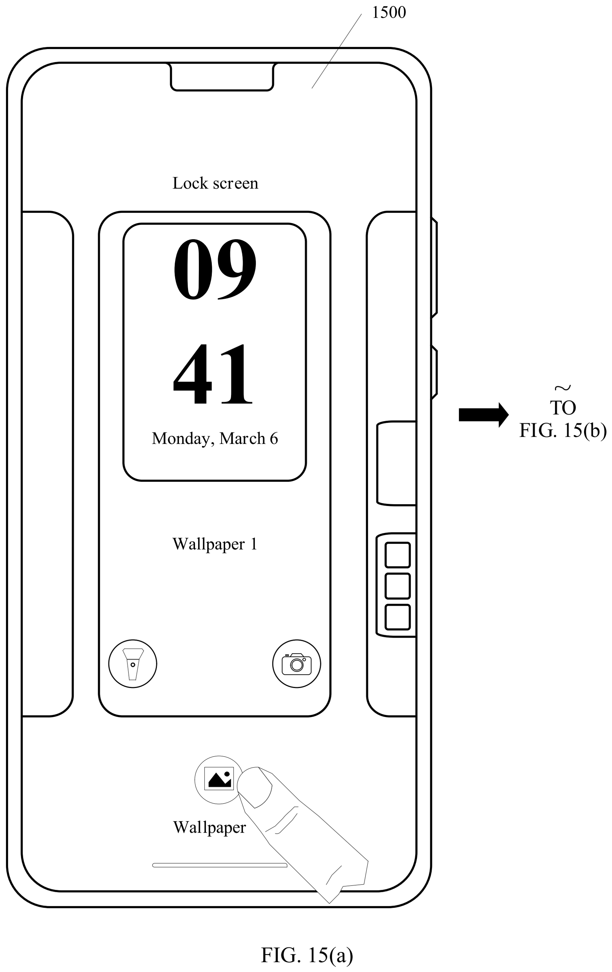

For example, FIG. 15(a) to FIG. 15(e) are a diagram of another interface for editing a wallpaper by using an integrated editor according to an embodiment of this application.

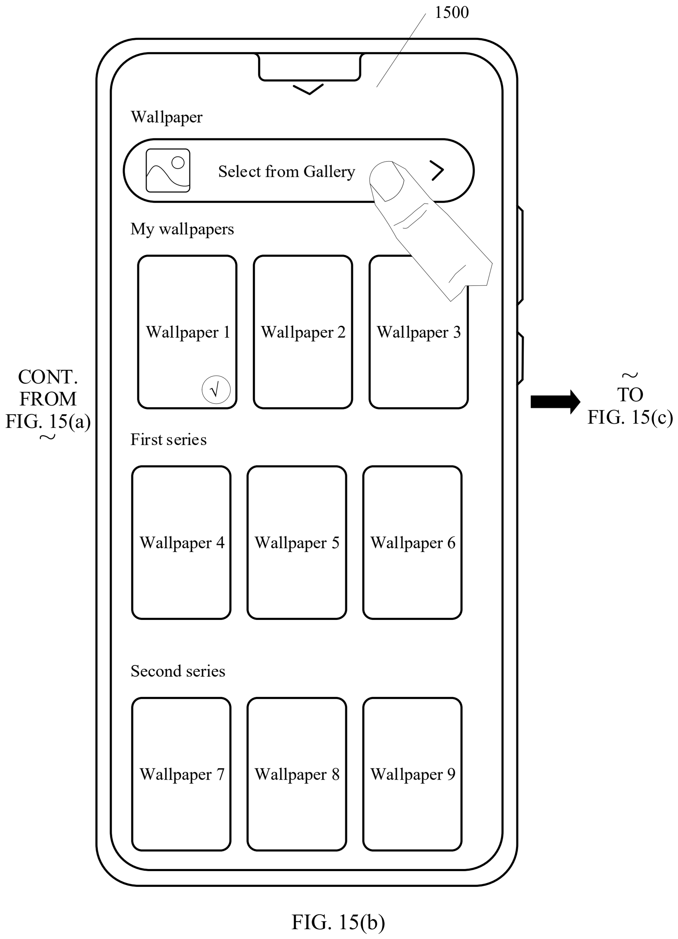

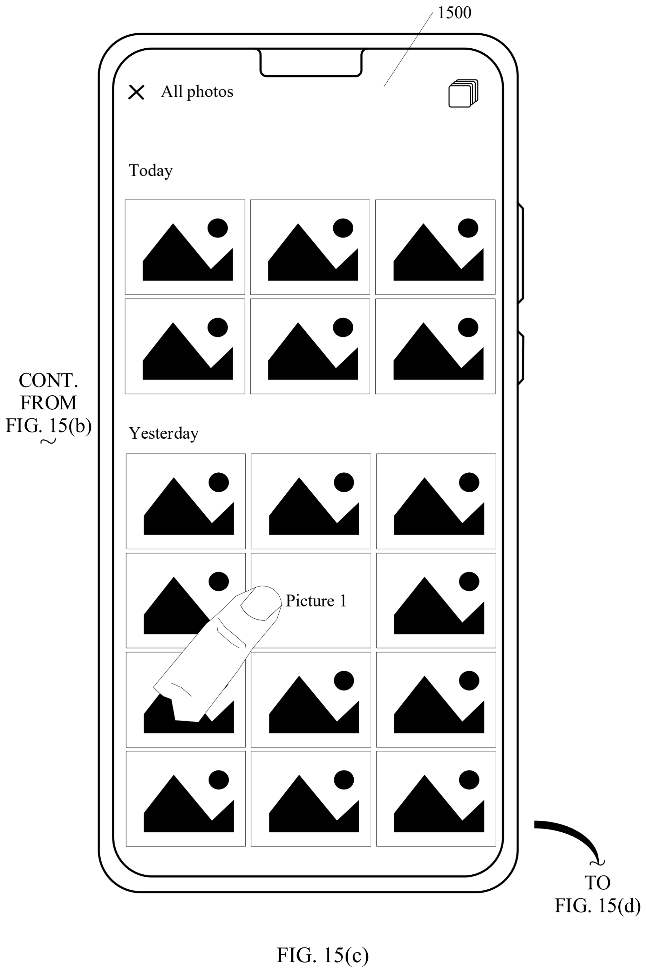

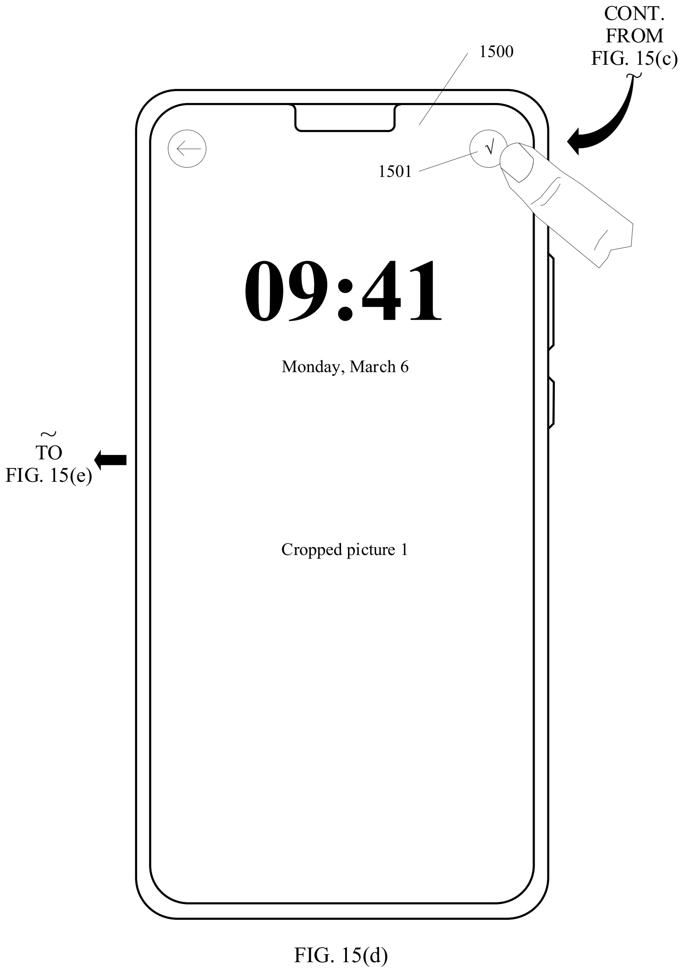

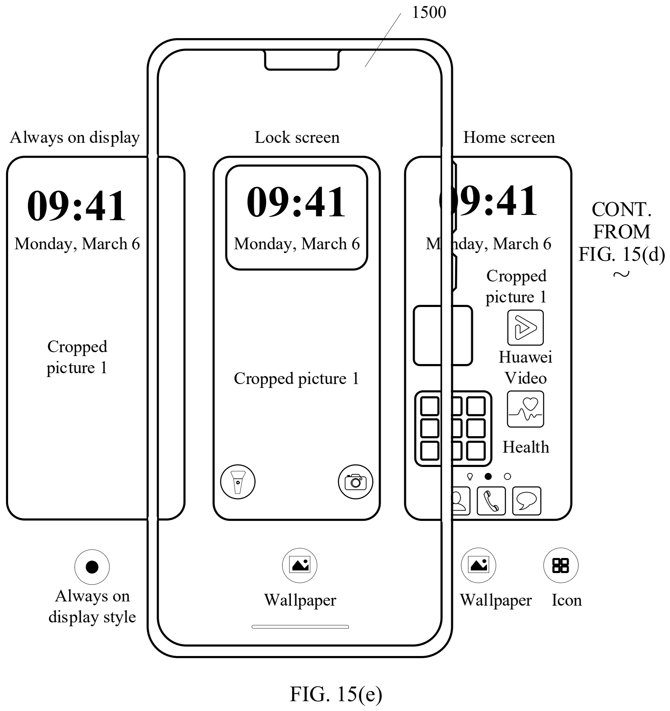

As shown in FIG. 15(a), a display interface of an electronic device 1500 displays an editing page corresponding to integrated editing of an always on display interface, a lock screen interface, and a home screen. This may also be described as follows: The always on display interface, the lock screen interface, and the home screen of the electronic device 1500 are located in an integrated editor. Currently, the lock screen interface in the three interfaces is displayed on a display, and the always on display interface and the home screen are not displayed simultaneously with the lock screen interface due to limited display space of the electronic device. The currently displayed lock screen interface is associated with an editable option "Wallpaper". When a user wants to change a wallpaper displayed in the lock screen interface, the user may tap the editable option "Wallpaper". In this case, the display interface of the electronic device 1500 is switched to a wallpaper selection interface shown in FIG. 15(b). In the wallpaper selection interface, a plurality of selectable wallpapers are displayed by category. For example, a plurality of wallpapers in a "My wallpapers" category may be displayed, a plurality of wallpapers in a "First series" category may be further displayed, and a plurality of wallpapers in a "Second series" category may be further displayed. In addition, an entry for selecting a wallpaper from a gallery may be further provided for the user, that is, a "Select from gallery" control is displayed. It can be learned from the interface shown in FIG. 15(b) that a lock screen wallpaper currently used by the electronic device 1500 is a wallpaper 1 in the "My wallpapers" category. On this basis, when the user wants to select a wallpaper from the gallery, the user may tap the "Select from gallery" control. In response to an operation of tapping the "Select from gallery" control by the user, the display interface of the electronic device 1500 is switched to a display interface shown in FIG. 15(c). The display interface is a gallery display interface of the electronic device 1500, and a plurality of pictures in the gallery are displayed in the interface. When the user chooses to set a picture 1 in the gallery as the lock screen wallpaper of the electronic device 1500, the user may tap the picture 1 shown in FIG. 15(c). In this case, the display interface of the electronic device 15 is switched to a wallpaper preview interface shown in FIG. 15(d). It can be learned from the interface that the wallpaper in the lock screen interface is changed to the picture 1, which is the picture 1 that is cropped to appropriate image composition. Based on the changed wallpaper, the electronic device automatically adjusts a pattern, a layout, or a display position of an interface element such as a clock, to better match the changed wallpaper. When the user is satisfied with the wallpaper display effect, the user may tap a complete control 1501 shown in FIG. 15(d). In this case, the display interface of the electronic device 1500 returns to a page corresponding to the integrated editor (as shown in FIG. 15(e)). That is, the always on display interface, the lock screen interface, and the home screen of the electronic device 1500 are sequentially displayed. For example, the user may preview or further edit the always on display interface, the lock screen interface, and the home screen of the electronic device 1500 by sliding left or right on the display of the electronic device 1500. It can be learned from the page that the lock screen wallpaper and the home screen wallpaper of the electronic device 1500 are both modified to the cropped picture 1, and the wallpaper of the always on display interface adapted to the lock screen interface is also modified to the cropped picture 1. In addition, a pattern, a layout, or a display position of an interface element such as a clock is also adaptively adjusted.

In some embodiments, after the user taps the control 1501, a confirmation pop-up window may be displayed in the display interface of the electronic device 1500. The confirmation pop-up window is used to prompt the user to choose whether to apply the wallpaper to the lock screen or the home screen. The user may choose, by using the confirmation pop-up window, to apply the wallpaper to the lock screen interface, or may choose, by using the confirmation pop-up window, not to apply the wallpaper to the lock screen interface, and may choose, by using the confirmation pop-up window, to apply the wallpaper to the home screen, or may choose, by using the confirmation pop-up window, not to apply the wallpaper to the home screen. After the user completes selection and confirms the selection, the display interface of the electronic device 1500 is switched to an interface shown in FIG. 15(e).

In some implementations, after the user selects, in the integrated editor, the wallpaper that needs to be changed to, a pattern of an element such as an icon, a font, or always on display that matches the wallpaper may be calculated based on a smart aesthetic function of the electronic device according to a style attribute of the selected wallpaper. For example, when the user selects a picture of a cartoon style as a wallpaper, a clock font of the cartoon style may be matched from an element library, an icon of a hand-painted style is used, and always on display of a pixelated style is used.

In some other implementations, in a process of editing a lock screen layout by using the integrated editor, when a lock screen size, element content, or the like changes, an optimal layout solution may be automatically matched based on the smart aesthetic function of the electronic device. For example, when the user modifies a size of a clock title, a new clock title may be automatically placed in an appropriate position in the interface. When the user modifies a quantity of widgets, the widgets may be automatically placed in an appropriate position in the interface. When the electronic device is a foldable display, the screen is unfolded (or folded) in an editing process, and a screen size changes, content of a lock screen element may be automatically placed in an appropriate position on the screen in an unfolded (or folded) state. When the user needs to copy a theme from a mobile phone to another device (such as a watch, a tablet, or a PC) and a screen size changes, content of a lock screen element may be automatically placed in an appropriate position on a larger (or smaller) screen.

In embodiments of this application, after the user selects a wallpaper in the integrated editor, the selected wallpaper may be automatically cropped to appropriate image composition based on the smart aesthetic function of the electronic device, and interface elements such as a clock title and a widget are placed in an appropriate area of the image composition. In addition, image composition of a plurality of lock screen layouts may be combined based on different wallpaper content, placement restrictions of a clock title, a quantity of widgets, and the like, to satisfy rich personalized requirements of the user. In addition, when the size of the display changes, placement positions and display manners of the interface elements such as the clock title and the widget may be automatically adjusted.

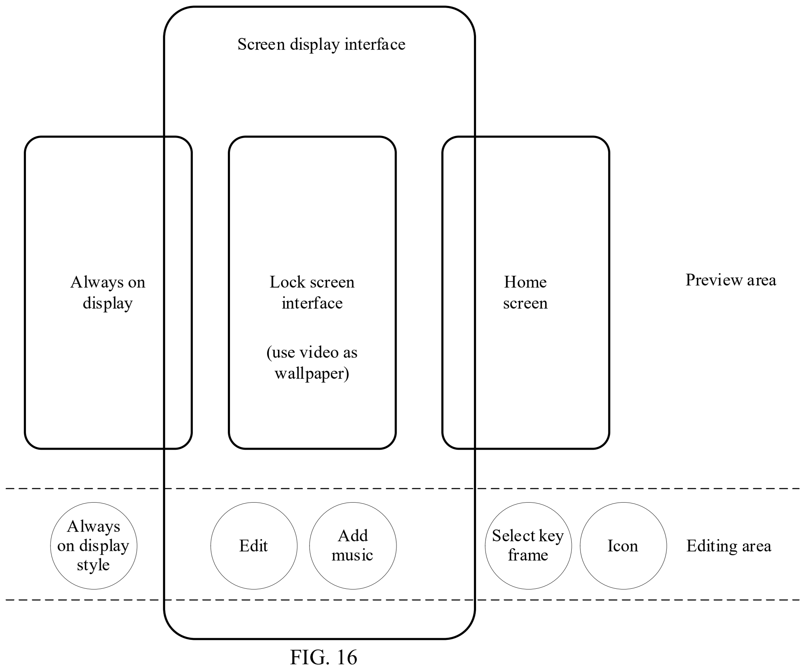

For example, FIG. 16 is a diagram of a structure of another integrated editor page according to an embodiment of this application, which may be alternatively described as a diagram of a structure of another page on which a plurality of interfaces of a same theme are edited in an integrated manner.

As shown in FIG. 16, the plurality of interfaces of the same theme are located in a same slidable gallery. The plurality of interfaces may include, for example, an always on display interface, a lock screen interface, and a home screen of an electronic device. The theme to which the plurality of interfaces belong is a video theme, that is, a lock screen wallpaper, a home screen wallpaper, or always on display is generated by using a video material. In this case, the always on display interface is associated with an editable option "Always on display style", the lock screen interface is associated with an editable option "Edit" and an editable option "Add music", and the home screen is associated with an editable option "Select key frame" and an editable option "Icon".

It may be further understood that the slidable gallery includes a preview area and an editing area. The preview area includes the plurality of interfaces of the same video theme, the editing area includes a plurality of editable options that are in one-to-one correspondence with the plurality of interfaces, and each of the plurality of interfaces corresponds to one or more editable options.

In this embodiment of this application, when the user edits the "Video theme", due to special attributes such as "Duration" and "Voice" of the video, functions of "Edit" and "Add music" may be added to single option editing corresponding to the interface.

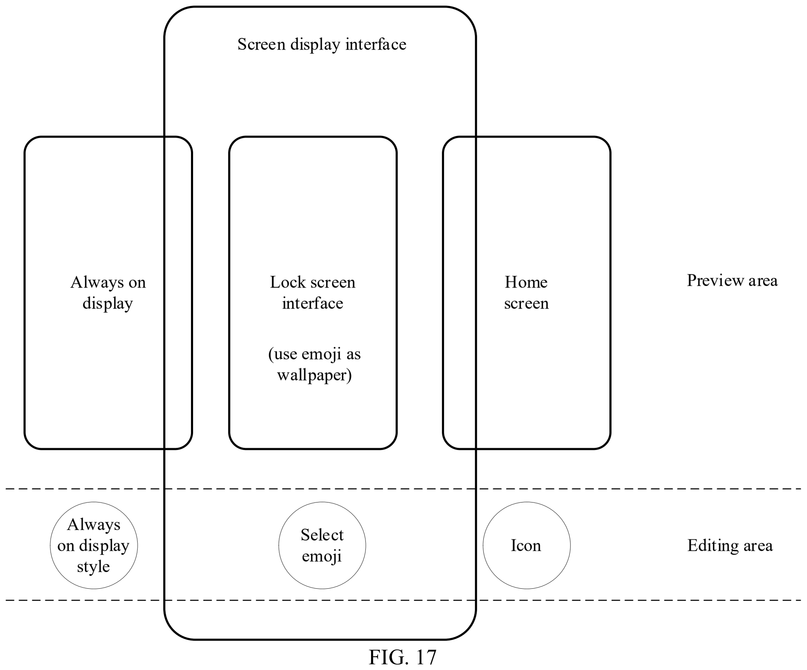

For example, FIG. 17 is a diagram of a structure of another integrated editor page according to an embodiment of this application, which may be alternatively described as a diagram of a structure of another page on which a plurality of interfaces of a same theme are edited in an integrated manner.

As shown in FIG. 17, the plurality of interfaces of the same theme are located in a same slidable gallery. The plurality of interfaces may include, for example, an always on display interface, a lock screen interface, and a home screen of an electronic device. The theme to which the plurality of interfaces belong is an emoji theme, that is, a lock screen wallpaper, a home screen wallpaper, or always on display is generated by using an emoji. In this case, the always on display interface is associated with an editable option "Always on display style", the lock screen interface is associated with an editable option "Select emoji", and the home screen is associated with an editable option "Icon".

It may be further understood that the slidable gallery includes a preview area and an editing area. The preview area includes the plurality of interfaces of the same emoji theme, the editing area includes a plurality of editable options that are in one-to-one correspondence with the plurality of interfaces, and each of the plurality of interfaces corresponds to one or more editable options.

In this embodiment of this application, when the user edits the "Emoji theme", because wallpaper content of the theme is generated from an emoji selected by the user, a function of "Select emoji" may be added to single option editing.

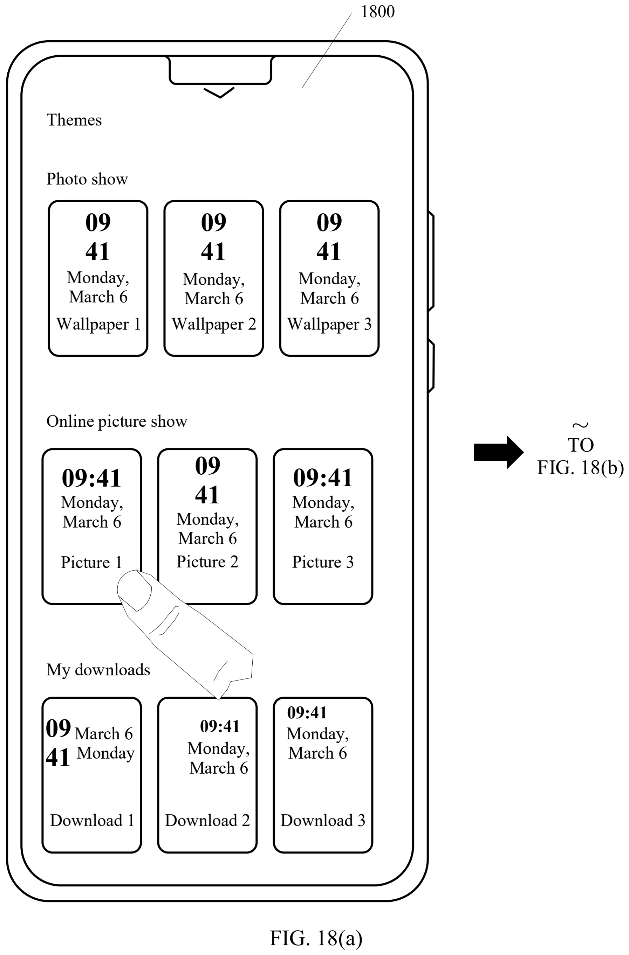

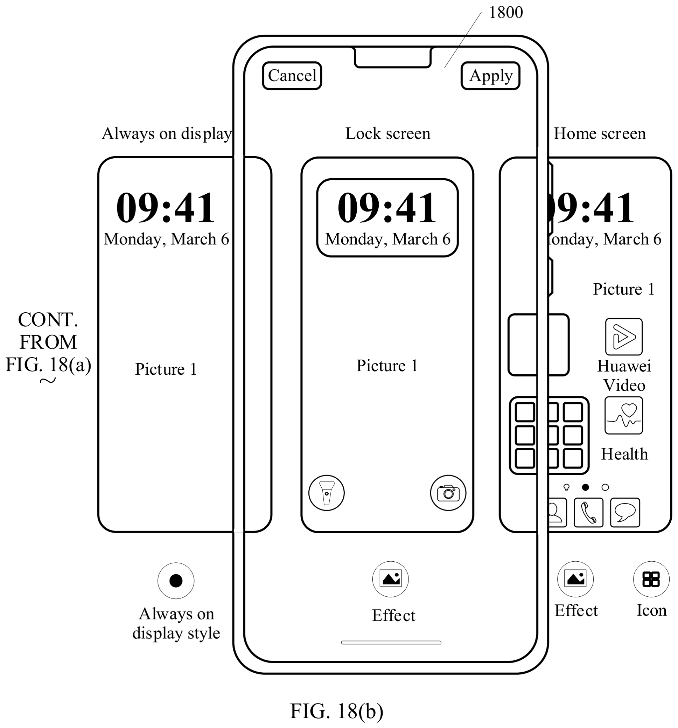

For example, FIG. 18(a) and FIG. 18(b) are a diagram of a structure of another integrated editor page according to an embodiment of this application, which may be alternatively described as a diagram of a structure of another page on which a plurality of interfaces of a same theme are edited in an integrated manner.

As shown in FIG. 18(a) and FIG. 18(b), a display interface of an electronic device 1800 displays a theme selection interface shown in FIG. 18(a). In the theme selection interface, a plurality of themes are displayed by category. The plurality of themes shown in the interface may be a plurality of themes that are not stored in the electronic device 1800, for example, may include a plurality of themes in a "Photo show" category, and may further include a plurality of themes in an "Online picture show" category. Wallpaper pictures corresponding to the plurality of themes in the "Online picture show" category are variable, for example, vary with the weather, or vary with the solar term, or vary with a picture of a same type or a similar type that is randomly pushed to the user through daily operation. A plurality of themes in a "My downloads" category may be further included. When the user wants to change a current theme of the electronic device 1800 to a theme corresponding to a picture 1 in the "Online picture show" category, the user may tap the picture 1 in the interface shown in FIG. 18(a), to trigger the display interface of the electronic device 1800 to be switched to a page on which a plurality of interfaces of the theme corresponding to the picture 1 are simultaneously edited, that is, trigger to enter an integrated editor. The plurality of interfaces (as shown in FIG. 18(b)) of the theme corresponding to the picture 1 are previewed or edited in the integrated editor. The plurality of interfaces may include, for example, an always on display interface of the electronic device 1800, a lock screen interface of the electronic device 1800, and a home screen of the electronic device 1800. The currently selected picture 1 belongs to the online picture shown, the picture 1 is a variable picture. Correspondingly, the always on display interface is associated with an editable option "Always on display style", and the lock screen interface is not associated with an editable option "Wallpaper", but is associated with an editable option "Effect", which is used to set an online picture show effect, for example, used to select a subscribed picture type. The home screen is associated with an editable option "Effect" and an editable option "Icon". It can be seen from the page that wallpapers of the always on display interface, the lock screen interface, and the home screen of the electronic device 1800 are all changed from the original wallpaper 1 to the online show picture 1. In addition, interface elements such as a clock pattern of the electronic device 1800 are also adaptively adjusted with the wallpaper change. For example, a clock layout is adjusted from a portrait layout to a landscape layout.

It should be understood that all interfaces of a same theme are not necessarily displayed on the display of the electronic device 1800 at the same time. Limited by display space of the electronic device 1800, only a part of interfaces in all the interfaces of the same theme can be displayed on the display, and the user may preview all the interfaces of the same theme by sliding left or right on the display. Alternatively, when display space of the electronic device 1800 is sufficient, all the interfaces of the same theme may be displayed on the display of the electronic device 1800 at the same time.

It can be learned from the embodiments shown in FIG. 16 to FIG. 18(a) and FIG. 18(b) that the "Integrated editor" provides a general editing interface framework. The editing interface framework includes a preview area and an editing area. The preview area may display a plurality of interfaces of a same theme in parallel, and the editing area may display editable options of corresponding interfaces. In different theme template types, different editable options may be supported based on special effects and attributes of themes.

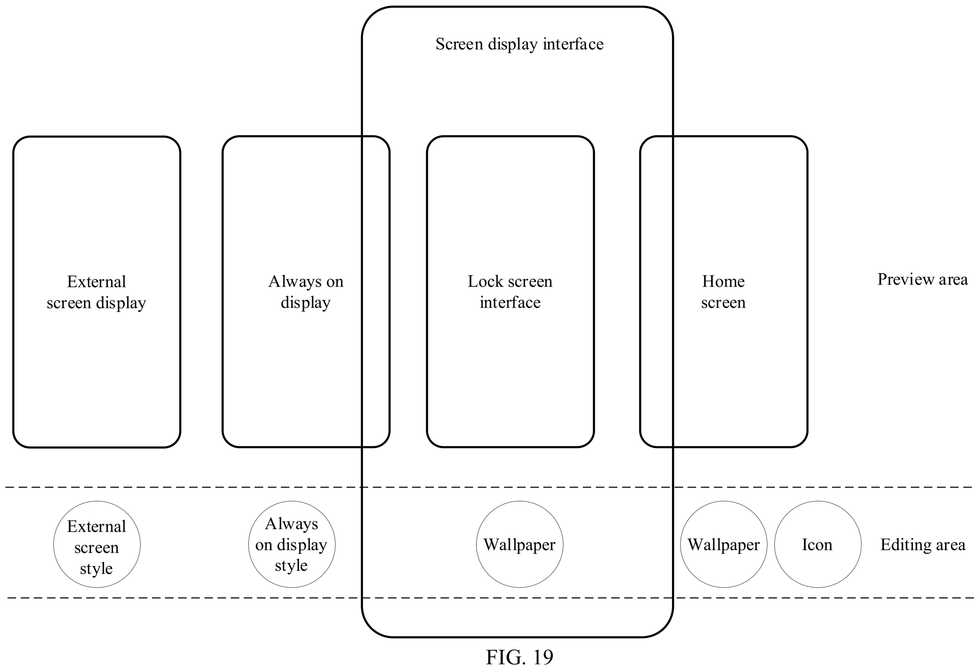

For example, FIG. 19 is a diagram of a structure of another page on which a plurality of interfaces are edited in an integrated manner according to an embodiment of this application. In this embodiment, an electronic device has an internal screen and an external screen. For example, the electronic device is a foldable display.

As shown in FIG. 19, a plurality of interfaces of a same theme are located in a same slidable gallery. For example, the plurality of interfaces may include an external screen display interface, an always on display interface, a lock screen interface, and a home screen of the electronic device. The external screen display interface is associated with an editable option "External screen style", the always on display interface is associated with an editable option "Always on display style", the lock screen interface is associated with an editable option "Wallpaper", and the home screen is associated with an editable option "Wallpaper" and an editable option "Icon".

In this embodiment of this application, when a user uses a foldable device with an external screen, in an integrated editor, in addition to an always on display interface, a lock screen interface, and a home screen, an "External screen display interface" may be further displayed on a preview page of a plurality of interfaces of a same theme, so that when the electronic device has a plurality of display screens, the user can still preview an effect of a theme set, thereby better completing editing and setting of the theme set.

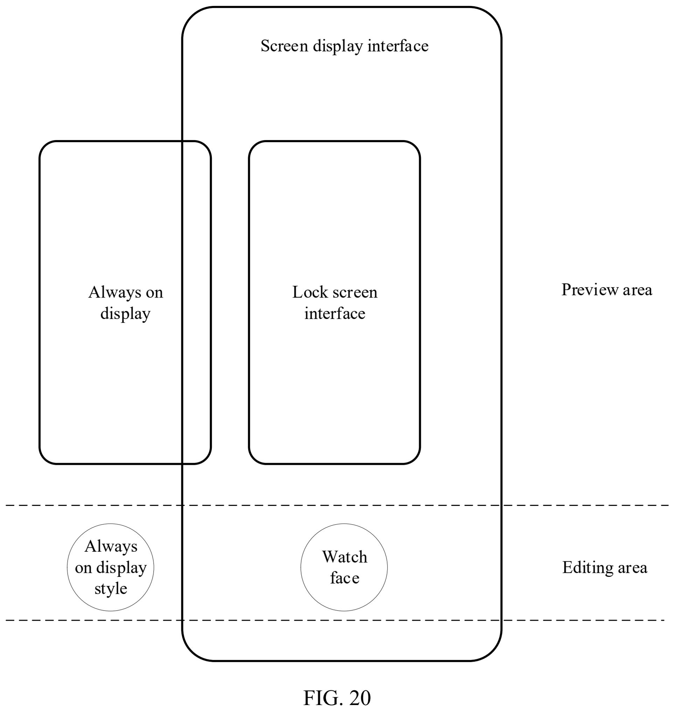

For example, the electronic device is a watch. FIG. 20 is a diagram of a structure of another page on which a plurality of interfaces are edited in an integrated manner according to an embodiment of this application.

As shown in FIG. 20, a plurality of interfaces of a same theme are located in a same slidable gallery. The plurality of interfaces may include, for example, an always on display interface and a lock screen interface of an electronic device. The always on display interface is associated with an editable option "Always on display style", and the lock screen interface is associated with an editable option "Watch face", which is used by a user to select a watch face style.

In some embodiments, an integrated editor page of the watch may be displayed on a screen of another electronic device (for example, a mobile phone or a tablet) interconnected to the watch, that is, a theme of the watch is edited by using the electronic device interconnected to the watch. The integrated editor page of the watch may be further displayed on a screen of the watch, and the watch edits the theme of the watch.

In some embodiments, when the watch face of the watch is a square, a shape of a preview image of a plurality of interfaces (for example, an always on display interface and a lock screen interface) on the integrated editor page of the watch displayed on the another electronic device interconnected to the watch is a square. Similarly, when the watch face of the watch is a circle, a shape of a preview image of a plurality of interfaces (for example, an always on display interface and a lock screen interface) on the integrated editor page of the watch displayed on the another electronic device interconnected to the watch is a circle.

In some embodiments, when the watch face of the watch is a square, a shape of a preview image of a plurality of interfaces (for example, an always on display interface and a lock screen interface) on the integrated editor page of the watch displayed on the watch is a square. Similarly, when the watch face of the watch is a circle, a shape of a preview image of a plurality of interfaces (for example, an always on display interface and a lock screen interface) on the integrated editor page of the watch displayed on the watch is a circle.

In other words, the shape of the preview image of the plurality of interfaces on the integrated editor page of the watch is the same as a shape of a display of the watch. Similarly, a shape of a preview image of a plurality of interfaces on an integrated editor page of a head unit device is the same as a shape of a display of the head unit device, and a shape of a preview image of a plurality of interfaces on an integrated editor page of another electronic device is the same as a shape of a display of the another device.

In embodiments of this application, when the user uses a watch device, and the watch device does not support a home screen function, an integrated editor may include only an always on display interface and a lock screen interface.

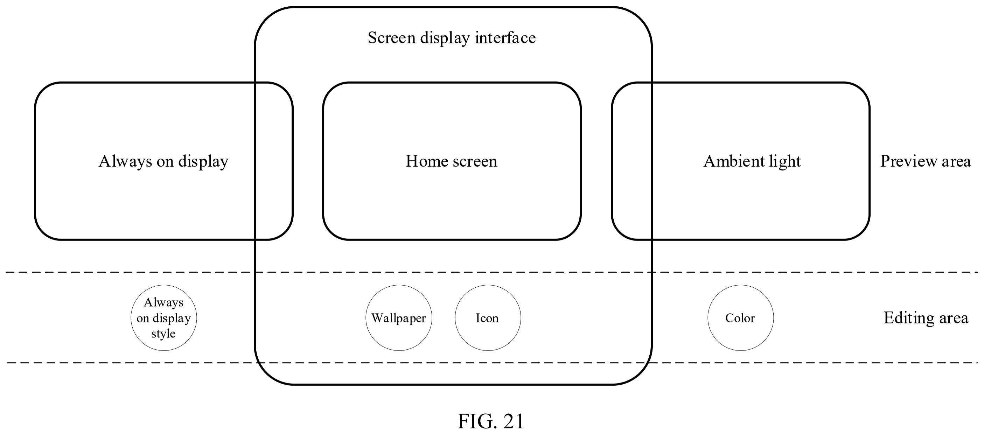

For example, the electronic device is a head unit device with an ambient light. FIG. 21 is a diagram of a structure of another page on which a plurality of interfaces are edited in an integrated manner according to an embodiment of this application.

As shown in FIG. 21, a plurality of interfaces of a same theme are located in a same slidable gallery. The plurality of interfaces may include, for example, an always on display interface, a home screen, and an ambient light of an electronic device. The always on display interface is associated with an editable option "Always on display style", the home screen is associated with an editable option "Wallpaper" and an editable option "Icon", and the ambient light is associated with an editable option "Color", which is used by a user to select a color of the ambient light.

In some embodiments, the ambient light may be further associated with editable options such as "Brightness" and "Saturation". This is not limited in this application.

In embodiments of this application, when the user uses the head unit device with the ambient light, because the head unit device does not support a lock screen function, in a corresponding integrated editor, there may be no lock screen interface in a plurality of interfaces of a same theme, and ambient light preview may be added. A combination of key interfaces "Always on display interface, home screen, and ambient light" is used to help the user complete setting of an overall theme atmosphere in both a digital device and real space.

In some embodiments, the ambient light preview interface may be alternatively replaced with another head unit setting interface, for example, a fragrance setting interface.

It can be learned from the embodiments shown in FIG. 19 to FIG. 21 that when a type of an electronic device is different, a plurality of corresponding preview interfaces of a same theme may also be different, and each of the plurality of interfaces may correspond to a different editable option.

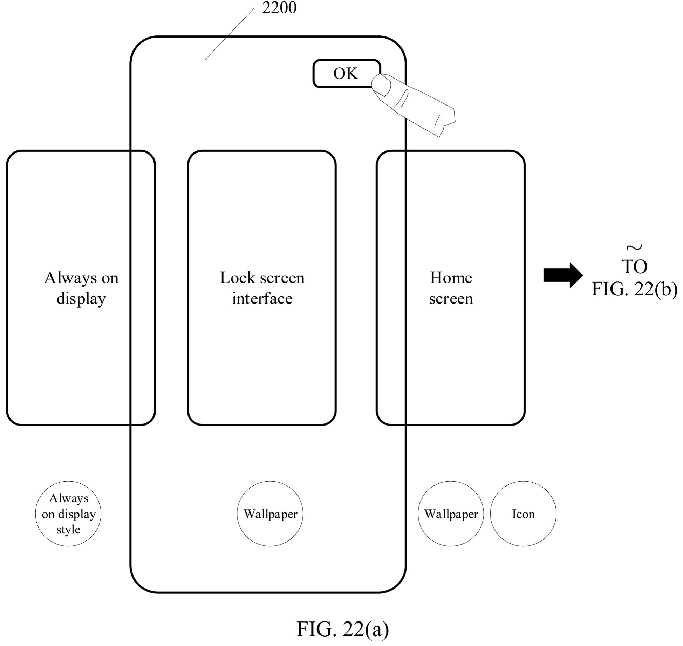

For example, FIG. 22(a) to FIG. 22(c) are a diagram of an interface for sharing a theme between devices according to an embodiment of this application. For example, the method is applicable to a theme sharing scenario between a mobile phone and a watch.

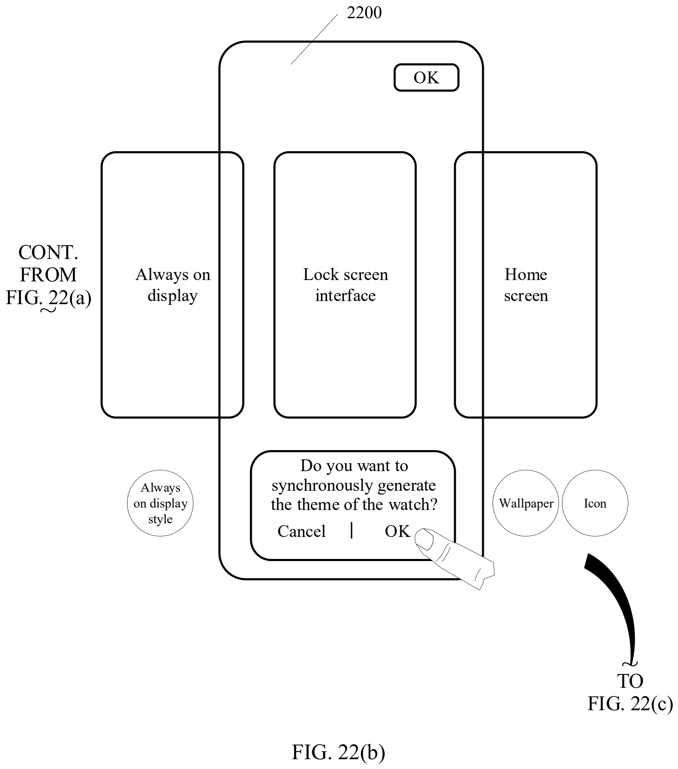

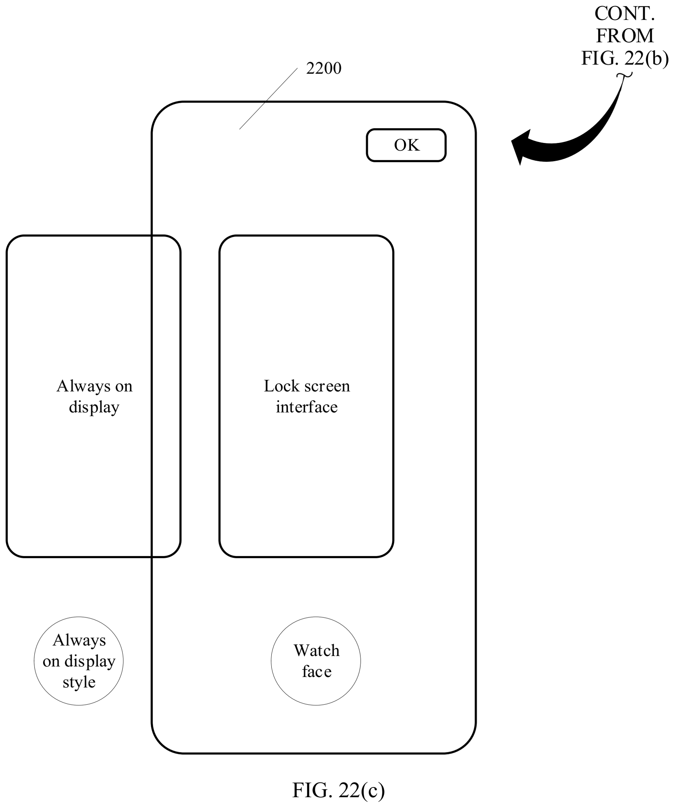

As shown in FIG. 22(a), an electronic device 2200 displays an integrated editor interface. In the interface, a user may simultaneously preview and adjust an always on display interface, a lock screen interface, and a home screen of an electronic device. When the user is satisfied with a current theme effect and wants to further apply the theme to the electronic device, the user may tap an "OK" control on the page. In this case, an interface shown in FIG. 22(b) is displayed on a display of the electronic device 2200. A pop-up window is displayed in the interface, and the pop-up window is used to remind the user whether to synchronously generate a watch theme. If the user selects "OK", an interface shown in FIG. 22(c) (which may also be understood as an integrated editing interface of a watch interconnected to the electronic device 2200) is displayed on the display of the electronic device 2200. In the interface, an always on display interface and a lock screen interface of the watch interconnected to the electronic device 2200 are displayed. The always on display interface is associated with an editable option "Always on display style". The lock screen interface is associated with an editable option "Watch face". The user may modify and preview an always on display style and a watch face pattern of the watch in the interface.

In some embodiments, if the user selects "OK", an integrated editing interface is displayed on a display of the watch interconnected to the electronic device 2200. An always on display interface and a lock screen interface of the watch are displayed in the interface. The always on display interface is associated with an editable option "Always on display style". The lock screen interface is associated with an editable option "Watch face". The user may modify and preview an always on display style and a watch face pattern of the watch in the interface.

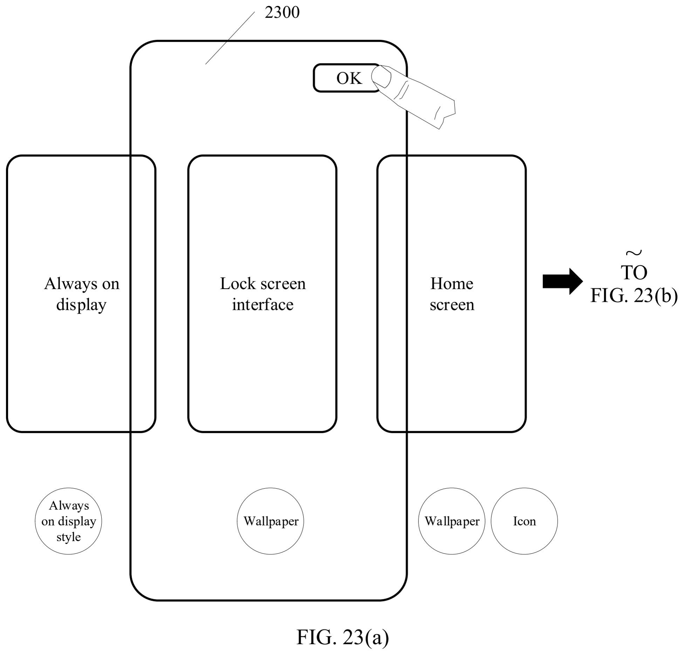

For example, FIG. 23(a) to FIG. 23(c) are a diagram of another interface for sharing a theme between devices according to an embodiment of this application. For example, the method is applicable to a theme sharing scenario between a mobile phone and a tablet.

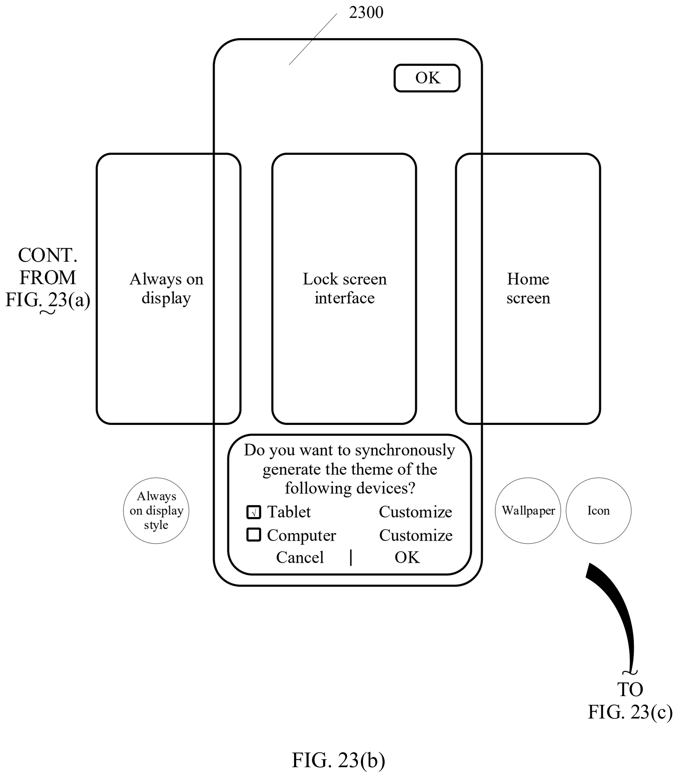

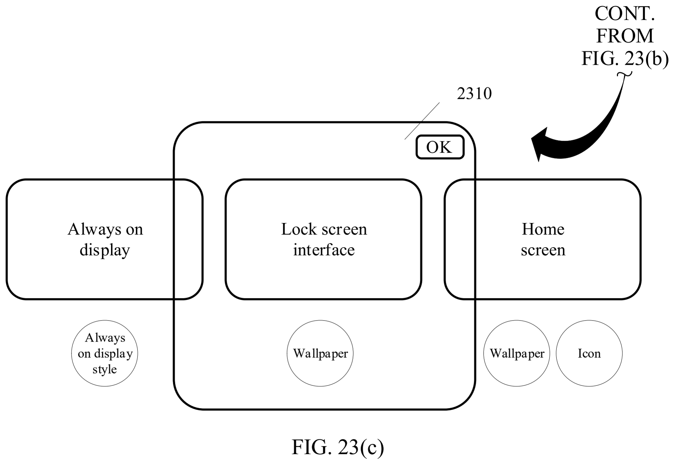

As shown in FIG. 23(a), an electronic device 2300 displays an integrated editor interface. In the interface, a user may simultaneously preview and adjust an always on display interface, a lock screen interface, and a home screen of an electronic device. When the user is satisfied with a current theme effect and wants to further apply the theme to the electronic device, the user may tap an "OK" control on the page. In this case, an interface shown in FIG. 23(b) is displayed on a display of the electronic device 2300. A pop-up window is displayed in the interface, and the pop-up window is used to remind the user whether to synchronously generate a theme of a device that has a connection relationship with the electronic device 2300 (for example, when a tablet 2310 and a computer are connected to the electronic device 2300, the pop-up window is used to remind the user whether to synchronously generate themes of the following devices, where the following devices include the tablet 2310 and the computer). If the user chooses to synchronize the theme to the tablet 2310, an interface shown in FIG. 23(c) is displayed on a display of the tablet 2300. An always on display interface, a lock screen interface, and a home screen of the tablet are displayed in the interface. The always on display interface is associated with an editable option "Always on display style", the lock screen interface is associated with an editable option "Wallpaper", and the home screen is associated with editable options "Wallpaper" and "Icon". The user may modify and preview the theme of the tablet in the interface.

In some embodiments, if the user selects "OK", an integrated editing interface is displayed on a display of the watch interconnected to the electronic device 2300. An always on display interface and a lock screen interface of the watch are displayed in the interface. The always on display interface is associated with an editable option "Always on display style". The lock screen interface is associated with an editable option "Watch face". The user may modify and preview an always on display style and a watch face pattern of the watch in the interface.

It can be learned from the embodiments shown in FIG. 22(a) to FIG. 22(c) and FIG. 23(a) to FIG. 23(c) that, after the electronic device completes editing the theme, the same theme may be simultaneously applied to a plurality of electronic devices, that is, the same theme can be shared on the plurality of electronic devices. In addition, an interface and an editable option that correspond to the shared theme are appropriately adjusted based on a type of an electronic device. In addition, the user may further edit and preview the theme based on the shared theme, to implement transfer and re-editing of the same theme between the plurality of electronic devices.

It should be understood that, in embodiments provided in embodiments of this application, to describe the solutions provided in this application more clearly, each interface in the integrated editor interface of the electronic device and an editable option corresponding to each interface are described by using specific examples. However, this does not constitute any limitation on the solutions provided in embodiments of this application. A quantity of interfaces included in the integrated editor, an interface type, and a quantity and types of editable options corresponding to the interface are not limited in this application.

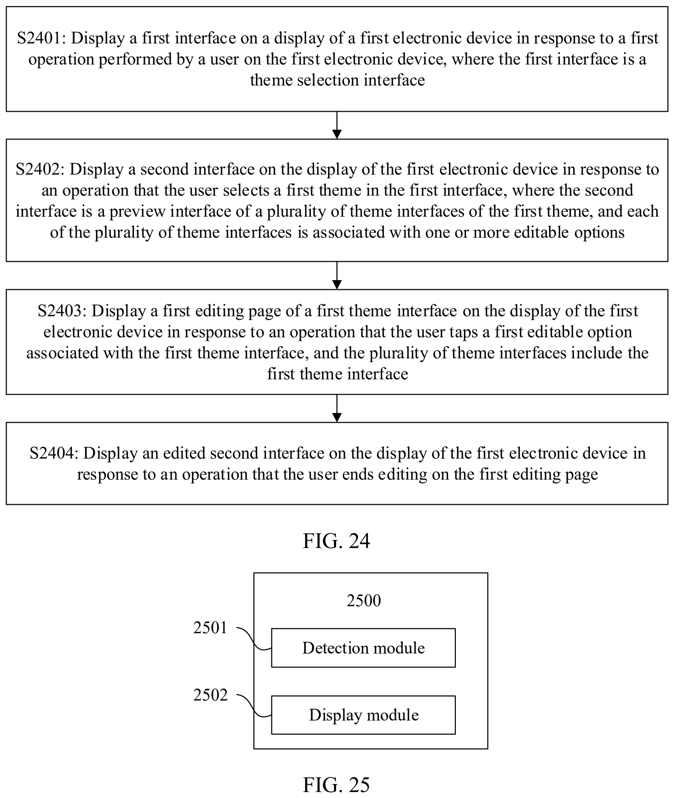

For example, FIG. 24 is a schematic flowchart of a theme editing method 2400 according to an embodiment of this application. As shown in FIG. 24, the method 2400 includes the following steps.

S2401: Display a first interface on a display of a first electronic device in response to a first operation performed by a user on the first electronic device, where the first interface is a theme selection interface.

In some embodiments, the first operation includes any one of the following operations: a double-finger pinch operation performed on a lock screen interface or a home screen of the first electronic device; a touch and hold operation performed on the lock screen interface or the home screen of the first electronic device; and a double-tap operation performed on the lock screen interface or the home screen of the first electronic device. Alternatively, the first operation may be another operation, for example, an operation preset by the user. This is not limited in this application.

In some embodiments, the theme selection interface includes one or more recommended themes, the one or more recommended themes are in one-to-one correspondence with one or more photos in a gallery of the first electronic device, and the one or more recommended themes may be, for example, themes in a "Suggested photos" category shown in FIG. 14(c).

In some embodiments, the theme selection interface includes one or more online picture themes, and the one or more online picture themes may be, for example, themes in an "Online picture show" category shown in FIG. 18(a).

It should be understood that the theme selection interface may alternatively include themes in another category, for example, a theme stored in a local device, an animation series theme, and a portrait series theme. This is not limited in this application. For a specific example, refer to the descriptions of FIG. 8(b), the descriptions of FIG. 14(c), and the descriptions of FIG. 18(a).

S2402: Display a second interface on the display of the first electronic device in response to an operation that the user selects a first theme in the first interface, where the second interface is a preview interface of a plurality of theme interfaces of the first theme, and each of the plurality of theme interfaces is associated with one or more editable options.

In some embodiments, the plurality of theme interfaces of the first theme are arranged in the second interface in sequence. In addition, because display space of the first electronic device is limited, only a part of the second interface may be displayed on the display of the first electronic device, and the user needs to slide left or right to view the entire second interface.

In some embodiments, the second interface may include a preview area and an editing area. The preview area includes the plurality of theme interfaces of the first theme, the editing area includes a plurality of editable options that are in one-to-one correspondence with the plurality of theme interfaces, and each of the plurality of interfaces corresponds to one or more editable options.

S2403: Display a first editing page of a first theme interface on the display of the first electronic device in response to an operation that the user taps a first editable option associated with the first theme interface, where the first editing page is an editing page corresponding to the first editable option, and the plurality of theme interfaces include the first theme interface.

S2404: Display an edited second interface on the display of the first electronic device in response to an operation that the user ends editing on the first editing page.

In some embodiments, the first electronic device may be, for example, a mobile phone or a tablet. The second interface includes preview interfaces of an always on display interface of the first electronic device, a lock screen interface of the first electronic device, and a home screen of the first electronic device. The always on display interface of the first electronic device is associated with a second editable option, the second editable option is used by the user to edit an always on display style of the first electronic device, the lock screen interface of the first electronic device is associated with a third editable option, the third editable option is used by the user to edit a lock screen wallpaper of the first electronic device, the home screen of the first electronic device is associated with a fourth editable option and a fifth editable option, the fourth editable option is used by the user to edit a home screen wallpaper of the first electronic device, and the fifth editable option is used by the user to edit an icon on the first electronic device.

In an example, current always on display of the first electronic device corresponds to a first always on display pattern. In response to an operation that the user taps the second editable option, an always on display pattern selection interface is displayed on the display of the first electronic device, where one or more always on display patterns that can be selected are displayed in the always on display pattern selection interface. For example, refer to the embodiment shown in FIG. 12(a) to FIG. 12(c). In response to an operation that the user selects a second always on display pattern in the always on display pattern selection interface, an updated second interface is displayed on the display of the first electronic device. In the updated second interface, the always on display of the first electronic device corresponds to the second always on display pattern. In other words, after the always on display pattern selection interface is entered from the second interface, an always on display pattern of the first electronic device may be modified, and after the always on display pattern of the first electronic device is modified, a display interface of the first electronic device returns to a display interface of the second interface. In this case, the modification made to the always on display pattern of the first electronic device is reflected in the second interface, and the user can preview a matching effect of the modified always on display pattern with respect to an overall theme.

In another example, a current lock screen wallpaper of the first electronic device is a first wallpaper. In response to an operation that the user taps the third editable option, a wallpaper selection interface is displayed on the display of the first electronic device, where one or more wallpapers that can be selected are displayed in the wallpaper selection interface. For example, refer to the embodiment shown in FIG. 8(a) to FIG. 8(e). In response to an operation that the user selects a second wallpaper in the wallpaper selection interface, an updated second interface is displayed on the display of the first electronic device. In the updated second interface, a lock screen wallpaper of the first electronic device is the second wallpaper. In other words, after the wallpaper selection interface is entered from the second interface, the lock screen wallpaper of the first electronic device may be modified, and after the lock screen wallpaper of the first electronic device is modified, a display interface of the first electronic device returns to a display interface of the second interface. In this case, the modification made to the lock screen wallpaper of the first electronic device is reflected in the second interface, and the user can preview a matching effect of the modified lock screen wallpaper with respect to an overall theme. In the updated second interface, a home screen wallpaper of the first electronic device may be synchronously modified to the second wallpaper, and always on display of the first electronic device may also be synchronously modified to always on display corresponding to the second wallpaper.

In another example, a clock displayed in the lock screen interface of the first electronic device may be edited, for example, a pattern, a font, and a layout of the clock may be edited, by performing an operation of tapping a clock display area of the lock screen interface in the second interface.

In another example, a current home screen wallpaper of the first electronic device is a second wallpaper. In response to an operation that the user taps the fourth editable option, a wallpaper selection interface is displayed on the display of the first electronic device, where one or more wallpapers that can be selected are displayed in the wallpaper selection interface. In response to an operation that the user selects a third wallpaper in the wallpaper selection interface, an updated second interface is displayed on the display of the first electronic device. In the updated second interface, a home screen wallpaper of the first electronic device is the third wallpaper. In other words, after the wallpaper selection interface is entered from the second interface, the home screen wallpaper of the first electronic device may be modified, and after the home screen wallpaper of the first electronic device is modified, a display interface of the first electronic device returns to a display interface of the second interface. In this case, the modification made to the home screen wallpaper of the first electronic device is reflected in the second interface, and the user can preview a matching effect of the modified home screen wallpaper with respect to an overall theme. In the updated second interface, a lock screen wallpaper of the first electronic device may be synchronously modified to the third wallpaper, and always on display of the first electronic device may also be synchronously modified to always on display corresponding to the third wallpaper.

In another example, in response to an operation that the user taps the fifth editable option, an icon setting interface is displayed on the display of the first electronic device. For example, for the icon setting interface, refer to the interface shown in FIG. 13(b). In the interface, a layout, a pattern, and the like of an icon may be set. In response to an operation that the user performs first icon setting in the icon setting interface, an updated second interface is displayed on the display of the first electronic device. In the updated second interface, an icon on the first electronic device is an icon obtained through the first icon setting.

In some other embodiments, when a first video is used as a wallpaper on the first electronic device (that is, when the user selects a video theme in the theme selection interface), the second interface of the first electronic device includes preview interfaces of an always on display interface of the first electronic device, a lock screen interface of the first electronic device, and a home screen of the first electronic device. The always on display interface of the first electronic device is associated with a second editable option, the second editable option is used by the user to edit an always on display style of the first electronic device, the lock screen interface of the first electronic device is associated with a third editable option and a fourth editable option, the third editable option is used by the user to edit the first video, the fourth editable option is used by the user to add music to the first video, the home screen of the first electronic device is associated with a fifth editable option and a sixth editable option, the fifth editable option is used by the user to select, from the first video, an image frame as a home screen wallpaper, and the sixth editable option is used by the user to edit an icon on the first electronic device.

In some other embodiments, when an emoji is used as a wallpaper on the first electronic device (that is, when the user selects an emoji theme in the theme selection interface), the second interface includes preview interfaces of an always on display interface of the first electronic device, a lock screen interface of the first electronic device, and a home screen of the first electronic device. The always on display interface of the first electronic device is associated with a second editable option, the second editable option is used by the user to edit an always on display style of the first electronic device, the lock screen interface of the first electronic device is associated with a third editable option, the third editable option is used by the user to select an emoji, the home screen of the first electronic device is associated with a fourth editable option, and the fourth editable option is used by the user to edit an icon on the first electronic device.

In some other embodiments, when an online picture theme is used on the first electronic device (that is, when the user selects the online picture theme in the theme selection interface). The second interface includes preview interfaces of an always on display interface of the first electronic device, a lock screen interface of the first electronic device, and a home screen of the first electronic device. The always on display interface of the first electronic device is associated with a second editable option, the second editable option is used by the user to edit an always on display style of the first electronic device, the lock screen interface of the first electronic device is associated with a third editable option, the third editable option is used by the user to set a display pattern of a lock screen wallpaper, the home screen of the first electronic device is associated with a fourth editable option and a fifth editable option, the fourth editable option is used by the user to set a display pattern of a home screen wallpaper, and the fifth editable option is used by the user to edit an icon on the first electronic device.

In some other embodiments, when the first electronic device has an internal screen and an external screen (for example, the first electronic device is a foldable display), the second interface may further include an external screen display interface of the first electronic device, and the external screen display interface is associated with an editable option used to edit an external screen style.

In some embodiments, the first electronic device may be, for example, a watch. The second interface includes preview interfaces of an always on display interface of the first electronic device and a lock screen interface of the first electronic device. The always on display interface of the first electronic device is associated with a second editable option, the second editable option is used by the user to edit an always on display style of the first electronic device, the lock screen interface of the first electronic device is associated with a third editable option, and the third editable option is used by the user to set a watch face pattern of the first electronic device.

In some embodiments, the first electronic device may be, for example, a head unit device. The second interface includes preview interfaces of an always on display interface of the first electronic device, a home screen of the first electronic device, and an ambient light of the first electronic device. The always on display interface of the first electronic device is associated with a second editable option, the second editable option is used by the user to edit an always on display style of the first electronic device, the home screen of the first electronic device is associated with a third editable option, the third editable option is used by the user to edit a home screen wallpaper of the first electronic device, a fourth editable option on the first electronic device is used by the user to edit an icon on the first electronic device, the ambient light of the first electronic device is associated with a fifth editable option, and the fifth editable option is used by the user to set a display effect of the ambient light, for example, set a color, brightness, and a blinking frequency of the ambient light.

For example, FIG. 25 is a schematic flowchart of a theme editing apparatus 2500 according to an embodiment of this application. As shown in FIG. 25, the apparatus 2500 includes the following modules.

A detection module 2501 is configured to detect a first operation performed by a user on a first electronic device.

In some embodiments, the first operation includes any one of the following operations: a double-finger pinch operation performed on a lock screen interface or a home screen of the first electronic device; a touch and hold operation performed on the lock screen interface or the home screen of the first electronic device; and a double-tap operation performed on the lock screen interface or the home screen of the first electronic device. Alternatively, the first operation may be another operation, for example, an operation preset by the user. This is not limited in this application.

A display module 2502 is configured to display a first interface on a display of the first electronic device when the first operation performed by the user on the first electronic device is detected, where the first interface is a theme selection interface.

In some embodiments, the theme selection interface includes one or more recommended themes, the one or more recommended themes are in one-to-one correspondence with one or more photos in a gallery of the first electronic device, and the one or more recommended themes may be, for example, themes in a "Suggested photos" category shown in FIG. 14(c).

In some embodiments, the theme selection interface includes one or more online picture themes, and the one or more online picture themes may be, for example, themes in an "Online picture show" category shown in FIG. 18(a).

It should be understood that the theme selection interface may alternatively include themes in another category, for example, a theme stored in a local device, an animation series theme, and a portrait series theme. This is not limited in this application. For a specific example, refer to the descriptions of FIG. 8(b), the descriptions of FIG. 14(c), and the descriptions of FIG. 18(a).

The detection module 2501 is further configured to detect an operation that the user selects a first theme in the first interface.

The display module 2502 is further configured to display a second interface on the display of the first electronic device when the operation that the user selects the first theme in the first interface is detected, where the second interface is a preview interface of a plurality of theme interfaces of the first theme, and each of the plurality of theme interfaces is associated with one or more editable options.

In some embodiments, the plurality of theme interfaces of the first theme are arranged in the second interface in sequence. In addition, because display space of the first electronic device is limited, only a part of the second interface may be displayed on the display of the first electronic device, and the user needs to slide left or right to view the entire second interface.

In some embodiments, the second interface may include a preview area and an editing area. The preview area includes the plurality of theme interfaces of the first theme, the editing area includes a plurality of editable options that are in one-to-one correspondence with the plurality of theme interfaces, and each of the plurality of interfaces corresponds to one or more editable options.

The display module 2502 is further configured to display a first editing page of a first theme interface on the display of the first electronic device in response to an operation that the user taps a first editable option associated with the first theme interface, where the first editing page is an editing page corresponding to the first editable option, and the plurality of theme interfaces include the first theme interface.

The display module 2502 is further configured to display an edited second interface on the display of the first electronic device in response to an operation that the user ends editing on the first editing page.

One or more of the modules or units described in this specification may be implemented by software, hardware, or a combination thereof. When any one of the foregoing modules or units is implemented by using software, the software exists in a form of computer program instructions, and is stored in the memory. The processor may be configured to execute the program instructions and implement the foregoing method procedure. The processor may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform an operation or processing. The processor may be built in a SoC (system on chip) or an application-specific integrated circuit (application-specific integrated circuit, ASIC), or may be an independent semiconductor chip. In addition to the core configured to perform operation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the modules or units described in this specification are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or may not depend on software to perform the foregoing method procedure.

When the modules or units described in this specification are implemented by using software, all or some of the modules or units may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through a part of interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

When the function is implemented in a form of a software functional unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A theme editing method, wherein the method comprises:
displaying a first interface on a display of a first electronic device in response to a first operation performed by a user on the first electronic device, wherein the first interface is a theme selection interface; and
displaying a second interface on the display of the first electronic device in response to an operation that the user selects a first theme in the first interface, wherein the second interface is a preview interface of a plurality of theme interfaces of the first theme, each of the plurality of theme interfaces is associated with one or more editable options, and the editable option is used to edit a theme interface associated with the editable option.

2. The method according to claim 1, wherein the method further comprises:
displaying a first editing page of a first theme interface on the display of the first electronic device in response to an operation performed by the user on a first editable option associated with the first theme interface, wherein the first editing page is an editing page corresponding to the first editable option, and the plurality of theme interfaces comprise the first theme interface; and
displaying an updated second interface on the display of the first electronic device in response to an operation that the user ends editing on the first editing page.

3. The method according to claim 2, wherein the method further comprises:
displaying a second editing page of a second theme interface on the display of the first electronic device in response to an operation performed by the user on a second editable option associated with the second theme interface, wherein the second editing page is an editing page corresponding to the second editable option, and the plurality of theme interfaces comprise the second theme interface; and
displaying an updated second interface on the display of the first electronic device in response to an operation that the user ends editing on the second editing page.

4. The method according to claim 2 or 3, wherein the second interface comprises a complete control, and the method further comprises:
applying an updated first theme to the first electronic device in response to an operation that the user taps the complete control, wherein a plurality of theme interfaces of the updated first theme are in one-to-one correspondence with a plurality of theme interfaces displayed in the updated second interface.

5. The method according to any one of claims 1 to 4, wherein the preview interface of the plurality of theme interfaces comprises a preview interface of an always on display interface of the first electronic device, a preview interface of a lock screen interface of the first electronic device, and a preview interface of a home screen of the first electronic device.

6. The method according to claim 5, wherein the always on display interface is associated with a third editable option, the third editable option is used by the user to edit an always on display style of the first electronic device, the lock screen interface is associated with a fourth editable option, the fourth editable option is used by the user to edit a lock screen wallpaper of the first electronic device, the home screen is associated with a fifth editable option and a sixth editable option, the fifth editable option is used by the user to edit a home screen wallpaper of the first electronic device, and the sixth editable option is used by the user to edit an icon on the first electronic device.

7. The method according to claim 6, wherein always on display of the first electronic device corresponds to a first always on display pattern, and the method further comprises:
displaying an always on display pattern selection interface on the display of the first electronic device in response to an operation performed by the user on the third editable option; and
displaying an updated second interface on the display of the first electronic device in response to an operation that the user selects a second always on display pattern in the always on display pattern selection interface, wherein in the updated second interface, the always on display of the first electronic device corresponds to the second always on display pattern.

8. The method according to claim 6 or 7, wherein the lock screen wallpaper of the first electronic device is a first wallpaper, and the method further comprises:
displaying a wallpaper selection interface on the display of the first electronic device in response to an operation performed by the user on the fourth editable option; and
displaying an updated second interface on the display of the first electronic device in response to an operation that the user selects a second wallpaper in the wallpaper selection interface, wherein in the updated second interface, the lock screen wallpaper of the first electronic device is the second wallpaper.

9. The method according to claim 8, wherein in the updated second interface, the home screen wallpaper of the first electronic device is synchronized to the second wallpaper, and the always on display of the first electronic device is synchronized to the second wallpaper.

10. The method according to any one of claims 6 to 9, wherein the method further comprises:
editing, by performing an operation of tapping a clock display area of the lock screen interface in the second interface, a clock displayed in the lock screen interface of the first electronic device.

11. The method according to any one of claims 6 to 10, wherein the home screen wallpaper of the first electronic device is the second wallpaper, and the method further comprises:
displaying a wallpaper selection interface on the display of the first electronic device in response to an operation performed by the user on the fifth editable option; and
displaying an updated second interface on the display of the first electronic device in response to an operation that the user selects a third wallpaper in the wallpaper selection interface, wherein in the updated second interface, the home screen wallpaper of the first electronic device is the third wallpaper.

12. The method according to claim 11, wherein in the updated second interface, the lock screen wallpaper of the first electronic device is synchronized to the third wallpaper, and the always on display of the first electronic device is synchronized to the third wallpaper.

13. The method according to any one of claims 6 to 12, wherein the method further comprises:
displaying an icon setting interface on the display of the first electronic device in response to an operation performed by the user on the sixth editable option; and
displaying an updated second interface on the display of the first electronic device in response to an operation that the user performs first icon setting in the icon setting interface, wherein in the updated second interface, the icon on the first electronic device is an icon obtained through the first icon setting.

14. The method according to any one of claims 1 to 13, wherein the theme selection interface comprises one or more recommended themes, and the one or more recommended themes are in one-to-one correspondence with one or more photos in a gallery of the first electronic device.

15. The method according to claim 5, wherein when a first video is used as a wallpaper on the first electronic device, the always on display interface is associated with a third editable option, the third editable option is used by the user to edit an always on display style of the first electronic device, the lock screen interface is associated with a fourth editable option and a fifth editable option, the fourth editable option is used by the user to edit the first video, the fifth editable option is used by the user to add music to the first video, the home screen is associated with a sixth editable option and a seventh editable option, the sixth editable option is used by the user to select, from the first video, an image frame as a home screen wallpaper, and the seventh editable option is used by the user to edit an icon on the first electronic device.

16. The method according to claim 5, wherein when an emoji is used as a wallpaper on the first electronic device, the always on display interface is associated with a third editable option, the third editable option is used by the user to edit an always on display style of the first electronic device, the lock screen interface is associated with a fourth editable option, the fourth editable option is used by the user to select an emoji, the home screen is associated with a fifth editable option, and the fifth editable option is used by the user to edit an icon on the first electronic device.

17. The method according to claim 5, wherein the theme selection interface comprises one or more online picture themes, and when an online picture theme is used on the first electronic device, the always on display interface is associated with a third editable option, the third editable option is used by the user to edit an always on display style of the first electronic device, the lock screen interface is associated with a fourth editable option, the fourth editable option is used by the user to set a display pattern of a lock screen wallpaper, the home screen is associated with a fifth editable option and a sixth editable option, the fifth editable option is used by the user to set a display pattern of a home screen wallpaper, and the sixth editable option is used by the user to edit an icon on the first electronic device.

18. The method according to any one of claims 5 to 17, wherein the preview interface of the plurality of theme interfaces further comprises an external screen display interface of the first electronic device, and the external screen display interface is associated with an editable option used to edit an external screen style.

19. The method according to claim 18, wherein the first electronic device is a foldable device.

20. The method according to any one of claims 1 to 4, wherein the first electronic device is a watch, the preview interface of the plurality of theme interfaces comprises an always on display interface of the first electronic device and a lock screen interface of the first electronic device, the always on display interface is associated with a third editable option, the third editable option is used by the user to edit an always on display style of the first electronic device, the lock screen interface is associated with a fourth editable option, and the fourth editable option is used by the user to set a watch face pattern of the first electronic device.

21. The method according to any one of claims 1 to 4, wherein the first electronic device is a head unit device, the preview interface of the plurality of theme interfaces comprises a preview interface of an always on display interface of the first electronic device, a preview interface of a home screen of the first electronic device, and a preview interface of an ambient light of the first electronic device, the always on display interface is associated with a third editable option, the third editable option is used by the user to edit an always on display style of the first electronic device, the home screen is associated with a fourth editable option and a fifth editable option, the fourth editable option is used by the user to edit a home screen wallpaper of the first electronic device, the fifth editable option is used by the user to edit an icon on the first electronic device, the ambient light is associated with a sixth editable option, and the sixth editable option is used by the user to set a display effect of the ambient light.

22. The method according to any one of claims 1 to 21, wherein the method further comprises:
displaying a second pop-up window on the display of the first electronic device in response to an operation that the user ends preview in the second interface, wherein the second pop-up window is used to remind the user whether to synchronize a current theme to a second electronic device, and the second electronic device is interconnected with the first electronic device; and
synchronizing the current theme to the second electronic device in response to an operation that the user confirms synchronization of the current theme to the second electronic device, so that a second interface corresponding to the second electronic device is displayed on a screen of the second electronic device.

23. The method according to any one of claims 1 to 22, wherein the first operation comprises any one of the following operations:
a double-finger pinch operation performed on the lock screen interface or the home screen of the first electronic device;
a touch and hold operation performed on the lock screen interface or the home screen of the first electronic device; and
a double-tap operation performed on the lock screen interface or the home screen of the first electronic device.

24. An electronic device, comprising:
one or more processors;
one or more memories; and
one or more computer programs, wherein the one or more computer programs are stored in the one or more memories, the one or more computer programs comprise instructions, and when the instructions are executed by the one or more processors, the electronic device is enabled to perform the method according to any one of claims 1 to 23.

25. A computer-readable storage medium, wherein the storage medium stores a program or instructions, and when the program or the instructions are run, the method according to any one of claims 1 to 23 is implemented.

26. A chip, wherein the chip stores instructions, and when the instructions are run, the method according to any one of claims 1 to 23 is implemented.

27. A computer program product, wherein the computer program product stores a program or instructions, and when the program or the instructions are run, the method according to any one of claims 1 to 23 is implemented.
